# EUROPEAN PATENT APPLICATION

(11) **EP 1 612 794 A1**
(43) Date of publication of application: **04.01.2006**
(21) Application number: 04725484.2
(22) Date of filing: 02.04.2004
(51) Int. Cl.: G11B 27/02, G11B 27/00, H04N 5/91

(54) **VIDEO EDITOR AND EDITING METHOD, RECORDING MEDIUM, AND PROGRAM**

(30) Priority: 04.04.2003 JP 2003102204
(71) Applicant: SONY CORPORATION, Tokyo 141 (JP)
(72) Inventor: ABE, Fumiyoshi, c/o Sony Corporation, Shinagawa-ku, Tokyo 141-0001 (JP); SHINKAI, Mitsutoshi, c/o Sony Corporation, Shinagawa-ku, Tokyo 141-0001 (JP); MORIYA, Takuji, c/o Sony Corporation, Shinagawa-ku, Tokyo 141-0001 (JP); KIMURA, Ken, c/o Sony Corporation, Shinagawa-ku, Tokyo 141-0001 (JP); JOBO, Kiri, c/o Sony Corporation, Shinagawa-ku, Tokyo 141-0001 (JP)
(74) Representative: Thévenet, Jean-Bruno
(86) International application number: PCT/JP2004/004867
(87) International publication number: WO 2004/090897

(57) **Abstract**

An object of the present invention is to perform speedy editing to produce images including desired features. A disc video monitor program 161 sets an essence mark, which is digital mark data indicating a feature of an image, in metadata related to video content data for displaying images. A video display program 172 controls the display of images based on the video content data. An essence-mark display program 171 controls the display of the temporal position of the image having the feature indicated by the digital mark data based on the metadata in which the essence mark, which is digital mark data, is set. The video-image editing apparatus of the present invention is applicable to a filming terminal device.

## Description

### Technical Field

The present invention relates to video-image editing apparatuses and methods, recording media, and programs. More particularly, the invention relates to a video-image editing apparatus and method, a recording medium, and a program in which video content data is managed and video images are edited.

### Background Art

A technique for recording video images in, for example, a hard disk and for editing the recorded video images, a so-called "nonlinear editing" technique, is becoming widely used.

In the International Publication No. 98/29873 pamphlet, the following editing system is disclosed. Under computer control, a recording operation and a playback operation performed by first and second recording/playback means provided for a recording/playback apparatus are controlled to record video data recorded in one recording/playback means in the other recording/playback means, and instruction information is input via user interface means of the computer. Then, source video data recorded in a second recording medium provided from an external source can easily be dubbed onto a first recording medium as an editing material. Also, video data of a final video program generated as a result of editing can easily be dubbed from the first recording medium onto the second recording medium, which is used during broadcasting. Thus, dubbing of editing materials and final video programs can efficiently be performed.

However, it is impossible for a video editor to understand the features of video images unless the images are played back and displayed. To edit video images to produce images with desired features, images must be repeatedly played back. Video image editing is thus time-consuming.

### Disclosure of Invention

In view of this background, it is an object of the present invention to speedily edit video images to produce images with desired features.

A video-image editing apparatus of the present invention includes: mark setting means for setting, in metadata related to video content data for displaying an image including sound, digital mark data indicating a feature of the image; video display control means for controlling the display of the image based on the video content data; and digital-mark display control means for controlling the display of at least one of the temporal position of the image having the feature indicated by the digital mark data and the feature of the image based on the metadata in which the digital mark data is set.

The video-image editing apparatus may further include configuration-table display control means for controlling the display of a configuration table based on configuration table data related to the video content data.

A video-image editing method of the present invention includes: a mark setting step of setting, in metadata related to video content data for displaying an image including sound, digital mark data indicating a feature of the image; a video display control step of controlling the display of the image based on the video content data; and a digital-mark display control step of controlling the display of at least one of the temporal position of the image having the feature indicated by the digital mark data and the feature of the image based on the metadata in which the digital mark data is set.

A program in a recording medium of the present invention allows a computer to execute: a mark setting step of setting, in metadata related to video content data for displaying an image including sound, digital mark data indicating a feature of the image; a video display control step of controlling the display of the image based on the video content data; and a digital-mark display control step of controlling the display of at least one of the temporal position of the image having the feature indicated by the digital mark data and the feature of the image based on the metadata in which the digital mark data is set.

A program of the present invention allows a computer to execute: a mark setting step of setting, in metadata related to video content data for displaying an image including sound, digital mark data indicating a feature of the image; a video display control step of controlling the display of the image based on the video content data; and a digital-mark display control step of controlling the display of at least one of the temporal position of the image having the feature indicated by the digital mark data and the feature of the image based on the metadata in which the digital mark data is set.

According to the video-image editing apparatus and method, the recording medium, and the program of the present invention, in metadata related to video content data for displaying an image including sound, digital mark data indicating a feature of the image is set, and the display of image is controlled based on the video content data. Then, based on the metadata in which the digital mark data is set, the display of at least one of the temporal position of the image having the feature indicated by the digital mark data and the feature of the image is controlled.

### Brief Description of the Drawings

Fig. 1 illustrates the configuration of a video-program production support system according to the present invention.
Fig. 2 is a block diagram illustrating the configuration of an embodiment of a field PC 15.
Fig. 3 illustrates an example of a program executed by the field PC 15.
Fig. 4 illustrates the structure of a program, episode, scene, cut, and programs (clips).
Fig. 5 illustrates the structure of directories (folders) and files recorded on an optical disc 17.
Fig. 6 illustrates the structure of directories (folders) and files recorded on the optical disc 17.
Fig. 7 illustrates an example of the configuration of configuration table metadata.
Fig. 8 illustrates an example of the configuration of configuration table metadata.
Fig. 9 illustrates an example of the configuration of configuration table metadata.
Fig. 10 illustrates an example of the configuration of configuration table metadata.
Fig. 11 illustrates an example of the screen displayed on an LCD, which is an output unit 117 of the field PC 15, by an editing program 151.
Fig. 12 illustrates an example of the screen displayed on an LCD, which is the output unit 117 of the field PC 15, by the editing program 151.
Fig. 13 illustrates an example of the screen displayed on an LCD, which is the output unit 117 of the field PC 15, by the editing program 151.
Fig. 14 illustrates an example of the screen displayed on an LCD, which is the output unit 117 of the field PC 15, by the editing program 151.
Fig. 15 illustrates an example of the screen displayed on an LCD, which is the output unit 117 of the field PC 15, by the editing program 151.
Fig. 16 illustrates an example of the screen displayed on an LCD, which is the output unit 117 of the field PC 15, by the editing program 151.
Fig. 17 illustrates an example of the screen displayed on an LCD, which is the output unit 117 of the field PC 15, by the editing program 151.
Fig. 18 illustrates an example of the screen displayed on an LCD, which is the output unit 117 of the field PC 15, by the editing program 151.
Fig. 19 is illustrates an example of the screen displayed on an LCD, which is the output unit 117 of the field PC 15, by the editing program 151.
Fig. 20 illustrates an example of the screen displayed on an LCD, which is the output unit 117 of the field PC 15, by the editing program 151.
Fig. 21 illustrates an example of the screen displayed on an LCD, which is the output unit 117 of the field PC 15, by the editing program 151.
Fig. 22 illustrates an example of the screen displayed on an LCD, which is the output unit 117 of the field PC 15, by the editing program 151.
Fig. 23 illustrates an example of the screen displayed on an LCD, which is the output unit 117 of the field PC 15, by the editing program 151.
Fig. 24 illustrates an example of the screen displayed on an LCD, which is the output unit 117 of the field PC 15, by the editing program 151.
Fig. 25 illustrates an example of the screen displayed on an LCD, which is the output unit 117 of the field PC 15, by the editing program 151.
Fig. 26 illustrates an example of the screen displayed on an LCD, which is the output unit 117 of the field PC 15, by the editing program 151.
Fig. 27 illustrates an example of the screen displayed on an LCD, which is the output unit 117 of the field PC 15, by the editing program 151.
Fig. 28 illustrates an example of the screen displayed on an LCD, which is the output unit 117 of the field PC 15, by the editing program 151.
Fig. 29 illustrates an example of the screen displayed on an LCD, which is the output unit 117 of the field PC 15, by the editing program 151.
Fig. 30 illustrates the configuration of a monitor window 701.
Fig. 31 illustrates the display operation of a disc information window 311 and the display operation of a monitor window 313.
Fig. 32 illustrates the display operation of a structure window 312 and the display operation of the monitor window 701.
Fig. 33 illustrates details of the operation of the monitor window 313.
Fig. 34 illustrates details of the operation of the monitor window 313.
Fig. 35 illustrates details of the operation of the monitor window 701.
Fig. 36 illustrates details of the operation of the monitor window 701.
Fig. 37 illustrates the operation of the monitor window 313 and the operation of the monitor window 701.
Fig. 38 illustrates the operation of the monitor window 313 and the operation of the monitor window 701.
Fig. 39 illustrates the operation of the monitor window 313 and the operation of the monitor window 701.
Fig. 40 illustrates details of the operation of the disc information window 311.
Fig. 41 illustrates details of the operation of the structure window 312.
Fig. 42 illustrates details of the operation of the structure window 312.
Fig. 43 illustrates menu commands.
Fig. 44 illustrates menu commands.
Fig. 45 illustrates the flow of the processing of the editing program 151.
Fig. 46 illustrates the flow of the processing of the editing program 151.
Fig. 47 illustrates the flow of the processing of the editing program 151.
Fig. 48 illustrates the flow of the processing of the editing program 151.
Fig. 49 is a flowchart illustrating the processing of basic operation 1 shown in Figs. 45 through 48.
Fig. 50 is a flowchart illustrating the processing of basic operation 2 shown in Figs. 45 through 48.
Fig. 51 is a flowchart illustrating the processing of basic operation 3 shown in Figs. 45 through 48.
Fig. 52 is a flowchart illustrating a structure operation shown in Figs. 45 through 48.
Fig. 53 is a flowchart illustrating the structure operation shown in Figs. 45 through 48.
Fig. 54 is a flowchart illustrating the structure operation shown in Figs. 45 through 48.
Fig. 55 is a flowchart illustrating another example of the processing of the editing program 151.
Fig. 56 is a flowchart illustrating the above example of the processing of the editing program 151.
Fig. 57 is a flowchart illustrating the above example of the processing of the editing program 151.
Fig. 58 is a flowchart illustrating the above example of the processing of the editing program 151.
Fig. 59 is a flowchart illustrating the processing for setting an essence mark.
Fig. 60 is a flowchart illustrating the processing for displaying an essence mark.
Fig. 61 is a flowchart illustrating the processing for setting a typical image.
Fig. 62 is a flowchart illustrating the processing for displaying a typical image.
Fig. 63 is a block diagram illustrating another example of the configuration of the editing program.
Fig. 64 illustrates the handling of a configuration table, filming instructions, and data concerning editing in the production of a video program.
Fig. 65 illustrates an example of filming instruction data.
Fig. 66 illustrates an example of filming instruction data.

### Best Mode for Carrying Out the Invention

A video-program production support system is first described below. The video-program production support system is provided in, for example, television broadcasting stations or video content or film production companies, so as to produce video programs, which are video works, such as TV programs, video content, and films. Because of the video-program production support system, configuration table metadata in an electronic film format can be consistently used between a plurality of sections sharing the production of a video program. Thus, the video program can be efficiently used.

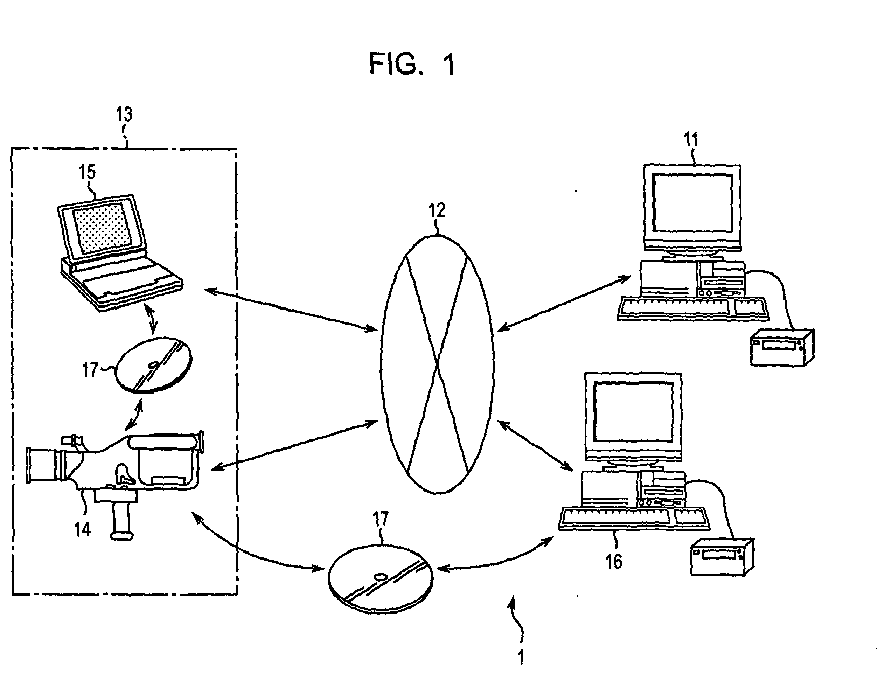

The configuration of the video-program production support system according to the present invention is described below with reference to Fig. 1. Fig. 1 is a block diagram illustrating the schematic configuration of the video-program production support system of the present invention.

As shown in Fig. 1, a video-program production support system 1 of the present invention includes, for example, a planning terminal device 11, a network 12, a filming terminal device 13 including an imaging device 14 and a field PC (Personal Computer) 15, and an editing terminal device 16.

The network 12 is, for example, a telecommunication circuit network, for connecting the planning terminal device 11, the imaging device 14, the field PC 15, and editing terminal device 16 with each other so that two-way communication can be performed. The network 12 is formed of a cable communication line compliant with, for example, RS-422 or RS-232C, or a wireless communication circuit compliant with, for example, IEEE (Institute of Electrical and Electronic Engineers) 802.11a.

The network 12 is not restricted to the above-described examples, and may be formed of one of various dedicated public circuit networks, such as optical fiber networks, for example, FDDI (Fiber Distributed Data Interface), satellite communication networks, Ethernet (registered), LANs (Local Area Networks), and the Internet.

The network 12 may include a media network formed of recording media and flash memory used for imaging devices, which enables mutual data exchange.

The network 12 sends, for example, configuration table metadata (or part of the metadata) from the planning terminal device 11 to the imaging device 14 or the field PC 15 (that is, the filming terminal device 13). The network 12 also sends, for example, video content data recorded by the imaging device 14 or the configuration table metadata edited by the imaging device 14 and the field PC 15, from the imaging device 14 or the field PC 15 to the editing terminal device 16.

The planning terminal device 11, the filming terminal device 13, and the editing terminal device 16 are used by a planning section, a filming section, and an editing section, respectively, of a plurality of sections sharing the production of the video program.

The planning terminal device 11 is formed of an information processing apparatus, for example, a personal computer, and peripheral devices thereof, and is provided in the planning section. This planning section, which controls the entire production of a video program, plans and plots a video program to be produced to create a scenario (plot) and also gives instructions about production works to the other sections, such as the filming section and the editing section.

The planning terminal device 11 has the function of generating configuration table metadata in an electronic file format (that is, generating program metadata, which is described below) for each video program. The planning terminal device 11 also generates production instruction information based on the input from a person in charge of the planning section, and writes the production instruction information into the corresponding columns of the generated program metadata. The production instruction information is to give instructions about the production details of the video program to the other sections, and corresponds to the scenario created by the planning section.

The planning terminal device 11 sends, for example, the program metadata containing the production instruction information, to the filming terminal device 13 via the network 12. By providing the configuration table metadata (program metadata) containing the production instruction information to the filming terminal 13, as discussed above, the planning section can give instructions about scenes or content to be collected or filmed to the filming section.

The filming terminal device 10 is a group of terminal devices utilized by the filming section, and is formed of the imaging device 14 and the field PC 15. The filming section, which performs filming in production sites according to the production instructions or scenarios provided by the planning section, films images in individual scenes forming a video program, and also adds filming situations and essence marks.

The imaging device 14 is a video recorder provided with an imaging function, that is, a video camera (camcorder). The imaging device 14 captures images of broadcasting news programs, games, such as sport, and image content, such as films.

The imaging device 14 obtains, for example, program metadata, from the planning terminal device 11 via the network 12. The imaging device 14 displays, the obtained program metadata, on a predetermined display unit to allow the photographing staff, such as cameramen, to identify the content to be photographed.

The imaging device 14 performs image capturing to film scenes forming the video program based on the production instruction information of the program metadata. Filming proceeds by repeating imaging operations. For example, the imaging device 14 performs image capturing for a certain scene at least once, and then, performs image capturing for another scene at least once. This type of filming is referred to as a "take (clip)", which is continuous filming from the start to the end of recording by the imaging device 14.

The imaging device 14 records video content data of the resulting images (including sound, and the same applies to images in the subsequent description) on a recording medium, for example, an optical disc 17. The video content data is video data or audio data indicating images or sound, respectively, captured or obtained by the imaging device 14. The video content data contains at least one of image data and audio data. The video content data is moving picture data of, for example, TV programs and films, still image data of, for example, photographs and paintings, audio data of, for example, radio programs, or a combination of such types of data. The imaging device 14 records video content data on the optical disc 17 in units of clips. That is, when the imaging device 14 performs two clips, two video content data are recorded on the optical disc 17.

The optical disc 17 recording the video content data thereon is a large-capacity, next-generation optical disc in which a large amount of video content data (for example, a several tens of gigabytes) can be recorded. The optical disc 17 is not restricted to the above type of disc, and may be one of various types of optical discs, such as DVD (Digital Versatile Disc)-R (Recordable), DVD-RAM, and CD (Compact Disc)-R. The recording medium for recording the video content data thereon by the imaging device 14 is not restricted to the optical disc 17, and may be a MO (Magneto-Optical disk), a magnetic disk, such as a flexible disk, magnetic tape, such as video tape in digital VTR format, various semiconductor memories, such as a RAM (Random Access Memory), and a flash memory.

The imaging device 14 can record not only original images, but also low-resolution images on the optical disc 17. The original images are raw video content data captured by the imaging device 14. Since the original images have a large amount of data and a high image quality, they are used as a final product. In contrast, low-resolution images are video content data generated by reducing (compressing) the original images. Since the low-resolution images have relatively a low image quality and a small capacity, they can be speedily and easily transferred (transmitted) and are thus used for rough editing.

The optical disc 17 with the video content data recorded by the imaging device 14 is transferred to the editing section, which is discussed below, and is used for editing video content data. However, since it takes a certain time to transfer the optical disc 17, the imaging device 14 is adapted to speedily provide video content data to the editing terminal device 16 via the network 12.

More specifically, the imaging device 14 can send, for example, low-resolution data, to the editing terminal device 16, the planning terminal device 11, or the field PC 15 via the network 12. The low-resolution images may be transmitted substantially simultaneously with the filming operation of the imaging device 14, or may be collectively transmitted after filming. The editing section can perform the editing operation relatively at an early stage (for example, simultaneously with the filming operation) even if the optical disc 17 has not arrived. This accelerates the start of producing the video program. If the low-resolution images are transmitted via the network 12, the imaging device 14 may record only the original images on the optical disc 17.

The field PC 15 is formed of a mobile computer, for example, a notebook personal computer or a PDA (personal digital assistant), and peripheral devices thereof. The field PC 15 is connected to the imaging device 14 via cables or wireless circuits, and can share, for example, configuration table metadata and recorded video content data with the imaging device 14.

The field PC 15 can obtain the program metadata from the planning terminal device 11 via the network 12. The field PC 15 can also obtain the program metadata from the imaging device 14. The field PC 15 can display the obtained program metadata on a predetermined display unit to allow a person in charge in the filming section to identify the content to be collected or filmed.

The field PC 15 can also generate filming situation information concerning the filming situations based on the input from a person in charge in the filming section, and adds the filming situation information to the corresponding columns of the configuration table metadata. The filming situation information is text data indicated for each clip or each filming site in terms of various viewpoints, and is effective when editing is performed. In this manner, the field PC 15 can edit the configuration table metadata by writing the filming situation information into the metadata.

The filming terminal device 13 formed of the imaging device 14 and the field PC 15 can also generate clip metadata, which is metadata concerning the imaging situation of the clip imaging operation, as part of the configuration table metadata. The clip metadata is discussed in detail below.

The filming terminal device 13 can generate clip associating information (details are given below), which is information for associating video content data and clip metadata with the production instruction information (scenario) for each clip, and adds the clip associating information to the configuration table metadata (program metadata). This enables the filming terminal device 13 to allocate video materials (i.e., video content data), which are actual filming results, to the scenario (i.e., production instruction information), which are plans and plots made by the planning section, by using the configuration table metadata.

As described above, the filming terminal device 13 can edit the configuration table metadata by writing various items of information according to the filming situations.

The editing terminal device 16 is formed of an information processing apparatus, for example, a personal computer, and peripheral devices thereof, and is provided in the editing section. The editing section edits the video content data recorded by the imaging device 14 based on the configuration table metadata reflecting the production instructions by the planning section and the scenario or filming situation so as to complete a video program.

The editing terminal device 16 obtains the configuration table metadata and low-resolution images from the filming terminal device 13 via the network 12, and also obtains the original images via the optical disc 17. The editing terminal device 16 can also directly receive the production instructions from the planning terminal device 11 via the network 12.

The editing terminal device 16 can suitably play back the video content data based on the configuration table metadata and displays the video content data. For example, the editing terminal device 16 can sequentially display the low-resolution images received via the network or the original images recorded on the optical disc 17 in the order according to the scenario, or can display the video content data of only desired clips. When playing back the original images, a disc terminal, which is a recorder/player, for reading and writing the optical disc 17 can be used.

The editing terminal device 16 can play back required video content data in a suitable order based on the configuration table metadata and displays the content data, and can also support the editing operation of the video content data. This editing operation includes rough editing processing and main editing processing.

The rough editing processing is as follows. Video content data to be used in the main editing processing are first collected from a plurality of video content data recorded in units of clips. Required video portions are then selected (logged) from the collected video content data. Then, the editing start point (In point) and the editing end point (Out point) corresponding to the selected video portions are set by, for example, time codes, so as to extract (cut) the required portions of the video content data.

In the main editing processing, the original data of video content data are spliced from an editing list which is produced after performing rough editing by using low-resolution images (converted from program metadata). Then, final image quality adjustments are made on the spliced original data so as to produce perfect package data to be broadcast as a program.

The rough editing processing may be executed in the field PC 15.

The video-program production support system 1 and the elements forming the system 1 have been schematically described. However, the video-program production support system 1 is not restricted to the above-described example.

For example, each of the planning terminal device 11, the imaging device 14, the field PC 15, and the editing terminal device 16 are not necessary provided singly, and plural of devices may be provided. For example, video content data captured by a plurality of imaging devices 14 may be provided to the editing terminal device 16 via the optical disc 17 or the network 12.

The planning terminal device 11, the imaging device 14, the field PC 15, and the editing terminal device 16 do not have to be provided as separate hardware. For example, the planning terminal device 11 and the editing terminal device 16 may be integrally formed as the same hardware having both the functions. The imaging device 14 and the field PC 15 may be integrally formed as the same hardware having both the functions by providing an input unit, for example, a keyboard, for the imaging device 14.

By providing a center server (not shown) between the planning terminal device 11, the filming terminal device 13, and the editing terminal device 16 and by setting the planning terminal device 11, the filming terminal device 13, and the editing terminal device 16 as clients, the video-program production support system 1 can be formed as a client/server network system.

The terms used in the present embodiment are defined as follows.

"Metadata" is host data for certain data, and serves as an index representing the content of various data. More specifically, the metadata includes, for example, production instruction information data concerning a video program, filming situation information data, clip associating information data, filming condition information data and digital mark data concerning video content data.

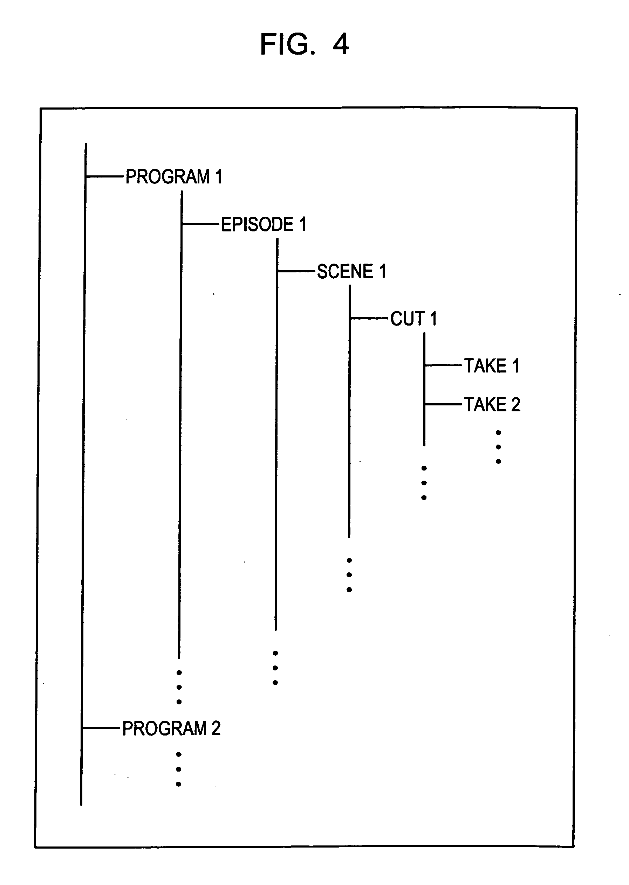

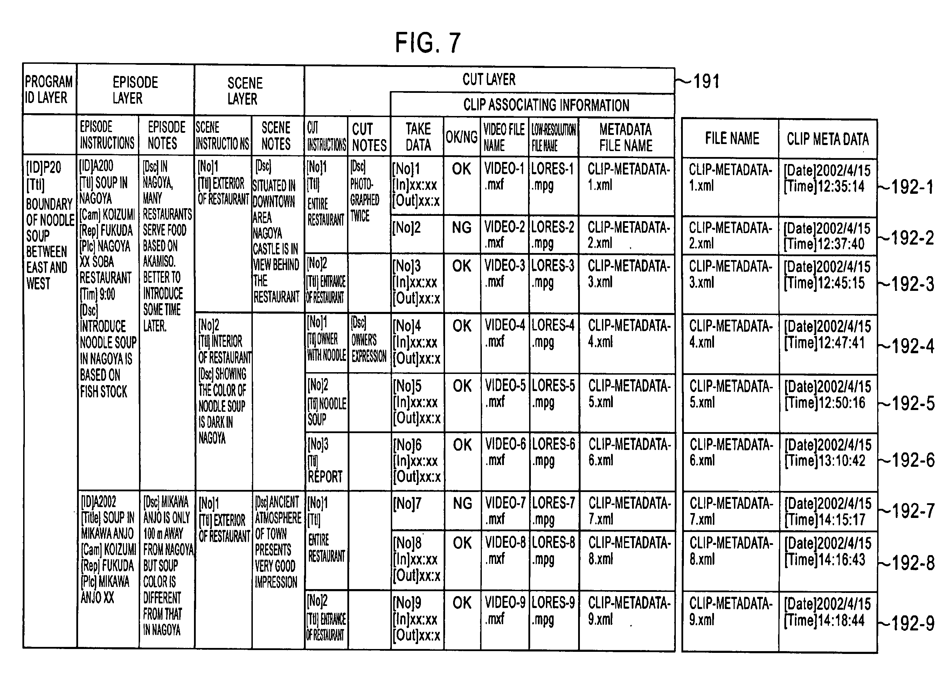

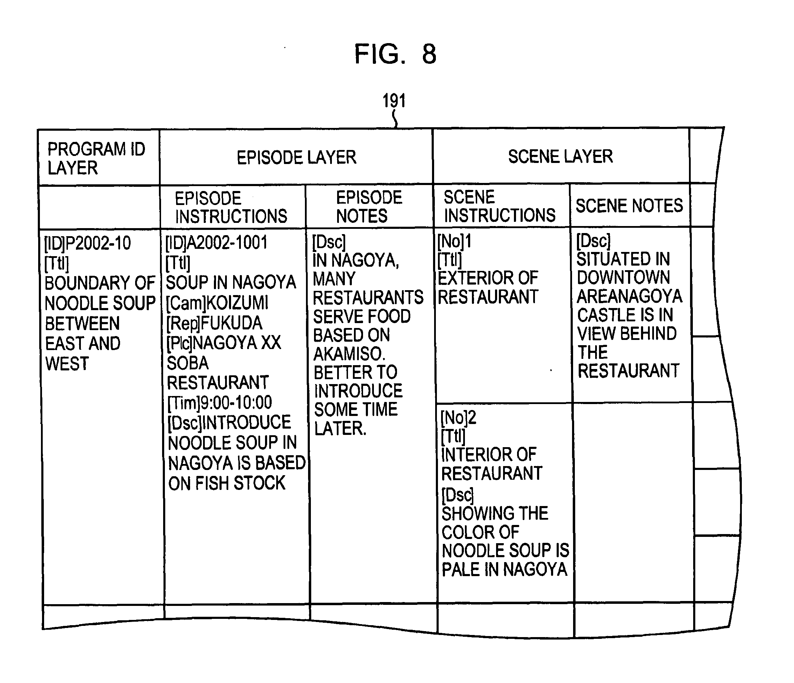

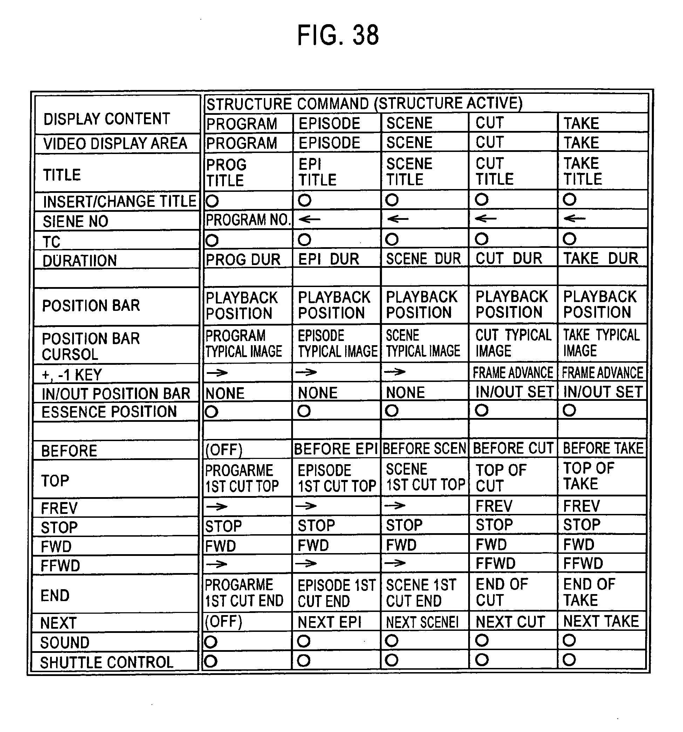

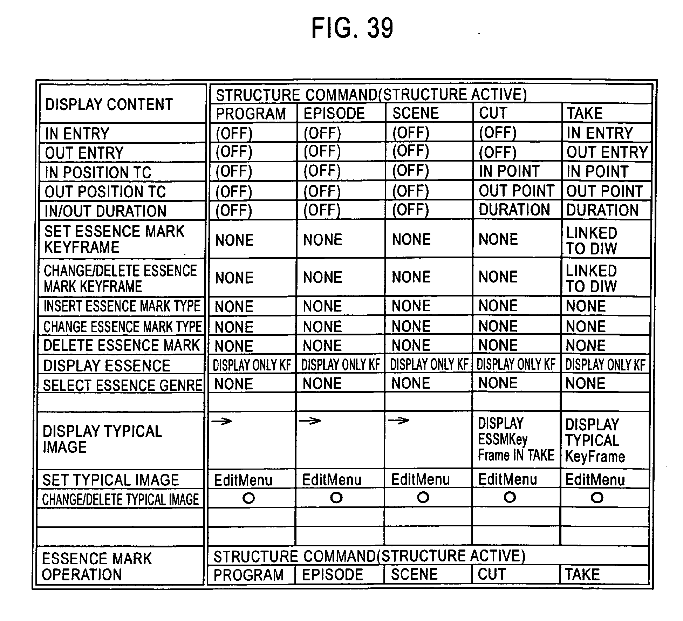

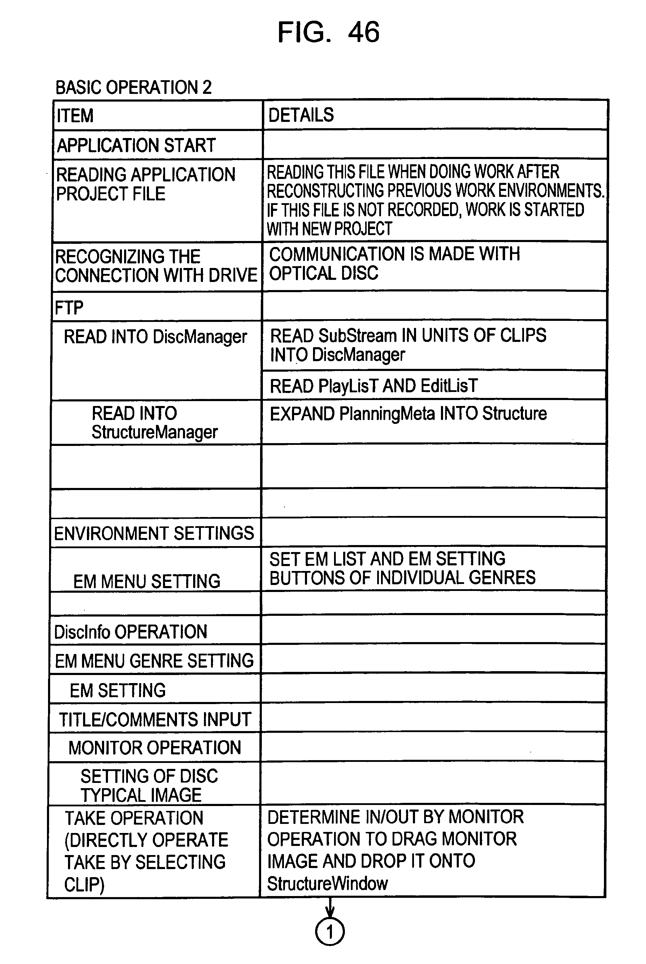

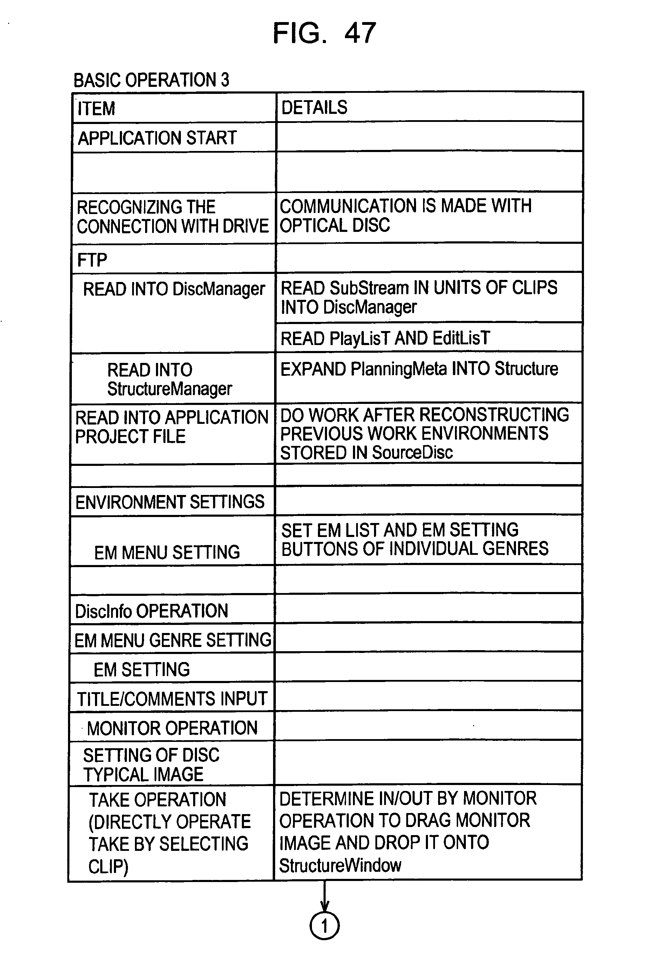

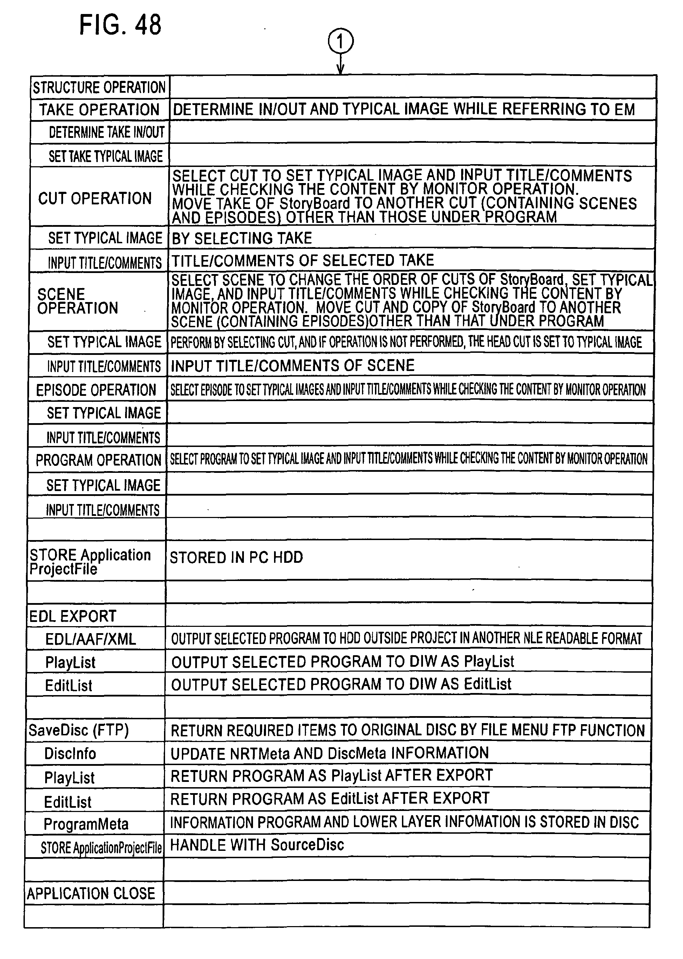

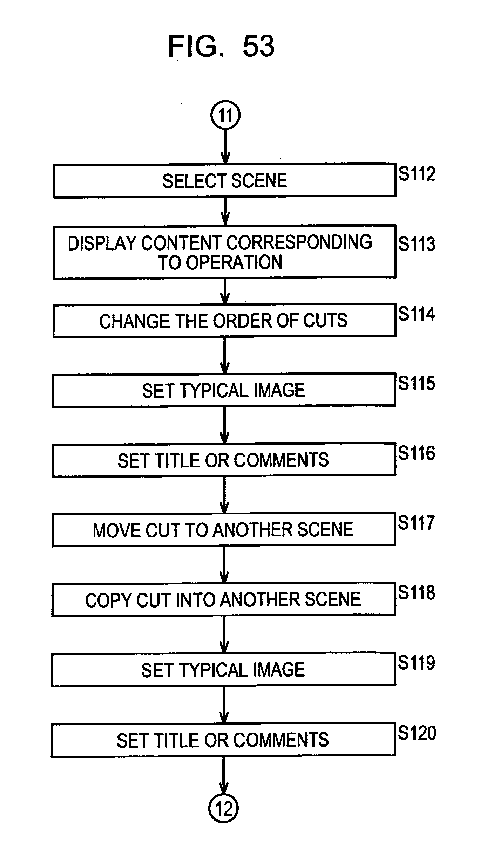

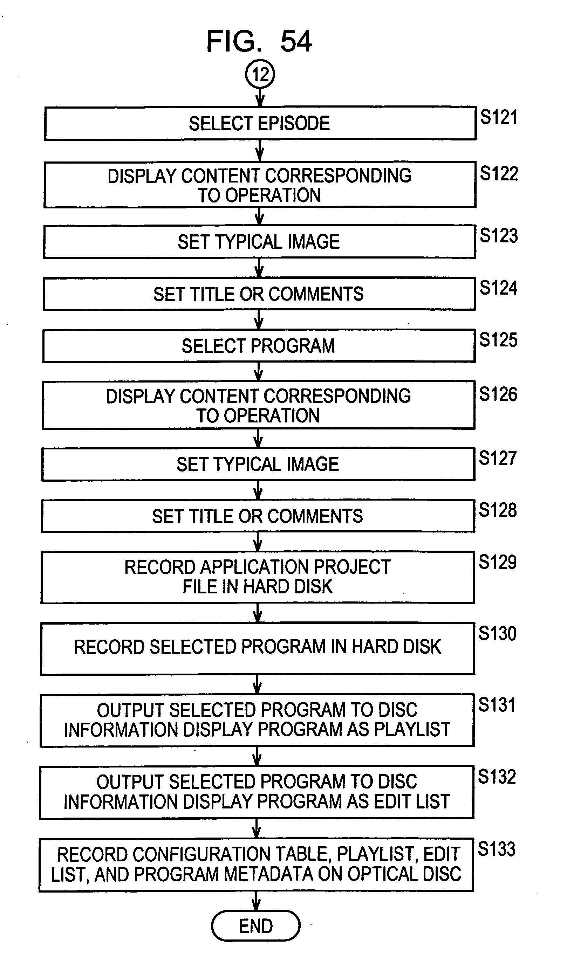

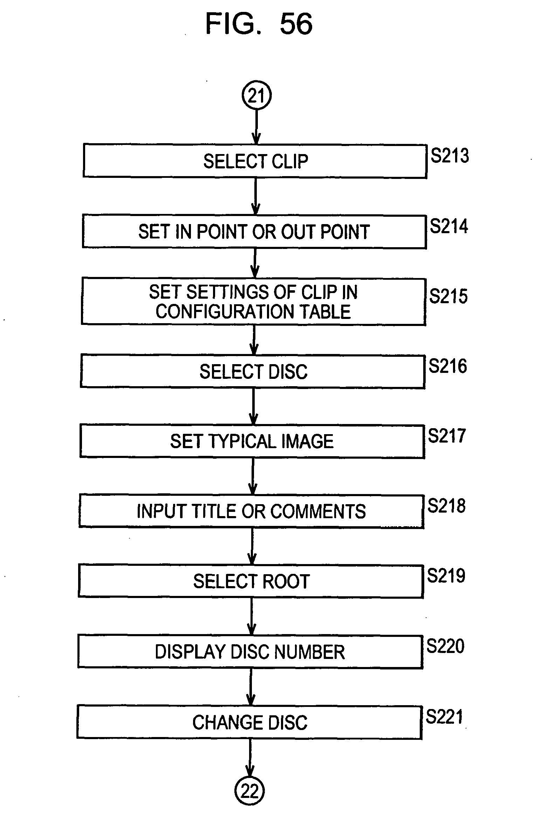

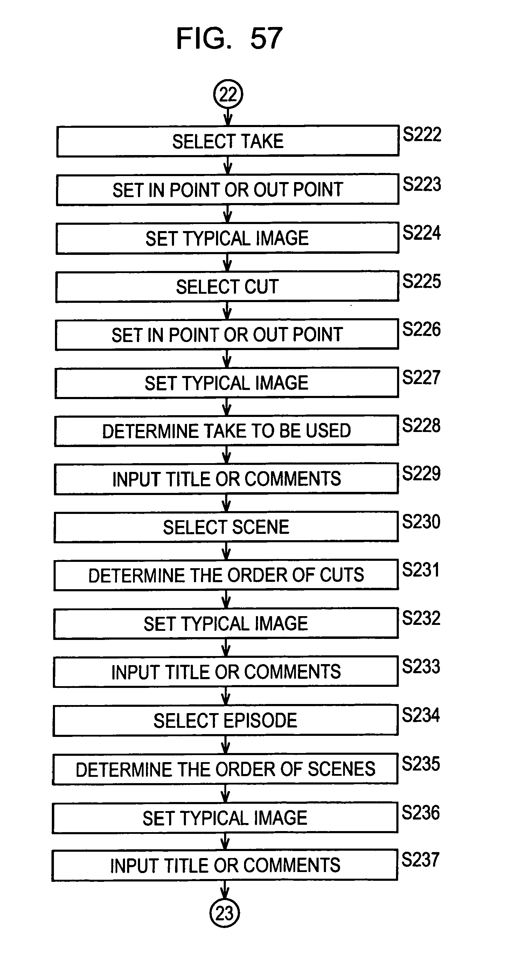

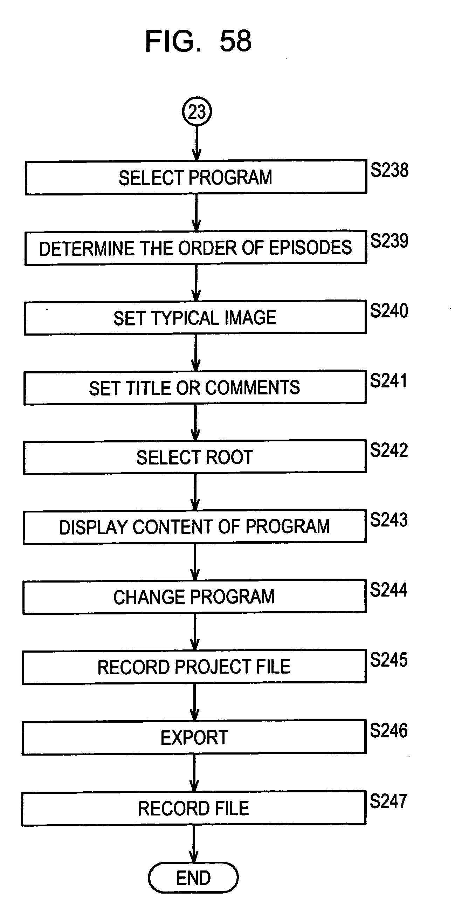

A configuration table (program metadata) is formed of a planning layer, a program layer, an episode layer, a scene layer, and a cut layer shown in Figs. 4, 11 through 66 in the order of a scenario at the planning stage and a scenario of a final program. In photographing (filming), however, the configuration table (program metadata) is not necessarily arranged in the order of the scenario because of the circumstances of photographing (filming), and instead, it is formed of a filming layer, a scene layer, and a cut layer summarized by considering the time and date and the place of filming, as shown in Figs. 7 and 8.

Though it is not shown in a GUI (Graphical User Interface), settings, such as a filming instruction display and a scenario display, are provided in a display menu, so as to display the configuration table in photographing (filming).

The "configuration table metadata" includes clip metadata (NRT (non-real time) metadata) managed by a unit file for each filming material clip required for the production of a video program; and program metadata containing filming instruction information according to a scenario at the planning stage.

The "program metadata" is table data in which various items of metadata are structured in the form of a table. More specifically, the program metadata is generated by dividing one video program into program elements, and is structured in the order of a program ID layer, a filming layer, a scene layer, a cut layer, and a clip layer. In each layer, for example, metadata, such as the configuration (number and order), title, description, accompanying information, are indicated. The configuration metadata is managed by a unit file for each video program.

In this example, the program metadata is metadata for managing metadata of the cut layer and higher layers by integrating them into one metadata file (unit file) for each video program. In this program metadata, for example, the program ID layer, the filming layer, the scene layer, and the cut layer are structured in order of mention. The program metadata includes metadata of, for example, production instruction information, program filming situation information, and clip associating information, which are described below.

The "clip metadata" is one metadata concerning a clip in the "configuration table metadata" and is managed by one metadata file (unit file) for each clip. Accordingly, a plurality of files of clip metadata may be formed for one video program (one program metadata). This clip metadata is associated with the cut layer of the program metadata, and corresponds to, for example, a layer lower than the cut layer. The clip metadata includes metadata of, for example, clip filming situation information, which is discussed below.

A "take" is a continuous filming operation from the start to the end of one recording operation by the imaging device. In other words, the take is the minimum unit of the filming operation at the filming stage of a video program. In the field of the production of video works, the take is also referred to as a "clip", "shot", or "cut". The take (clip) may indicate a continuous video zone from the start to the end of one recording operation by the imaging device.

The "clip layer" is a layer formed of metadata concerning clips in the clip metadata. The "clip layer" is also handled as a take layer.

The "cut" is the minimum unit forming a video program at the planning stage (that is, when creating a scenario). The cut is part of the scenario when viewed from the planning section (that is, the assumed filming scenes), and it is different from a clip, which is the minimum unit of the actual filming operation when viewed from the filming section. Required portions extracted from the video content data of a clip are assigned to this cut.

The "cut layer" is a layer formed of metadata containing takes, which are lower than the cut layer, in the program metadata.

The "scene", which is a middle-scale unit forming a video program at the planning stage (i.e., when creating a scenario), is formed of at least one cut. That is, the scene is a filming scene consisting of at least one cut. For example, if photographic positions are different even in the same filming scene, they can be treated as different scenes.

The "scene layer" is a layer formed of metadata concerning scenes in the program metadata.

The "episode", which is the maximum unit forming a video program at the planning stage (i.e., when creating a scenario), is formed of at least one scene. That is, the episode is a filming scene consisting of at least one scene. The video program is formed of at least one episode.

The "episode layer" is a layer of metadata concerning episodes in the program metadata.

The "program ID layer" is a layer of metadata for identifying the video program corresponding to the program metadata.

The field PC 15 for performing the rough editing processing is discussed below.

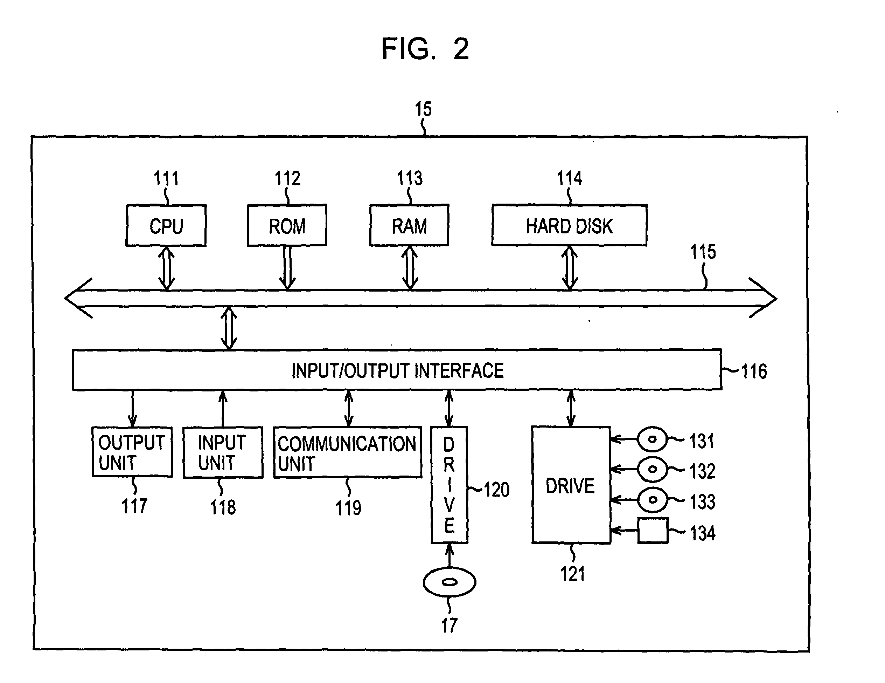

Fig. 2 is a block diagram illustrating the configuration of an embodiment of the field PC 15.

An input/output interface 116 is connected to a CPU (Central Processing Unit) 111 via a bus 115. When a command is input from a user via an input unit 118 consisting of, for example, a keyboard and a mouse, the CPU 111 loads a program stored in a ROM (Read Only Memory) 112, a hard disk 114, or a recording medium, such as a magnetic disk 131, an optical disc 132, a magneto-optical disk 133, or a semiconductor memory 134, which is installed in a drive 121, into a RAM (Random Access Memory) 113 via the input/output interface 116, and runs the program. Then, various types of processing, which are described below, are performed.

The CPU 111 also controls a drive 120 to read video content data and configuration table metadata recorded on the installed optical disc 17, and to record the configuration table metadata indicating the editing results on the optical disc 17.

The CPU 111 also outputs the processing results to an output unit 117 consisting of, for example, an LCD (Liquid Crystal Display), via the input/output interface 116 if necessary.

A communication unit 119 is operated as the interface for the network 12.

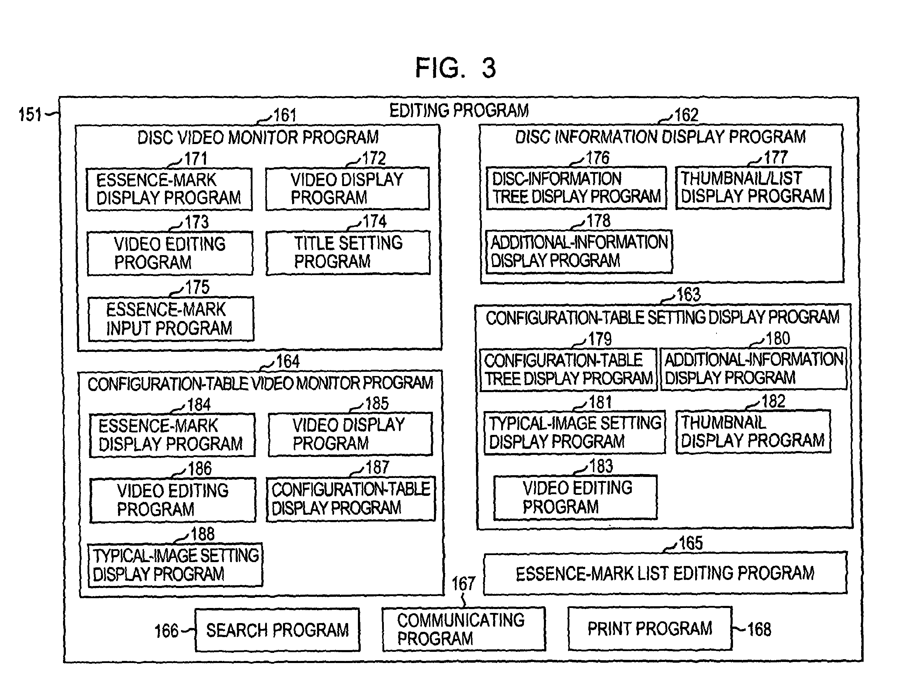

Fig. 3 illustrates an example of a program executed by the field PC 15. An editing program 151 is a program for executing the rough editing processing. More specifically, the editing program 151 collects video content data to be used in the main editing processing from a plurality of video content data recorded in units of clips, and selects (logs) required video portions from the collected video content data. The editing program 151 sets the editing start position (In point) or the editing end position (Out point) corresponding to the selected video portions based on digital mark data, which is discussed below, so as to extract required portions from the video content data.

The editing program 151 includes a disc video monitor program 161, a disc information display program 162, a configuration-table setting display program 163, a configuration-table video monitor program 164, an essence-mark list editing program 165, a search program 166, a communication program 167, and a print program 168.

The disc video monitor program 161 is a program for setting essence marks, which are digital mark data indicating the features of images or sound, in clip metadata. The disc video monitor program 161 includes an essence-mark display program 171, a video display program 172, a video editing program 173, a title setting program 174, and an essence-mark input program 175.

The essence mark represents a special image, for example, an image from which recording is started, an image at which recording is finished, an image in which the scene is changed, and an image in which flash is used. The essence mark is also added to an image which serves as a key in the program configuration, for example, an image on which the editor wishes viewers to focus attention or an image on which viewers focus attention.

The essence-mark display program 171 displays an image at a time (position) at which an essence mark is set based on clip metadata in which an essence mark, which is digital mark data indicating the features of an image or sound, is set. The video display program 172 controls the display of an image based on the video content data.

The video editing program 173 is a program for editing video content data. The title setting program 174 sets a clip title in clip metadata. The essence-mark input program 175 displays a text box, an essence-mark setting button, or an essence-mark setting combo box, which are described below, and inputs an essence mark to be set into the clip metadata.

The disc-information display program 162 is a program for displaying information concerning video content data read from the optical disc 17. The disc information display program 162 includes a disc-information tree display program 176, a thumbnail/list display program 177, and an additional-information display program 178.

The disc information tree display program 176 is a program for controlling information concerning the video content data (including essence marks) read from the optical disc 17 to be displayed in a tree structure. The thumbnail/list display program 177 controls the display of thumbnails or a list corresponding to the video content data. The thumbnails may be generated by the thumbnail/list display program 177 and are recorded on the optical disc 17 in advance. For example, the thumbnail/list display program 177 generates thumbnails from the low-resolution data recorded on the optical disc 17.

The additional-information display program 178 is a program for controlling the display of additional information set in the optical disc 17.

The configuration-table setting display program 163 is a program for displaying and editing information concerning the configuration table metadata read from the optical disc 17. The configuration-table setting display program 163 includes a configuration-table tree display program 179, an additional-information display program 180, a typical-image setting display program 181, a thumbnail (storyboard) display program 182, and a video editing program 183.

The configuration-table tree display program 179 is a program for controlling the configuration table to be displayed in a tree structure based on the program metadata. The additional-information display program 180 is a program for controlling the display of the additional information set in the program metadata. The typical-image setting display program 181 is a program for setting typical images of a take, cut, episode, or program (video program) and for controlling the display of the typical images. The typical images represent images of a take, cut, scene, episode, or program. By displaying the typical images, the user can easily recognize the content of a take, cut, scene, episode, or program. The thumbnail (storyboard) display program 182 controls the display of thumbnails of typical images of a take, cut, scene, episode, or program. The video editing program 183 is a program for editing video content data.

Hereinafter, a video program is simply referred to as a "program", and a program executed by a computer is referred to as a "computer program". For the term of a specific computer program, the term "computer" is omitted.

The configuration-table video monitor program 164 is a program for setting typical images of a clip, disc, cut, scene, episode, or program. The configuration-table video monitor program 164 includes an essence-mark display program 184, a video display program 185, a video editing program 186, a configuration-table display program 187, and a typical-image setting display program 188.

The essence-mark display program 184 controls the display of the temporal position of an image having a feature indicated by an essence mark based on the clip metadata in which essence marks, which are digital mark data indicating the features of images or sound, is set. The video display program 185 controls the display of images based on the video content data. The video editing program 186 is a program for editing the video content data. The configuration-table display program 187 is a program for controlling the display of the configuration table based on the configuration table metadata.

The typical-image setting display program 188 is a program for setting typical images of a take, cut, scene, episode, or program (video program) and for controlling the display of the typical images.

The essence-mark list editing program 165 is a program for editing essence marks (or a list thereof) based on the clip metadata.

The search program 166 is a program for conducting keyword search based on the metadata, which is the source of the disc information and the display of the configuration table, and for jumping to the operation screen based on the search results.

The communication program 167 obtains the disc information, metadata, or configuration table from an optical-disc drive or a server, and rewrites the disc information, metadata, or configuration table into the optical-disc drive or the server.

The print program 168 prints selection windows for the disc information setting display, the configuration table setting display, detailed properties, and essence-mark editing information on a printer.

Fig. 4 illustrates a hierarchical structure of programs, episodes, scenes, cuts, and takes. More specifically, under one program, at least one episode is disposed; under one episode, at least one scene is disposed; under one scene, at least one cut is disposed; under one cut, at least one take is disposed. That is, the programs, episodes, scenes, cuts, and takes have a tree structure.

As described below, one take is selected from at least one take in one cut. The selected take forms a cut. The use of a take as a cut is also referred to as "pasting a take to a cut".

Video content data as a material recorded on the optical disc 17 is referred to as a "clip", and video content data forming a program is referred to as a "take". That is, although both the clip and take are the same video content data, the content data considered as a material recorded on the optical disc 17 is referred to as a "clip", while the content data considered to form a program is referred to as a "take".

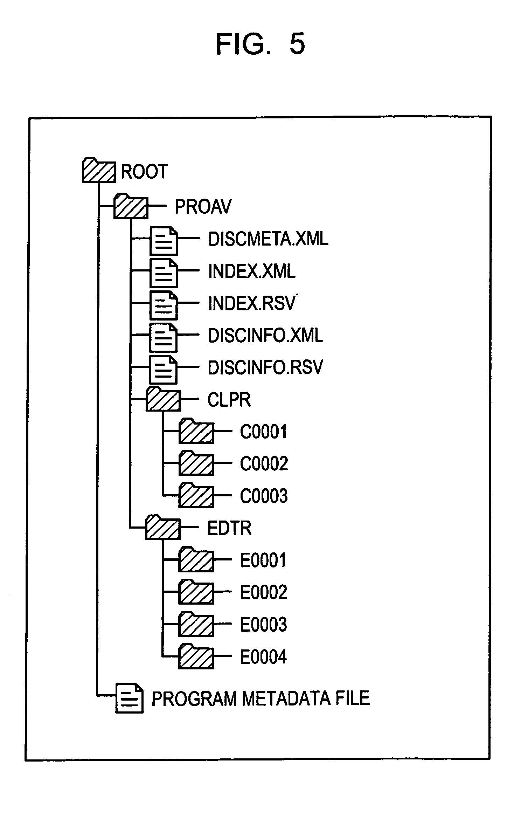

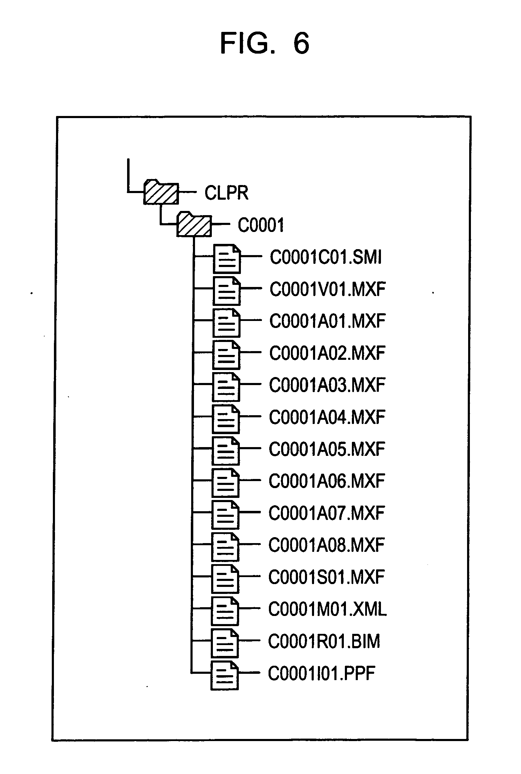

Figs. 5 and 6 illustrate structures of directories (folders) and files recorded on the optical disc 17. In a root directory, as shown in Fig. 5, a PROAV directory storing video content data for one program and program metadata files related to the PROAV directory are stored.

In the PROAV directory, a disc metadata file (DISKMETA.XML), an index file (INDEX.XML), a file copied from the index file (INDEX.RSV), a disc information file (DISCINFO.XML), and a file copied from the disc information file (DISCINFO.RSV) are stored. The disc metadata file is a file storing disc metadata indicating the paths of the typical images of the disc and the title or comments of the disc. The index file is a file indicating the index (index data) and indicating information for managing clips and an editing list.

The disc information file is a file (file data) indicating the attributes, playback start position, etc., of the optical disc 17.

In the PROAV directory, a clip directory (CLPR) and an edit directory (EDTR) are also stored. In the clip directory, a directory for each clip is stored. In the edit directory, edit list data indicating the playback order of video data and audio data is stored.

Fig. 6 illustrates files stored in a directory for each clip. The directory for a clip stores a file (for example, C001C01.SMI file) indicating the temporal behavior and a screen layout of one set of multimedia objects (video or audio objects) and a connection with other multimedia objects in an SMIL language, a file storing video data (for example, C001V01.MXF), a file storing audio data (for example, C001A01.MXF through C001A08.MXF files), a file storing low-resolution images (for example, C0001S01.MXF file), a file storing clip metadata (for example, C0001M01.XML file), a file storing frame metadata (for example, C0001R01.BIM file), and a file storing the description of a frame structure (for example, C0001I01.PPF file).

In the example shown in Fig. 6, 8 channel audio data are stored. In the clip metadata, for example, the title or comments of the clip is stored. The frame metadata, which is metadata for a frame forming the clip, is described in a BIM (binary format for metadata) format, which is obtained by converting an XML file into a binary format.

The configuration table metadata is as follows.

Fig. 7 illustrates an example of the overall configuration of the configuration table metadata. In Fig. 7, only part of the program metadata is shown.

The configuration table metadata concerning a video program for discovering the boundary of noodle soup between the east and the west is shown in Fig. 7 as an example of the configuration table metadata. The configuration table metadata is, for example, a data table formed for each video program. The configuration table metadata is formed by, for example, the planning terminal device 10 in an electronic file format.

The configuration table metadata concerning one video program is formed of, as shown in Fig. 7, one program metadata 191 and a plurality of clip metadata 192-1 through 192-9. The clip metadata 192-1 through 192-9 are simply referred to as "clip metadata 192" unless they have to be individually distinguished.

More specifically, the configuration table metadata related to one video program includes one program metadata 191 and a plurality of clip metadata 192 corresponding to the number of clips filmed (15 in the example shown in Fig. 7). In Fig. 7, a plurality of clip metadata 192 are vertically connected in order to easily identify which of the clip metadata 192-1 through 192-9 is associated with which cut in the program metadata 191. In actuality, however, each clip metadata 192 is managed as an independent file for each clip.

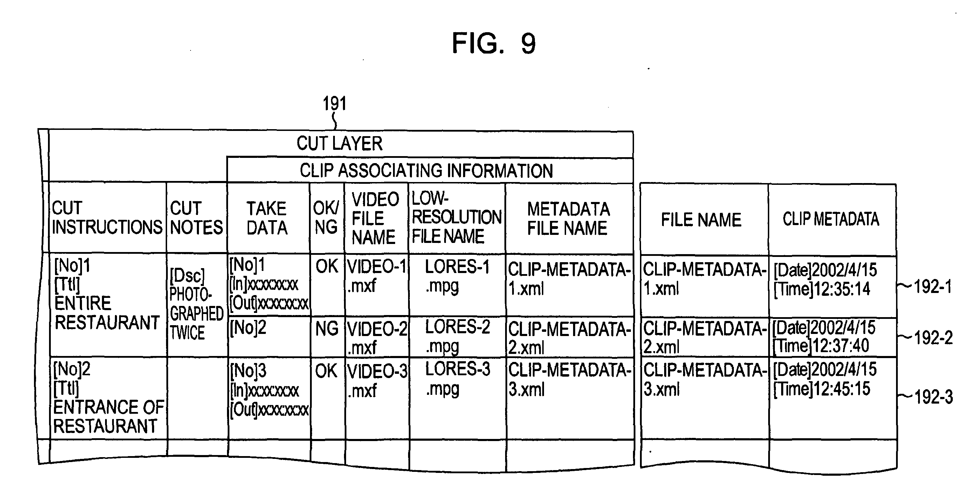

The program metadata 191 is described in detail below with reference to Figs. 7 through 9. Figs. 8 and 9 are partial views enlarged from the program metadata shown in Fig. 2. In Fig. 9, only part of the clip metadata is shown.

The program metadata 191 has a hierarchical structure, as shown in Fig. 7, consisting of, for example, a program ID layer, an episode layer, a scene layer, and a cut layer. Among these layers, the program ID layer is the highest layer, the episode layer is a one layer lower than the program ID layer, the scene layer is a one layer lower than the episode layer, and the cut layer is the lowest layer.

More specifically, in the program metadata 191 shown in Fig. 7, the program ID layer has metadata for identifying the program. The episode layer has metadata concerning, for example, two episodes. The scene layer has metadata concerning, for example, five scenes. The cut layer has metadata concerning, for example, 13 cuts. In other words, the video program of the configuration table metadata shown in Fig. 7 is formed of two episodes, five scenes, or 13 cuts.

In this manner, the program metadata 191 has a tree structure in which the metadata 191 is started from the program ID layer and are gradually fragmented into details as it is shifted to the episode layer, the scene layer, and the cut layer. The hierarchical structure of the program metadata 191 is not restricted to the above-described example. For example, it is only essential that the hierarchical structure of the program metadata 191 include the program ID layer and the cut layer, and it does not have to include the episode layer and the scene layer. The hierarchical structure of the program metadata 191 may include new layers other than the above-described four layers.

In each layer of the program metadata 191, the episodes, scenes, or cuts are vertically indicated from the top to the bottom of Fig. 7 in chronological order of the scenario. For example, among the five scenes forming the video program shown in Fig. 7, the scene in the uppermost column is the first scene in the scenario and the scene in the bottommost column is the final scene in the scenario.

Details of the metadata in the above-structured program metadata 191 are as follows.

The program metadata 191 includes, as a whole, production instruction information, program filming situation information, and clip associating information. Among these items of information, the production instruction information and the program filming situation information are formed into a hierarchical structure. In contrast, the clip associating information is contained in, for example, only the cut layer. The production instruction information, the program filming situation information, and the clip associating information are described below in turn.

The production instruction information is metadata for giving instructions about production details of a video program from the planning section to the filming section, the editing section, etc., and is metadata corresponding to the scenario of the video program. The production instruction information is generated by the planning terminal device 11 based on the input from a person in charge of the planning section, and is written into the corresponding columns of the program metadata 191. By checking this production instruction information, the sections sharing the production of the video program can understand the details of the video program to be produced.

In the program metadata 191, the production instruction information is written as, for example, text data into the entire program ID layer, the column "episode instructions" of the episode layer, the column "scene instructions" of the scene layer, and the column "cut instructions" of the cut layer. As a result, the production instruction information can be formed into a hierarchical structure as a whole. Because of this hierarchical structure, the intention (scenario) of the planning section can be clearly and simply represented.

The program filming situation information is metadata concerning filming situations corresponding to the cut layer and higher layers (for example, the cut layer, scene layer, and episode layer). More specifically, the program filming situation information includes messages, notes, and suggestions concerning photographed/filmed images, features and impressions of scenes, and incidents occurred during the photographing/filming operations. The program filming situation information is generated by the field PC 15 based on the input from a person in charge of the filming section, and is written into the corresponding columns of the program metadata 191. By checking the program filming situation information, the sections sharing the production of the video program can understand the filming situations during the filming operations.

The program filming situation information is indicated in, for example, the "episode notes" of the episode layer, the "scene notes" of the scene layer, and the "cut notes" of the cut layer of the program metadata 191 as, for example, text data. As a result, the program filming situation information can also be formed into a hierarchical structure as a whole. Because of this hierarchical structure, the filming situations can be clearly and simply represented. In the program metadata 191, the program filming situation information is not contained in the program ID layer. However, the program metadata 191 is not restricted to the above-described example, and the program filming situation information may be contained in the program ID layer. The clip associating information is metadata for associating clip video content data and the clip metadata 192 with cuts. More specifically, the dip associating information includes, for example, "take data" information, "OK/NG/keep" information, "video file name" information, "low-resolution file name" information, and "clip metadata file name" information, though details thereof are described later. The clip associating information is generated by the filming terminal device 13 or the editing terminal device 16 based on the input from a person in charge of the filming section or the editing section, and is written into the corresponding columns of the cut layer of the program metadata 191. By checking the clip associating information, the sections sharing the production of the video program can understand which clip is assigned to which cut. The editing terminal device 16 can automatically determine the relationship between the cuts and clips based on the clip associating information.

Details of specific examples of the metadata items of each layer of the program metadata 191 are given below with reference to Figs. 8 and 9.

In the program ID layer, as shown in Fig. 8, items, for example, "program ID: [ID]" and "program tide: [Tt1]", are provided. In the "program ID", an ID unique to each video program is indicated. To the video program shown in Fig. 8, the program ID, which is "P2002-10", is assigned. The program ID makes it possible to identify the video program with which the program metadata 191 is associated. In the "program title", the tide of a video program is indicated. In the example of Fig. 8, the title "boundary of noodle soup between the east and the west" is indicated.

The episode layer is divided, as shown in Fig. 8, into columns "episode instructions" and "episode notes".

In the "episode instructions", a person in charge of the planning section inputs production instructions at the episode level. In the column "instructions", items, for example, "episode title: [Tt1]", "cameraman: [Cam]", "reporter: [Rep]", "place: [Plc]", "designated time: [Tim]", and "episode instruction description [Dsc]", are provided.

In the "episode title", the title of an episode is indicated. In the example shown in Fig. 8, the title "Noodle Soup in Nagoya" is indicated.

In the "cameraman", the name or ID of the cameraman appointed to be in charge of the filming is indicated.

In the "reporter", the name or ID of the reporter appointed to be in charge of the filming is indicated.

In the "place", the place where filming is conducted is indicated.

In the "designated time", the start time and end time of filming is indicated.

In the "filming instruction description", filming instructions, for example, the purpose and summary of the filming, are indicated.

In the column "filming notes", a person in charge of the filming section inputs the program filming situation information at the filming level. In the column "filming notes", "filming note description: [Dsc]" is provided.

In the "filming note description", for example, notes on the filming/photographing situations at the filming level are indicated. More specifically, information concerning, for example, messages, notes, and suggestions on the points recognized by the person in charge over the entire filming operation, features and impressions of filming places, and incidents occurred during the filming operations, are mainly indicated.

The scene layer is divided, as shown in Fig. 8, into columns "scene instructions" and "scene notes".

In the column of "scene instructions", a person in charge of the planning section inputs the production instruction information at the scene level. In the column "scene instructions", items, for example, "scene number: [No]", "scene title: [Tt1]", and "scene instruction description: [Dsc]", are indicated.

In the "scene number", the number assigned to at least one scene forming one filming operation is indicated. For the scene number, since serial numbers are assigned to the scenes in one filming operation, the same scene number is not used in one filming operation. For example, the filming operation (filming "soup in Nagoya") shown in Fig. 8 consists of two scenes: the scene number "1" is assigned to the first scene, and the scene number "2" is assigned to the second scene. The scene number can also be information indicating the order of scenes.

In the "scene title", the title of a scene is indicated. In the example shown in Fig. 8, the title "exterior of restaurant" or "name of restaurant" is indicated.

In the "scene instruction description", scene instructions are indicated. The scene instructions are instructions concerning the scenes to be taken, for example, the summary and the progress of the scenes. The description indicated in "scene title" and "scene instruction description" corresponds to the scenario indicating the configuration of the scenes.

In the column "scene notes", a person in charge of the filming section inputs the program filming situation information at the scene level. In the column "scene notes", an item, for example, "scene note description: [Dsc]", is provided.

In the "scene note description", for example, notes on the filming/photographing situations at the scene level, are indicated. More specifically, information concerning, for example, messages, notes, and suggestions on the points recognized by the person in charge of the filming section at the scene level, features and impressions of the filmed scenes, and incidents occurred during the scene filming operations, are mainly indicated.

The cut layer is divided, as shown in Fig. 9, into columns "cut instructions", "cut notes", and "clip associating information".

In the "cut instructions", a person in charge of the planning section inputs production instruction information at the cut level. In the column "cut instructions", items, for example, "cut number: [No]" and "cut tide: [Tt1]", are provided. In the "cut number", the unique number assigned to at least one cut forming one scene is indicated. For the cut number, since serial numbers are assigned in one scene, the same cut number is not used in one scene. In the example shown in Fig. 9, the scene of scene number 1 (i.e., the scene "exterior of restaurant") consists of two cuts: the cut number "1" is assigned to the first cut, and the cut number "2" is assigned to the second cut. Accordingly, the cut number can also be information indicating the order of cuts. In the "cut tide", the title of a cut is indicated. In the example shown in Fig. 9, the title "entire restaurant" or "entrance of restaurant" is indicated. The cut title functions as information for providing instructions about the cut to be photographed (i.e., corresponds to the scenario indicating the cut configuration). Accordingly, it is preferable that the cut title be specific enough for the cameraman to specify the object to be photographed. The column "cut instructions" may contain, for example, an item "cut instruction description" for giving more detailed instructions about the cut.

In the column "cut notes", a person in charge of the filming section inputs program filming situation information at the cut level. In the column "cut notes", an item, for example, "cut note description: [Dsc]", is provided.

In the "cut note description", for example, notes on the filming/photographing situations at the cut level are indicated. More specifically, information concerning, for example, messages, notes, and suggestions on the points recognized by the person in charge at the cut level, features and impressions of filmed cuts, and incidents occurred during the cut filming operations, are mainly indicated.

In the column "clip associating information", for example, the filming terminal device 13 and the editing terminal device 16 input clip associating information. In the column "clip associating information", items, such as "take data ("clip number", "In point", and "Out point"), "OK/NG", "video file name", "low-resolution file name", and "clip metadata file name", are provided.

In the "take data", items, such as "clip number", "In point", and "Out point", are provided.

In the "clip number", the unique number assigned to each clip is indicated. Every time a new clip is executed by the filming section, the clip number is sequentially assigned to the new clip regardless of the scenario intended by the planning section. In principle, therefore, the same clip number is not used for different clips. The clip number also serves as an ID assigned to each video material (video content data in units of clips), i.e., a UMID (Unique Material ID). In this manner, by assigning a clip number to a video material regardless of the scenario, the scenario and the video materials can be separated. Also, the same clip number is not assigned even between a plurality of video programs, and thus, the scenario and video materials can be completely separated. The clip numbers are automatically generated and input by, for example, the imaging device 14.

In the "In point" and "Out point", a time code of the editing start position (In point) and a time code of the editing end point (Out point), respectively, determined in the editing operation are input. If the time code is input as, for example, "09:43:52:01", it means "the first frame at 52 seconds, 43 minutes, 9 o'clock". The In-point/Out-point information indicates a range of a required portion extracted from the clip video content data, i.e., an example of information concerning an effective range used for a video program. The In-point/Out-point information may contain not only time codes, but also date information.

In "OK/NG", "OK" or "NG" is input. When "OK" is input, the video content data of a clip (take) is to be selected. When "NG" is input, the video content data of the clip (take) is not selected. When a plurality of clips are associated with one cut, in principle, only one clip is set to be "OK", and the other clips are set to be "NG". In this manner, the OK/NG information serves as information for selecting one clip from plural of clips associated with a cut. The OK/NG information is input manually or automatically by, for example, the imaging device 14 or the field PC 15. "Keep (undecided)" for keeping "OK" or "NG" undecided may be input.

If none of "OK", "NG", and "Keep (undecided)" is set in any take in one cut, the head take is selected as the cut.

In the "video file name", a file name in which the original image of a clip is recorded is input. In the video file name, as in the clip number, a file name unique to each video material is assigned regardless of the scenario. The video file name serves as information indicating the address of the original image of the clip associated with a cut. The video file name is input manually or automatically by, for example, the imaging device 14 or the field PC 15.

In the "low-resolution file name", a file name in which the low-resolution image of a clip is recorded is input. In the low-resolution file name, as in the clip number, a file name unique to each video material is assigned regardless of the scenario. The video file name serves as information indicating the address of the low-resolution image of the clip associated with a cut. The low-resolution file name is input manually or automatically by, for example, the imaging device 14 or the field PC 15.

In the "clip metadata file name", the file name of clip metadata corresponding to the clip is input. The clip metadata file name serves as information for associating the cut layer of the program metadata 191 with the clip metadata 192. The dip metadata file name is input manually or automatically by, for example, the imaging device 14 or the field PC 15.

Because of the clip associating information, clips can be dependent on a cut in the program metadata 191. In the example shown in Fig. 7, two clips specified by dip numbers "1" and "2" are linked to the cut (in the topmost column) specified by the program ID: "P2002-10", the episode ID: "A2002-1001", the scene number: "1", and the cut number: "1". In this manner, the dip associating information has the function of linking a cut intended by the planning section with actual video materials obtained by the filming section.

The individual items of the program metadata 191 and the content of the metadata have been described in detail. The items and content of the program metadata 191 are not restricted to the above-described examples, and various items of information concerning the production of a video program, such as instructions concerning filming equipment, production schedules, operation progress, typical still images, and notes on the operations in the other sections, may be input.

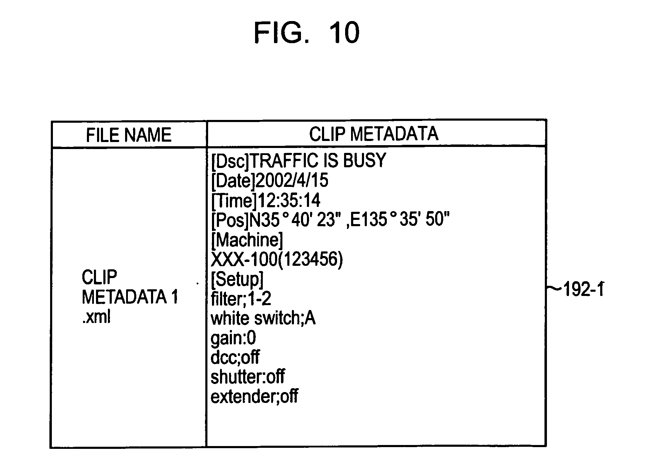

Details of the clip metadata 192 are given below with reference to Figs. 7, 9, and 10. Fig. 10 illustrates an example of details of one clip metadata 192.

The structure of the clip metadata 192 and the relationship with the program metadata 191 are first discussed below.

When video content data of a certain clip is recorded by the imaging device 14, the clip metadata 192 is generated in association with this clip video content data in one-to-one correspondence. That is, new clip metadata 192 is generated every time a clip is filmed. Accordingly, as the number of filmed clips becomes greater, the number of files of the clip metadata 192 generated becomes larger. In the example shown in Fig. 7, since the 15 clips are executed for the 13 cuts, the number of files of clip metadata 192 generated is also 15.

In this manner, the file of the clip metadata 192 is generated for each clip as a file independent of the file of the program metadata 191.

The clip metadata 192 is associated, together with the video content data, with a cut in the cut layer based on the clip associating information (item "clip metadata file name") in the program metadata 191. For example, the clip metadata 192-1 is associated with the cut specified by the program ID: "2002-10", the episode ID: "2002-1001", the scene number: "1", and the cut number: "1". In this case, the clip metadata 192-1 is associated with the cut, together with the video file 1 and the low-resolution file 1. The clip metadata 192-2 is also associated with the same cut. In this manner, two clip metadata 192 can be associated with one cut. Conversely, one clip metadata 192 can be associated with two or more cuts.

The content of the clip metadata 192 is as follows.

The clip metadata 192 includes, for example, clip filming condition information and clip filming situation information. The clip filming condition information is objective metadata concerning clip filming conditions, filming statuses, etc. The clip filming condition information is automatically generated by, for example, the imaging device 14, and is written into the clip metadata 192. The clip filming situation information is subjective metadata concerning the filming situations at the clip filming processing level. The clip filming situation information is generated by, for example, the field PC 15, based on the input from a person in charge of the filming section, and is written into the clip metadata 192.

More specifically, as shown in Fig. 10, in the clip metadata 192, an item, such as "clip note description: [Dsc]", which is the clip filming situation information, and items, such as "date: [Date]", "time: [Time]", "latitude/longitude information: [Pos]", "machine number: [Machine]", and "machine setting information: [Setup]", which are the clip filming condition information, are provided.

In the "clip note description", notes on the filming situations at the clip level are indicated. More specifically, information concerning, for example, messages, notes, and suggestions on the points recognized by the person in charge during the clip filming operations, features and impressions of the dips, incidents occurred during the clip filming operations, and items concerning the clip video content data, are mainly indicated.

In "date", the date when the clip is filmed is input.

In "time", the time when the clip is filmed is input.

In "latitude/longitude information", latitude/longitude information (GPS information) concerning a place where the clip is filmed is input.

In "machine number", the machine number of the imaging device 14 used for filming the clip is input.

In "machine setting information", setting (setup) information concerning the imaging device 14 used for filming the clip is input. The machine setting information includes, for example, the type of camera filter, and the states (on/off, level, etc.) of a white balance switch, a gain switch, a DCC (dynamic contrast control) switch, a shutter switch, and an extender switch.

The clip metadata 192 is formed of metadata concerning clips obtained by the actual filming operation, and does not include metadata concerning the plans and plots of, for example, a scenario. By checking the clip metadata 192, the sections sharing the production of a video program can understand details of the video content data, filming conditions, and machine statuses corresponding to the clip metadata 192. The information of the clip metadata 192 is effective particularly when the video content data is edited by the editing section.

A description is now given of screens to be displayed on an LCD, which serves as the output unit 117 of the field PC 15, by the editing program 151.

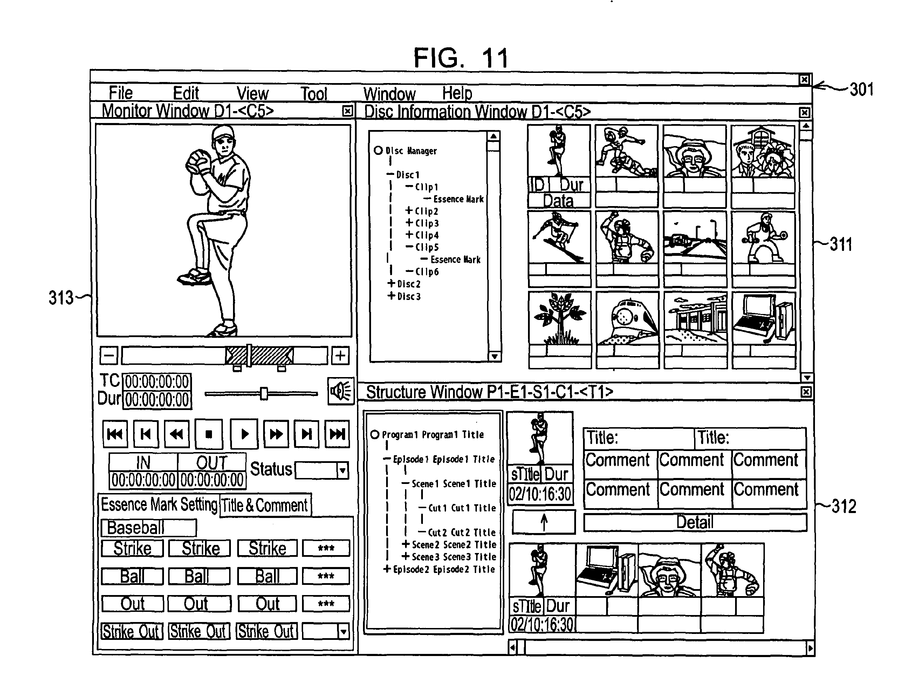

Figs. 11 through 29 illustrate examples of the screens displayed on the LCD, which serves as the output unit 117 of the field PC 15, by the editing program 151. The editing program 151 displays a window 301, which is the display screen as a GUI (Graphical User Interface), on the LCD, which is the output unit 117 of the field PC 15. In this case, the window 301 includes, as shown in Fig. 11, a disc information window 311, a structure window 312, and a monitor window 313.

The display of the disc information window 311, which is a display screen as a GUI, is controlled by the disc information display program 162. The display of the structure window 312, which is a display screen as a GUI, is controlled by the configuration-table setting display program 163. The display of the monitor window 313, which is a display screen as a GUI, is controlled by the disc video monitor program 161.

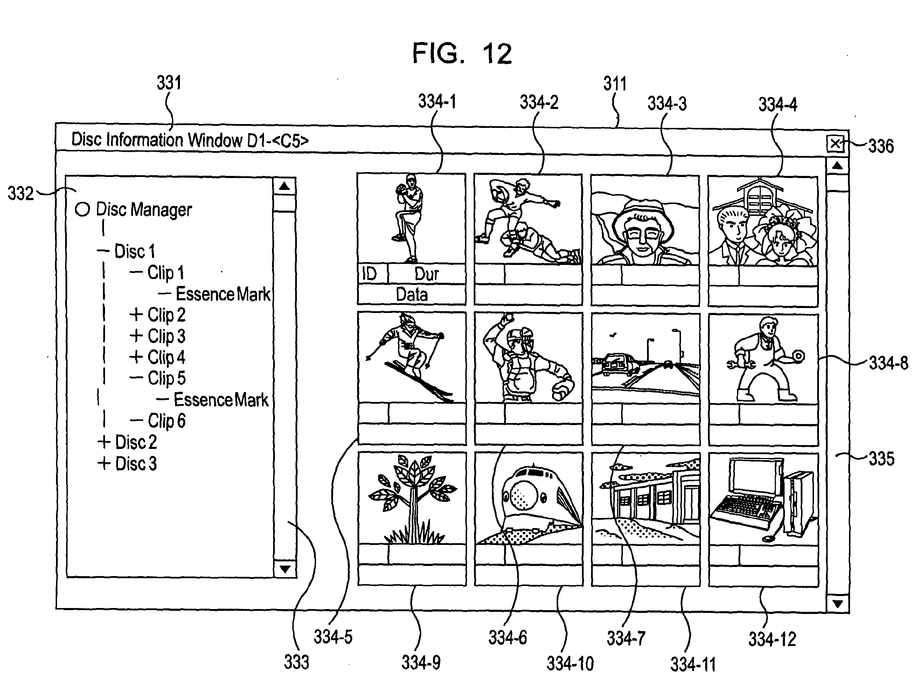

Fig. 12 illustrates the configuration of the disc information window 311. In a title bar 331, the name of the disc information window ("Disc Information Window" in Fig. 12) and the abbreviated name of the selected dip are displayed. For example, when the clip 5 of the disc 1 ("Disc 1" in Fig. 12) is selected, the disc information display program 162 displays "D1-<C5>", which is the abbreviation name of "Disc1" and "Clip5", in the title bar 331.

In a tree display portion 332, the configuration of clips of each optical disc 17 is displayed. For example, when the optical discs 17, which are three Disc1 through Disc3, are used, the disc information tree display program of the disc information display program 162 displays characters or graphics (for example, "Disc Manager" in Fig. 12) indicating the disc information display program 162 in the tree display portion 332, and displays characters or graphics indicating each of the Disc1 through Disc3 at a position of the lower layers of the disc information display program 162. For example, when six clips, i.e., Clip1 through Clip6, are recorded on the optical disc 17, which is Disc1, the disc information tree display program 176 of the disc information display program 162 displays characters or graphics indicating Disc1 in the tree display portion 332, and displays characters or graphics indicating each of the six Clip1 through Clip6 at a position of the lower layer of Disc1.

In this manner, in the tree display portion 332, the relationship between the discs, clips, and essence marks is indicated in a tree structure (hierarchical structure) in which the disc information display program 162 is set as a root, and characters or graphics indicating the discs, characters or graphics indicating the clips, and characters or graphics indicating the essence marks are set as nodes.

When the root, disc, clip, or essence mark is selected in the disc information window 311, the monitor window 313 is displayed in the window 301.

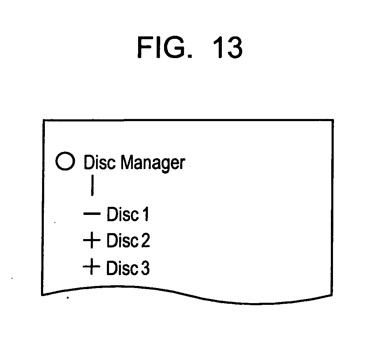

When the characters or graphics (for example, "Disc Manager" in Fig. 12) indicating the disc information display program 162 is clicked and selected in the tree display portion 332, the disc information display program 162 displays, as shown in Fig. 13, characters or graphics indicating each of Disc1 through Disc3 at a position of the lower layer of the disc information display program 162 in the tree display portion 332, and cancels the display of the layers lower than the disc.

"Clicking" is an operation for pressing the left button of the mouse, which serves as the input unit 118, and releasing the button. The user gives instructions to the editing program 151 by performing operations, such as "clicking", "double clicking", or "dragging".

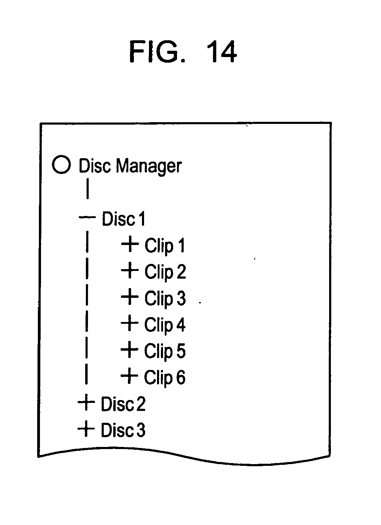

When the characters or graphics indicating Disc1 are clicked and selected in the tree display portion 332, the disc information display program 162 displays, as shown in Fig. 14, characters or graphics indicating each of Clip1 through Clip6 at a position of the lower layer of Disc1 in the tree display portion 332.

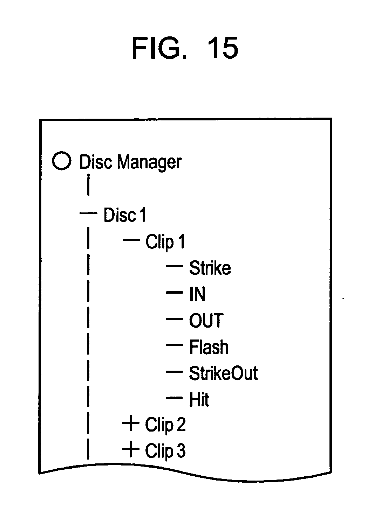

When the characters or graphics indicating Clip1 are clicked and selected in the tree display portion 332, the disc information display program 162 displays, as shown in Fig. 15, characters or graphics indicating the essence marks at a position of the lower layer of Clip1 in the tree display portion 332.

Referring back to Fig. 12, when a scroll bar 333 is operated, the disc information tree display program 176 of the disc information display program 162 allows the display of the tree display portion 332 to be scrolled.

In thumbnail display portions 334-1 through 334-12, thumbnails of typical images of the discs, typical image of the clips, or images (for example, frame images) in which (at a time when) essence marks are set are displayed. For example, when one clip is selected in the tree display portion 32, the thumbnail/list display program 177 of the disc information display program 162 displays thumbnails of the images in which essence marks are set in the thumbnail display portions 334-1 through 334-12. For example, when one clip is selected in the tree display portion 332, the thumbnail/list display program 177 of the disc information display program 162 displays thumbnails of the images in which essence marks, which are key frames, are set in the thumbnail display portions 334-1 through 334-12.

The thumbnail display portions 334-1 through 334-12 are simply referred to as the "thumbnail display portion 334 when they do not have to be individually distinguished.

When one of the thumbnail display portions 334-1 through 334-12 is clicked and selected and when a typical-image setting command is executed from a menu, the disc information display program 162 sets the image of the selected one of the thumbnail display portion 334-1 through 334-12 to the typical image. For example, when one of the thumbnail display portions 334-1 through 334-12 indicating the thumbnails of the images in which essence marks are set is clicked and selected and when the typical-image setting command is executed from the menu, the disc information display program 162 sets the thumbnail of the image in which an essence mark is set displayed in the selected one of the thumbnail display portions 334-1 through 334-12 to be the typical image of the clip.

For example, when one of the thumbnail display portions 334-1 through 334-12 indicating the typical images of the clip is clicked and selected and when the typical-image setting command is executed from the menu, the disc information display program 162 sets the typical image of the clip displayed in the selected one of the thumbnail display portions 334-1 through 334-12 to be the typical image of the disc.

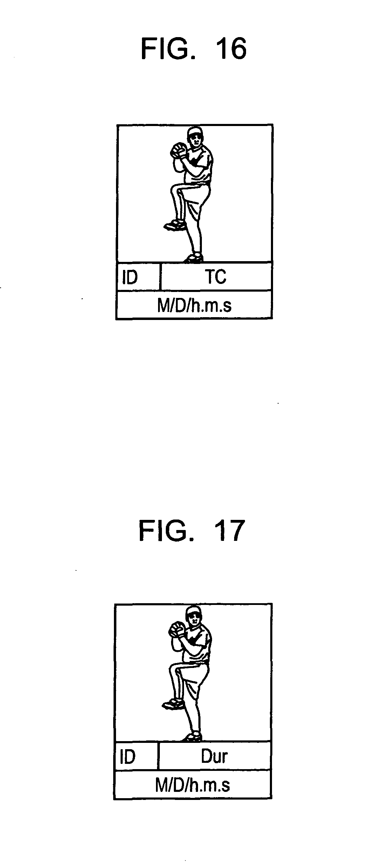

When one clip with an essence mark is selected, the additional-information display program 178 displays, as shown in Fig. 16, the disc ID (IDentifier), the time count (TC: Time Count) indicating the time on the image at which an essence mark is set, and the time and date at which the filming of the clip was started (month, day, hour, minute, and second) in the thumbnail display portion 334.

When one clip without an essence mark is selected, the additional-information display program 178 displays, as shown in Fig. 17, the disc ID (IDentifier), the clip duration (Dur: Duration), and the time and date (month, day, hour, minute, and second) at which the clip was filmed in the thumbnail display portion 334.

In the thumbnail display portion 334, the time count is displayed in a color different from the color of the Duration; for example, the color of the characters, the color of the background, or the frame is changed. This enables the user to recognize at one glance whether the time count or the duration is indicated in the thumbnail display portion 334.

Referring back to Fig. 12, when a scroll bar 335 is operated, the thumbnail/list display program 177 of the disc information display program 162 allows the display of the thumbnail display portions 334-1 through 334-12 to be scrolled.

When a button 336 is clicked, the disc information display program 162 closes the disc information window 311.

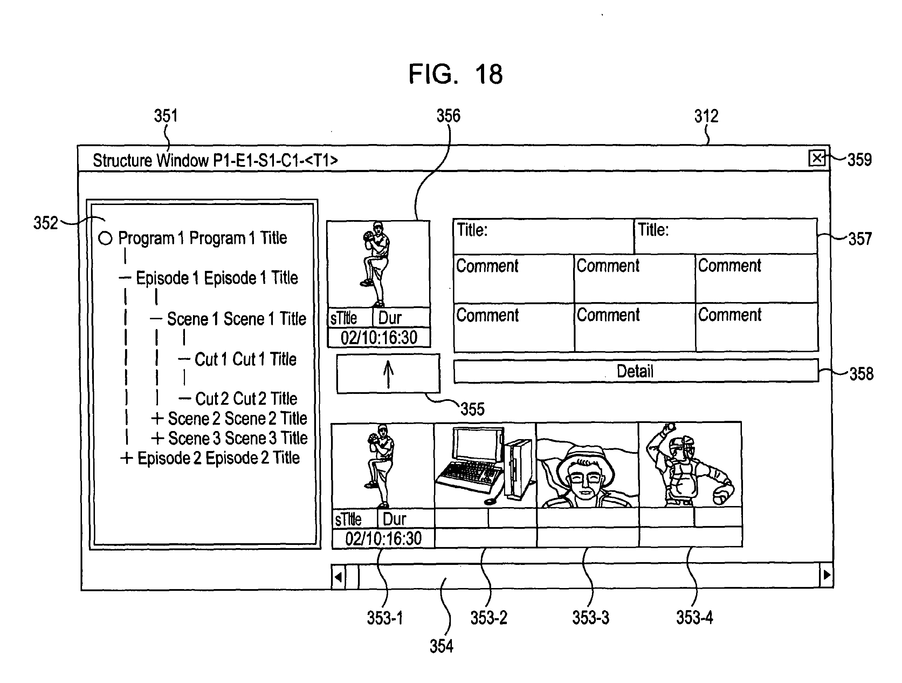

Fig. 18 illustrates the configuration of the structure window 312. In a title bar 351, the name of the structure window ("Structure Window" in Fig. 18) and the abbreviated name of the selected clip are displayed. For example, when take1 of cut1 ("Cut1" in Fig. 18) of scene1 ("Scene1" in Fig. 18) of episode1 ("Episode1 in Fig. 18) of program1 ("Program1" in Fig. 18) is selected, the configuration-table display program 163 displays "P1-E1-S1-C1-<T1>", which is the abbreviation name of "Program1", "Episode1", "Scene1", "Cut1", and "Take1" in the title bar 351.

In a configuration-table tree display portion 352, the configuration of the configuration table is displayed based on the configuration table metadata. For example, the configuration-table tree display program 179 of the configuration-table setting display program 163 displays characters or graphics indicating the program (for example, "Program1" in Fig. 18) in the configuration-table tree display portion 352, displays characters or graphics indicating the episode (for example, "Episode1" or "Episode2" in Fig. 18) at a position of the lower layer of the program, displays characters or graphics indicating the scenes (for example, "Scene1" through "Scene3" in Fig. 18) at a position of the lower layer of the episode, and displays characters or graphics indicating the cut (for example, "Cut1" or "Cut2" in Fig. 18) at a position of the lower layer of the scene.

In this manner, in the configuration-table tree display portion 352, the hierarchical relationship between the program, episodes, scenes, cuts, and takes are indicated in a tree structure (hierarchical structure) in which the characters or graphics indicating the configuration-table tree display program 179 are set as a root, and the characters or graphics indicating the program, characters or graphics indicating the episodes, the characters or graphics indicating the scenes, the characters or graphics indicating the cuts, and the characters or graphics indicating the takes are set as nodes.

The configuration-table tree display program 179 of the configuration-table setting display program 163 displays, in the configuration-tree display portion 352, the title of the program (for example, "Program Title" in Fig. 18) corresponding to the characters or graphics of the program in the configuration-table tree display portion 352, and displays the title of the episode (for example, "Episode Title" in Fig. 18) corresponding to the characters or graphics of the episode. The configuration-table tree display program 179 of the configuration-table setting display program 163 also displays, in the configuration-tree display portion 352, the title of the scene (for example, "Scene1 Title" in Fig. 18) corresponding to the characters or graphics indicating the scene in the configuration-table tree display portion 352, and displays the title of the cut (for example, "Cut1 Title" in Fig. 18) corresponding to the characters or graphics indicating the cut.

The thumbnail (storyboard) display program 182 displays, in thumbnail display portions 353-1 through 353-4, thumbnails of the images of the episodes, typical images of the episodes, thumbnails of the images of the scenes, typical images of the scenes, thumbnails of the images of the cuts, typical images of the cuts, and thumbnails of the images (for example, frames) in which (at a time on the image) essence marks are set. For example, when an episode is selected in the configuration-table tree display portion 352, the thumbnails of the images of the scenes lower than (as a child of) the selected episode or the typical images of the episode are displayed in the thumbnail display portions 353-1 through 353-4.

Here, a child means an episode belonging to a program, a scene belonging to an episode, a cut belonging to a scene, or a take belonging to a cut. Conversely, a cut to which a take belongs, a scene to which a cut belongs, an episode to which a scene belongs, or a program to which an episode belongs is referred to as a "parent".

When a scroll bar 354 is operated, the thumbnail (storyboard) display program 182 allows the display of the thumbnail display portions 353-1 through 353-4 to be scrolled.

The typical-image setting display program 181 displays a typical image of the program, episode, scene, cut, or take selected in the configuration-table tree display portion 352 in a typical image display portion 356. When one of the thumbnails or typical images displayed in the thumbnail display portions 353-1 through 353-4 is selected and when a button 355 is clicked, the typical-image setting display program 181 sets the thumbnail or typical image selected in the thumbnail display portions 353-1 through 353-4 to be the typical image of the program, episode, scene, cut, or take selected in the configuration-table tree display portion 352. That is, when a thumbnail or typical image displayed in the thumbnail display portions 353-1 through 353-4 is selected and when the button 355 is clicked, the typical-image setting display program 181 sets the thumbnail or typical image selected in the thumbnail display portions 353-1 through 353-4 to be the typical image of the parent of the selected thumbnail or typical image.

When a thumbnail or typical image displayed in the thumbnail display portions 353-1 through 353-4 is dragged and dropped into the typical image display portion 356, the typical-image setting display program 181 sets the thumbnail or typical image dragged and dropped from the thumbnail display portions 353-1 through 353-4 to be the typical image of the parent of the thumbnail or typical image displayed in the thumbnail display portions 353-1 through 353-4.

With this arrangement, the typical image can easily be set.

When the typical image of a take is selected and set to be the typical image of a cut, the selected take is used as the cut.

In an additional-information display portion 357, information concerning the program, episode, scene, cut, or take selected in the configuration-table tree display portion 352 is indicated. For example, when a cut is selected in the configuration-table tree display portion 352, the additional-information display program 180 displays general information, such as the title, concerning the selected cut in the additional-information display portion 357. Additionally, when a cut is selected in the configuration-table tree display portion 352 and when the title or comments is input into the additional-information display portion 357, the video editing program 183 sets the input title or comments in the selected cut.

When a detail button 358 is clicked, the additional-information display program 180 displays another information concerning the program, episode, scene, cut, or take selected in the configuration-table tree display portion 352. In this case, the additional-information display program 180 may display the information in the additional-information display portion 357 or may open another window to display the information in the window.

When a button 359 is clicked, the configuration-table setting display program 163 closes the structure window 312.

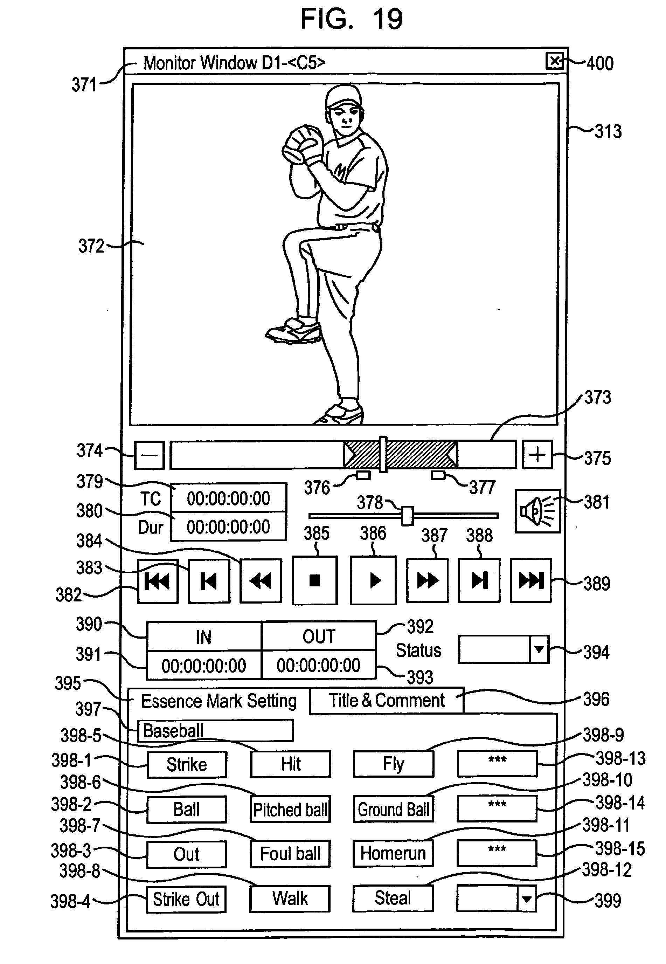

Fig. 19 illustrates the configuration of the monitor window 313. In a title bar 371, the name of the monitor window ("Monitor Window" in Fig. 19) and the abbreviation name of a selected clip are indicated. For example, when clip5 of disc1 is selected, the disc video monitor program 161 displays "D1-<C5>", which is the abbreviation name of the "Disc1" and "Clip5", in the title bar 371. The disc video monitor program 161 may display the full title (for example, "Disc1-Clip5") instead of the abbreviation name.

In an image display portion 372, a still image or a moving picture is displayed based on the video data of the video content data. For example, when a typical image or thumbnail displayed in the thumbnail display portions 334-1 through 334-12 of the disc information window 311 is clicked, the video display program 172 of the disc video monitor program 161 displays the first frame of the video data (video data read from a file referred to as C001V1.MXF) corresponding to the clicked typical image or thumbnail in the image display portion 372 based on the video data.

Alternatively, when a typical image or thumbnail displayed in the typical image display portion 356 or the thumbnail display portions 353-1 through 353-4 of the structure window 312 is clicked, the video display program 172 may display the image of the first frame of the video data corresponding to the clicked typical image or thumbnail based on the video data.

When, for example, the thumbnail of an image with an essence mark displayed in one of the thumbnail display portions 334-1 through 334-12 of the disc information window 311 is clicked, the video display program 172 displays the image (frame) with an essence mark in the image display portion 372 based on the essence mark and the video data.

For example, when one of the thumbnail display portions 334-1 through 334-12 indicating the thumbnails of images with essence marks is double-clicked, the video display program 172 displays, in the image display portion 372, the first frame of the clip with an essence mark corresponding to the selected one of the thumbnail display portions 334-1 through 334-12.

When a position bar 373 is operated, the video display program 172 displays an image corresponding to the operation in the image display portion 372 based on the video data. The position bar 373 includes a frame control button 374, a frame control button 375, an essence marker 376, and an essence marker 377.

When the frame control button 374 is clicked, the video display program 172 displays the image of the temporally previous frame in the image display portion 372. When the frame control button 375 is clicked, the video display program 172 displays the image of the temporally subsequent frame in the image display portion 372. When the left button of the mouse is continuously pressed while the pointer is positioned at the frame control button 374 or 375, the image displayed in the image display portion 372 is fast-forwarded or fast-rewound. In this case, the speed may be varied in a range, for example, from 0.5× to 1×, according to the duration in which the mouse button is pressed.

The essence marker 376 or 377 indicates the temporal position of an essence mark on the image set in the clip metadata related to the video content data corresponding to the image displayed in the image display portion 372. That is, the length of the position bar 373 indicates the temporal duration of the image displayed in the image display portion 372; for example, the left end of the position bar 373 indicates the start time of the image, and the right end of the position bar 373 indicates the end time of the image. When a disc is selected, the length of the position bar 373 indicates the total temporal duration of the images of the clips recorded in the selected disc. When a clip is selected, the length of the position bar 373 indicates the total temporal duration of the images of the selected clip.

That is, the horizontal distance in Fig. 19 from the left end of the position bar 373 to the essence marker 376 or 377 indicates the duration from the start time of the image to the time at which an essence mark is set in relation to the duration of the image.

Accordingly, the user can quickly identify the position of an image at which the essence mark is set.

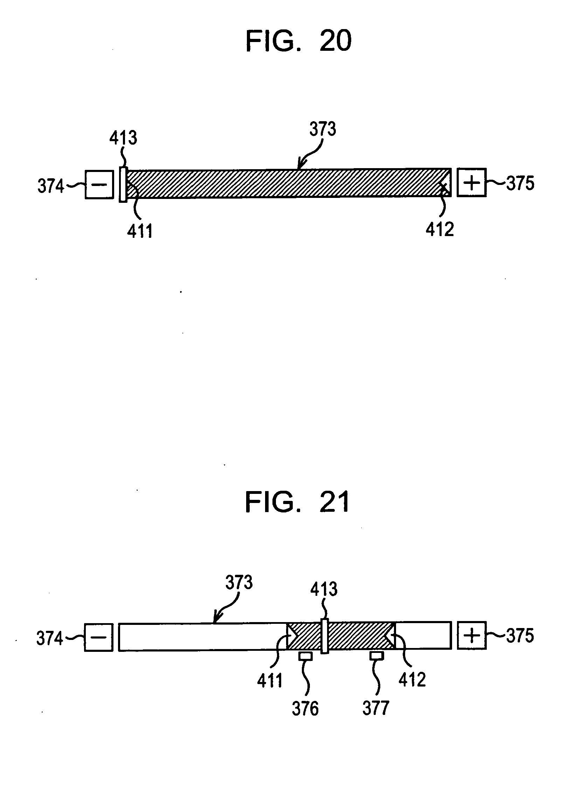

When a clip whose editing start position (In point) and editing end point (Out point) are not set is selected, the video display program 172 disposes, as shown in Fig. 20, an In-point marker 411 indicating the editing start position (In point) at the left end of the position bar 373, and disposes an Out-point marker 412 indicating the editing end position (Out point) at the right end of the position bar 373. The video display program 172 indicates, at the left side of the position bar 373, the temporal position of the image displayed in the image display portion 372 and also displays a slider 413 for adjusting the temporal position of the image displayed in the image display portion 372. That is, in this case, the entire clip is extracted.

The portion between the In-point marker 411 and the Out-point marker 412 is highlighted by being indicated in a color different from the position bar 373.

Hereinafter, the positioning of the In-point marker 411 indicating the editing start position (In point) at the left end of the position bar 373 and the positioning of the Out-point marker 412 indicating the editing end point (Out point) at the right end of the position bar 373 is also referred to as a "100% indication".

When an image is played back and is fast-forwarded or fast-rewound to change the time on an image, the position of the slider 413 on the position bar 373 is moved horizontally. Conversely, when the slider 413 on the position bar 373 is dragged and moved, the image at a time corresponding to the position of the slider 413 on the position bar 373 is displayed in the image display portion 372.

By moving the slider 413 to the position of the essence marker 376 or 377, the image in which an essence mark is set can be quickly displayed.

When a clip whose editing start position (In point) and editing end position (Out point) are set is selected, the video display program 172 disposes, as shown in Fig. 21, the In-point marker 411 at the position corresponding to the time at which the editing start position (In point) on the position bar 373 is set, and also disposes the Out-point marker 412 at the position corresponding to the time at which the editing end position (Out point) on the position bar 373 is set.

When the In-point marker 411 is clicked, the video display program 172 displays the image at a time at which the editing start position (In point) is set in the image display portion 372. When the Out-point marker 412 is clicked, the video display program 172 displays the image at a time at which the editing end position (Out point) is set in the image display portion 372.

The essence marker 376 and the essence marker 377 are displayed in the monitor window 313 by the essence-mark display program 171. The number of essence markers 376 and 377 is not restricted to two. The essence-mark display program 171 displays, near the position bar 373 of the monitor window 313, the same number of essence markers as the essence markers set in the clip metadata related to the video content data of the image displayed in the image display portion 372.

Referring back to Fig. 19, when a shuttle bar 378 is moved, the video display program 172 controls the playback speed of the image displayed in the image display portion 372. For example, the slider (the squared portion in Fig. 19) of the shuttle bar 378 is normally positioned at the center of the shuttle bar 378. When the slider is positioned at the center, the video display program 172 displays a still image in the image display portion 372. When the slider is dragged and moved toward the left side, the video display program 172 displays, in the image display portion 372, the image (reverse-playback image) in the temporally backward direction (toward the past) in accordance with the amount of movement from the center. When the slider is dragged and moved toward the right side, the video display program 172 displays, in the image display portion 372, the image in the temporally forward direction (toward the future) in accordance with the amount of movement from the center.

The video display program 172 displays a time count in a TC display portion 379. That is, the video display program 172 displays, in the TC display portion 379, the time of the image displayed in the image display portion 372.

The video display program 172 displays the time in a duration display portion 380. When, for example, a disc, is selected in the disc information window 311, the video display program 172 displays the time length of the selected disc in the duration display portion 380. When, for example, a disc, is selected in the disc information window 311, the video display program 172 displays the length of the images recorded on the selected disc in the duration display portion 380.

When, for example, a clip, is selected in the disc information window 311, the video display program 172 displays the length of the images of the selected clip in the duration display portion 380. When, for example, an essence mark, is selected in the disc information window 311, the video display program 172 indicates "0" in the duration display portion 380.

When an audio button 381 is clicked, the video display program 172 opens (displays) an audio channel setting window for controlling the output of sound.

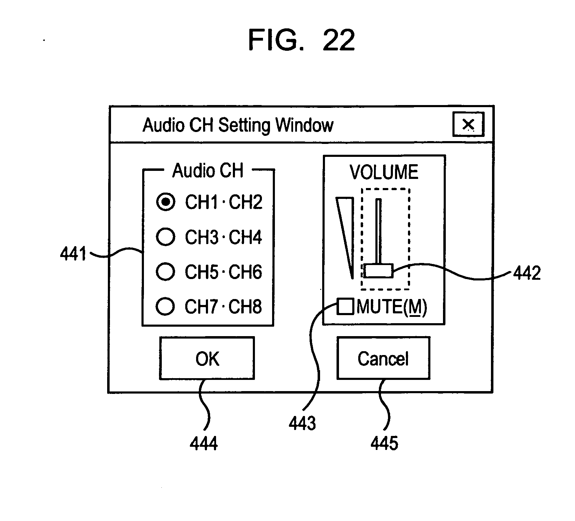

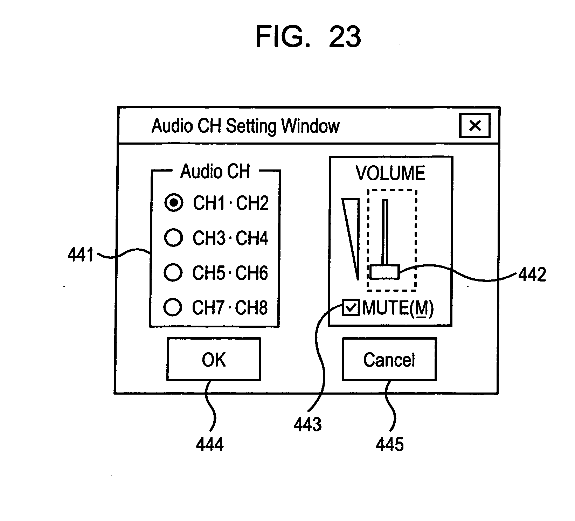

Figs. 22 and 23 illustrate examples of the audio channel setting window. A radio button 441 is a button for selecting audio data in stereo. When a slider 442 is dragged and vertically moved, the video display program 172 adjusts the level (gain) of an audio signal to be output in accordance with the position of the slider 442. When a check box 443 is checked, as shown in Fig. 23, the video display program 172 does not output an audio signal.

When an OK button 444 is clicked, the video display program 172 determines settings for sound in accordance with the operation of the audio channel setting window, and closes the audio channel setting window. On the other hand, when a cancel button 445 is clicked, the video display program 172 discards settings for sound in accordance with the operation of the audio channel setting window, and returns to the settings for sound before opening the audio channel setting window, and then closes the audio channel setting window.

Referring back to Fig. 19, when one of a TOP button 382 through an END button 389, which are control buttons, is clicked, the video display program 172 controls an image displayed in the image display portion 372. When the TOP button 382 is clicked, the video display program 172 displays the first frame of a clip in the image display portion 372. When a SKIP button 383 is clicked, the video display program 172 displays an image of the previous clip in the image display portion 372. When a REW button 384 is clicked, the video display program 172 fast-rewind plays back images of a clip and displays the played back images in the image display portion 372. When a STOP button 385 is clicked, the video display program 172 stops playing back moving pictures and displays a still image at a time when the playback operation is stopped in the image display portion 372. When the STOP button 385 is double-clicked, the video display program 172 stops playing back moving pictures and displays the first frame of the selected clip in the image display portion 372.

When a PLAY button 386 is clicked, the video display program 172 starts playing back moving pictures and displays the played back pictures in the image display portion 372. When the PLAY button 386 is clicked while, for example, a disc, is being selected, the video display program 172 plays back the images of all clips contained in the selected disc, and displays the played back images in the image display portion 372. When the PLAY button 386 is clicked while, for example, a clip, is being selected, the video display program 172 plays back the images of the selected clip and displays the played back images in the image display portion 372.

When an FF button 387 is clicked, the video display program 172 fast-forward plays back the images of a clip and displays the played back images in the image display portion 372. When a SKIP button 388 is clicked, the video display program 172 displays the images of the subsequent clip in the image display portion 372. When the END button 389 is clicked, the video display program 172 displays the final frame of the clip in the image display portion 372.

When an entry-in button 390 is clicked, the video editing program 173 sets the editing start position (In point) in the frame displayed in the image display portion 372 by the video display program 372. The video editing program 173 displays the time (TC) on the image at the set editing start position (In point) in a TC display portion 391. That is, when the entry-in button 390 is clicked, the In-point marker 411 is moved to the position of the slider 413.

When an entry-out button 392 is clicked, the video editing program 173 sets the editing end position (Out point) in the frame displayed in the image display portion 372 by the video display program 172. The video editing program 173 displays the time (TC) on the image at the set editing end position (Out point) in the TC display portion 393. That is, when the entry-out button 392 is clicked, the Out-point marker 412 is moved to the position of the slider 413.

A combo box 394 is a box for setting the status of a clip (take). When the combo box 394 is clicked, a pull-down menu consisting of blank (space), "OK", "NG", and "KP" (Keep) appears, and one of the blank (space), "OK", "NG", and "KP" is highlighted and selected. Then, the video editing program 173 inputs one of the blank (space), "OK", "NG", and "KP" as the status of the clip (take).

When "OK" is input into the combo box 394, the video editing program 173 uses the video content data of the clip (take). When "NG" is input into the combo box 394, the video editing program 173 does not use the video content data of the clip (take). When "KP" (keep) is input into the combo box 394, the video editing program 173 sets data indicating that it is undecided whether to use the video content data of the clip (take).

Before performing the editing operation, the blank (space) is set, in which case, the blank (space) is left in the combo box 394.

The disc video monitor program 161 sets the selected typical image of a take as the typical image of a cut.

When an essence-mark setting tab 395 is clicked, the essence-mark input program 175 of the disc image monitor program 161 displays a text box 397, essence-mark setting buttons 398-1 through 398-15, and an essence-mark setting combo box 399. When a title setting tab 396 is double-clicked, the title setting program 174 of the disc video monitor program 161 displays a text box for setting a title or comments, which is described below.

The essence-mark input program 175 displays the genre of images using essence marks set in the essence-mark setting buttons 398-1 through 398-15 in the text box 397.

The essence-mark input program 175 changes the essence marks set in the essence-mark setting buttons 398-1 through 398-15 according to the genre input into the text box 397. The genre can be set by, for example, a pull-down menu.

When the genre, for example, the baseball, is selected, the essence-mark input program 175 displays, in the monitor window 313, the essence-mark setting buttons 398-1 through 398-15 for setting essence marks, such as strike, ball, out, and strikeout, in images. When the genre, for example, the football, is selected, the essence-mark input program 175 displays, in the monitor window 313, the essence-mark setting buttons 398-1 through 398-15 for setting essence marks, such as goal, corner kick, and yellow card, in images.

When one of the essence-mark setting buttons 398-1 through 398-15 is clicked, the essence-mark input program 175 sets an essence mark in the frame displayed in the image display portion 372 by the video display program 172. More specifically, when one of the essence-mark setting buttons 398-1 through 398-15 is clicked, the essence-mark input program 175 sets the frame displayed in the image display portion 372 in the clip metadata related to the video content data displayed in the image display portion 372 by the video display program 172, and also sets an essence mark, which is digital mark data, indicating the features of the image or sound.

When the essence-mark setting button 398-1 is clicked while the genre, for example, the baseball, is being selected, the essence-mark input program 175 sets an essence mark indicating "strike" in the frame displayed in the image display portion 372 by the video display program 172. When the essence-mark setting button 398-2 is clicked while the genre, for example, the baseball, is being selected, the essence-mark input program 175 sets an essence mark indicating "ball" in the frame displayed in the image display portion 372 by the video display program 172.

When the essence-mark setting button 398-1 is clicked while the genre, for example, the football, is being selected, the essence-mark input program 175 sets an essence mark indicating "goal" in the frame displayed in the image display portion 372 by the video display program 172. When the essence-mark setting button 398-2 is clicked while the genre, for example, the football, is being selected, the essence-mark input program 175 sets an essence mark indicating "offside" in the frame displayed in the image display portion 372 by the video display program 172.

Accordingly, essence marks can be simply and quickly set by the essence-mark setting buttons 398-1 through 398-15. Since different essence marks can be set in the essence-mark setting buttons 398-1 through 398-15 according to the genre, desired essence marks can be simply and quickly set.

Hereinafter, the essence-mark setting buttons 398-1 through 398-15 are simply referred to as the "essence-mark setting button 398" unless they have to be individually distinguished.

The combo box 399 is a box for setting essence marks which are less frequently used. When the combo box 399 is clicked, a pull-down menu consisting of less frequently used essence marks appears. By highlighting and selecting one of the pulled-down essence marks, the essence-mark input program 175 sets the selected essence mark in the image.

When a button 400 is clicked, the disc video monitor program 161 closes the monitor window 313.

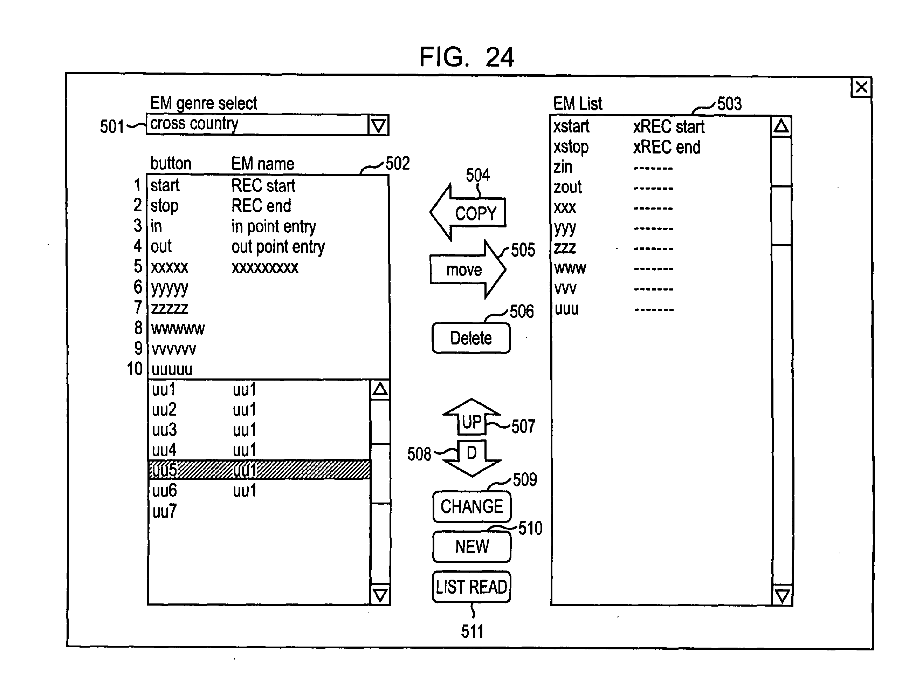

Fig. 24 illustrates an example of a window according to the genre for changing the essence mark which is set when the essence-mark setting button 398 is clicked. The window shown in Fig. 24 is opened by executing a menu command.

When a combo box 501 is clicked, the essence-mark list editing program 165 displays a pull-down menu. The essence-mark list editing program 165 highlights a desired genre in the displayed pull-down menu according to the operation by the user, and when the desired genre is clicked, the selected genre can be obtained.

In a list box 502, the essence-mark setting buttons 398 and essence marks to be set are displayed in association with each other. In the example shown in Fig. 24, the essence-mark setting button 398-1 indicating the characters "start" and the essence mark, i.e., "REC start", which is set when the essence-mark setting button 398-1 is clicked, are displayed together in the monitor window 313. In the example shown in Fig. 24, the essence-mark setting button 398-2 indicating the characters "stop" and the essence mark, i.e., "REC end", which is set when the essence-mark setting button 398-2 is clicked, are displayed together in the monitor window 313. The relationship between the essence-mark setting buttons 398 and essence marks to be set is indicated in data, for example, in a table, according to the genre, and is stored in a predetermined file in the hard disk 114.

By displaying a scroll bar for the list box 502, the display of the list box 502 can be vertically scrolled. Only part of the list box 502 can be scrolled, as shown in Fig. 24, according to the operation of the scroll bar for the list box 502. For example, only essence marks concerning the combo box 399 for setting essence marks which are less frequency used can be scrolled.

In a list box 503, essence marks to be set by operating the essence-mark setting buttons 398 of all the genres and characters to be displayed in the essence-mark setting buttons 398 are displayed in association with each other. Information concerning the essence marks displayed in the list box 503 is indicated in data, for example, in a table, separately from the data of the essence marks of each genre, and is stored in a predetermined file in the hard disk 114.

It is now assumed that information concerning a desired essence mark is selected from the list box 503 and that one of the essence-mark setting buttons 398 in the list box 502 is selected. In this case, when a copy button 504 is clicked, the essence-mark list editing program 165 copies the information concerning the essence mark selected in the list box 503 into the essence-mark setting button 398 selected in the list box 502.

It is now assumed, for example, that information concerning the essence mark consisting of "xstart" and "xRECstart" is selected and that the essence-mark setting button 398-1 for setting the essence mark, i.e., "REC start", is selected by displaying and clicking the characters "start" in the list box 502. In this case, when the copy button 504 is clicked, the essence-mark list editing program 165 sets information concerning the essence mark in the essence-mark setting button 398-1 so that the essence mark "xRECstart" can be set when the characters "xstart" are displayed and clicked.

When a move button 505 is clicked while the essence-mark setting button 398 in the list box 502 is being selected, the essence-mark list editing program 165 moves (returns) information set in the essence-mark setting button 398 selected in the list box 502 to data consisting of information concerning the essence marks for displaying the list box 503.

When a delete button 506 is clicked while one of the essence-mark setting buttons 398 in the list box 502 is being selected or when the information concerning the essence marks is being selected, the essence-mark list editing program 165 deletes the selected information.

When an up-button 507 is clicked while one of the essence-mark setting buttons 398 in the list box 502 is being selected, the essence-mark list editing program 165 moves up the order of the selected essence-mark setting button 398. For example, when the up-button 507 is clicked while the essence-mark setting button 398-4 is being selected, the essence-mark list editing program 165 moves the information concerning the essence-mark setting button 398-4 to the essence-mark setting button 398-3, and also moves the information concerning the essence-mark setting button 398-3 before being moved to the essence-mark setting button 398-4.

When a down-button 508 is clicked while one of the essence-mark setting buttons 398 in the list box 502 is being selected, the essence-mark list editing program 165 moves down the order of the selected essence-mark setting button 398. For example, when the down-button 508 is clicked while the essence-mark setting button 398-4 is being selected, the essence-mark list editing program 165 moves the information concerning the essence-mark setting button 398-4 to the essence-mark setting button 398-5, and also moves the information concerning the essence-mark setting button 398-5 before being moved to the essence-mark setting button 398-4.

Accordingly, characters indicating the essence-mark setting button 398 and an essence mark to be set by clicking the essence-mark setting button 398 can be easily changed.

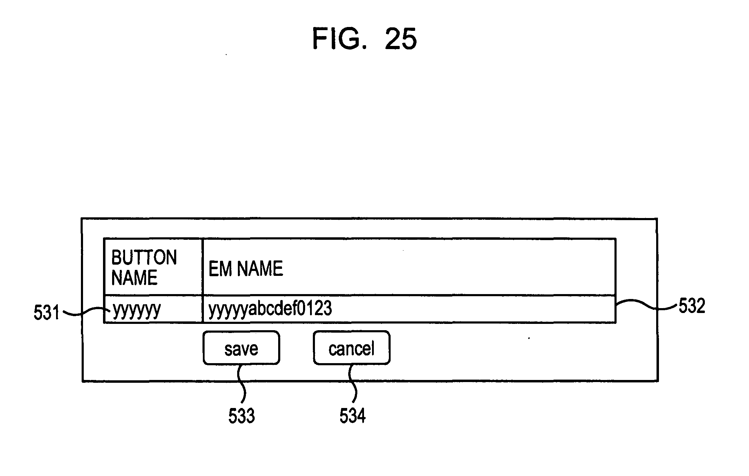

When a change button 509 is clicked while one of the essence-mark setting buttons 398 in the list box 502 is being selected or while information concerning the essence mark is being selected from the list box 503, the essence-mark list editing program 165 displays a window, such as that shown in Fig. 25. Text indicated in the essence-mark display button 398 is displayed in a button-name text box 531 of the window shown in Fig. 25, and text, which is the essence mark, is displayed in an essence-mark-name text box 532. The text in the button-name text box 531 and the text in the essence-mark-name text box 532 can be changed.

When the text in the button-name text box 531 is changed or when the text in the essence-mark-name text box 532 is changed, and when a save button 533 is clicked, the essence-mark list editing program 165 saves the changed text in the button-name text box 531 or the changed text in the essence-mark-name text box 532, and then closes the window shown in Fig. 25. That is, the essence-mark list editing program 165 writes the changed text in the button-name text box 531 or the changed text in the essence-mark-name text box 532 into a predetermined file.

When a cancel button 534 is clicked, the essence-mark list editing program 165 closes the window shown in Fig. 25 without writing the changed text in the button-name text box 531 or the changed text in the essence-mark-name text box 532 into the predetermined file. That is, in this case, the text displayed in the essence-mark setting button 398 and the text, which is an essence mark, are not changed.

When a new button 510 is clicked, the essence-mark list editing program 165 displays a window, such as that shown in Fig. 25. In this case, the button-name text box 531 and the essence-mark-name text box 532 are made blank. When the text in the button-name text box 531 or the text in the essence-mark-name text box 532 is input, and when the save button 533 is clicked, the essence-mark list editing program 165 saves the changed text in the button-name text box 531 or the changed text in the essence-mark-name text box 532 and then closes the window shown in Fig. 25.

When a list read button 511 is clicked, the essence-mark list editing program 165 reads information consisting of button name text and essence mark text from a list, which is a specified file, and displays the information in the list box 502 or 503. In this case, the list, which is the specified file, can be a list of each genre or a list to be added in the list box 503.

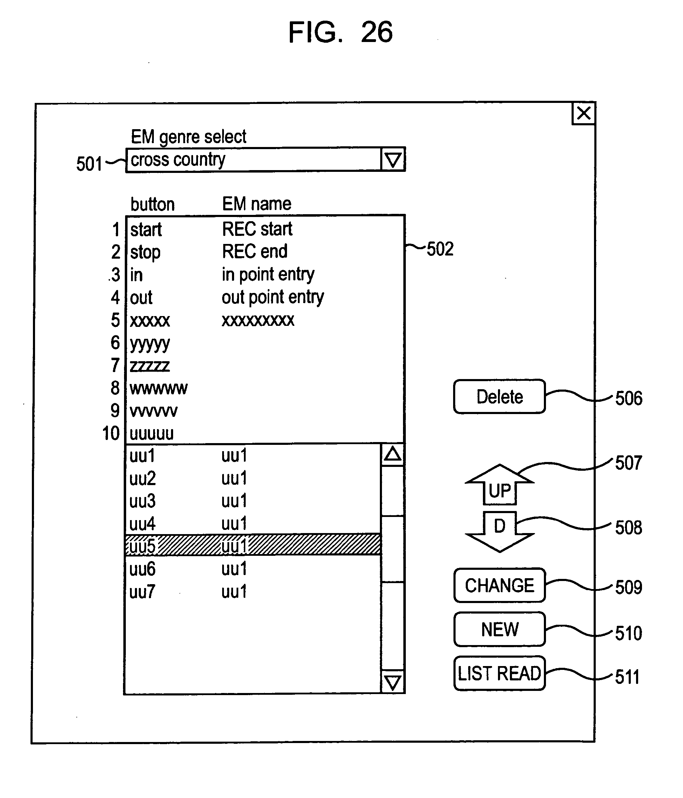

Fig. 26 illustrates another example of the window for each genre for setting essence marks which are set when the essence-mark setting buttons 398 are clicked. The window for setting essence marks shown in Fig. 26 includes the combo box 501, the list box 502, the delete button 506, the up-button 507, the down-button 508, the change button 509, the new button 510, and the list read button 511, and does not include the list box 503, the copy button 504, and the move button 505.

As described above, the window for setting an essence mark when the essence-mark setting button 398 is clicked may be configured more simply.

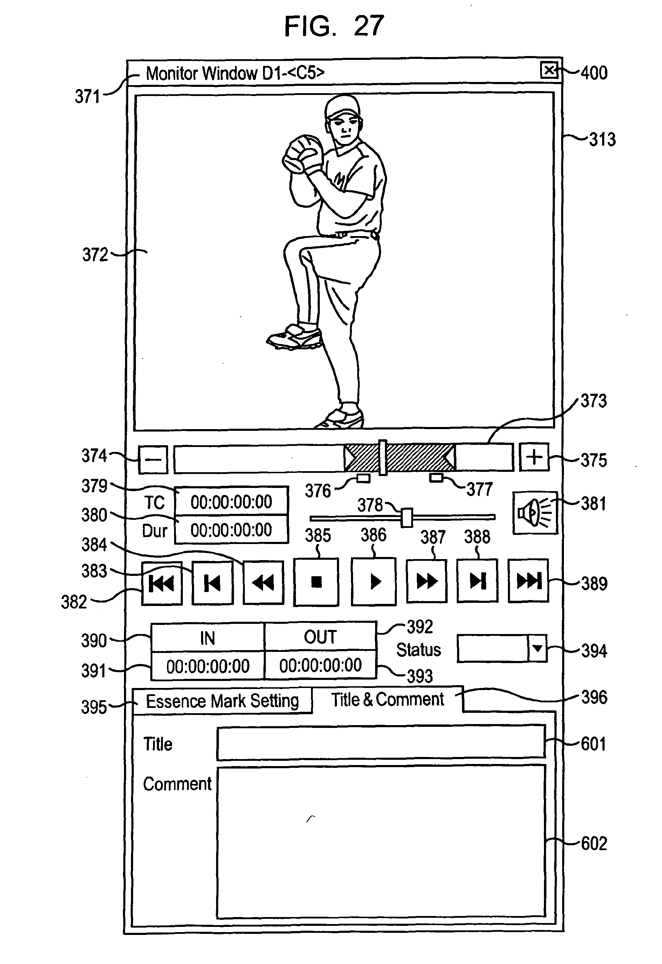

Fig. 27 illustrates the configuration of the monitor window 313 when the title setting tab 396 is clicked. The same portions as those shown in Fig. 19 are designated with the same reference numerals, and an explanation thereof is thus omitted.

When a clip is selected, the title setting program 174 sets text input into a text box 601 as the title of the selected clip. When a clip is selected, the title setting program 174 sets text input into a text box 602 as the comments of the selected clip. The title setting program 174 indicates the title and comments of the clip in the clip metadata.

When a disc is selected, the title setting program 174 sets text input into the text box 601 as the title of the selected disc. When a disc is selected, the title setting program 174 sets text input into the text box 602 as the comments of the selected disc. The title setting program 174 indicates the tide and comments of the disc in the disc metadata.

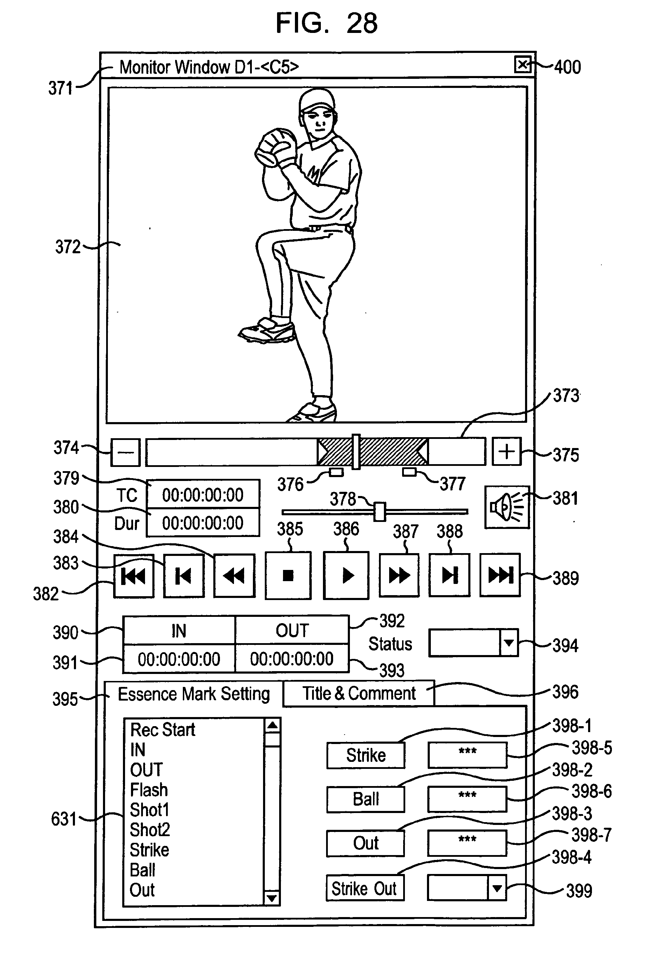

In the monitor window 313, as shown in Fig. 28, instead of the text box 397 for selecting the genre, a list box 631 for selecting the genre may be displayed. In this case, the genre can be more easily and quickly selected.

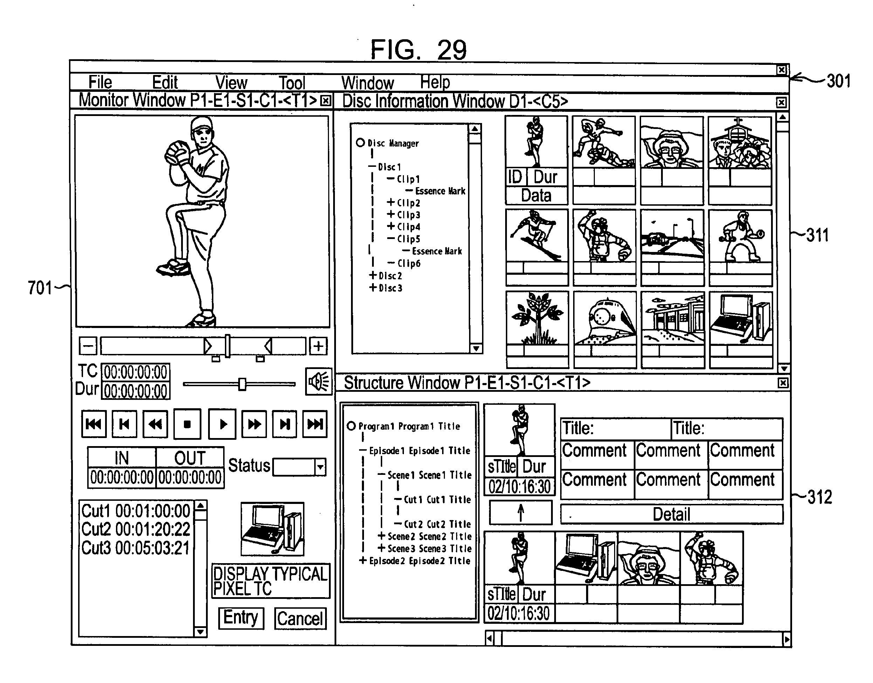

A description is now given of the window 301 when a program, episode, scene, cut, or take is selected in the structure window 312. Fig. 29 illustrates an example of the window 301 when a program, episode, scene, cut, or take is selected in the structure window 312. When a program, episode, scene, cut, or take is selected in the structure window 312, the editing program 151 displays the window 301 consisting of the disc information window 311, the structure window 312, and a monitor window 701, which are display screens as GUIs, on an LCD, which is the output unit 117 of the field PC 15.

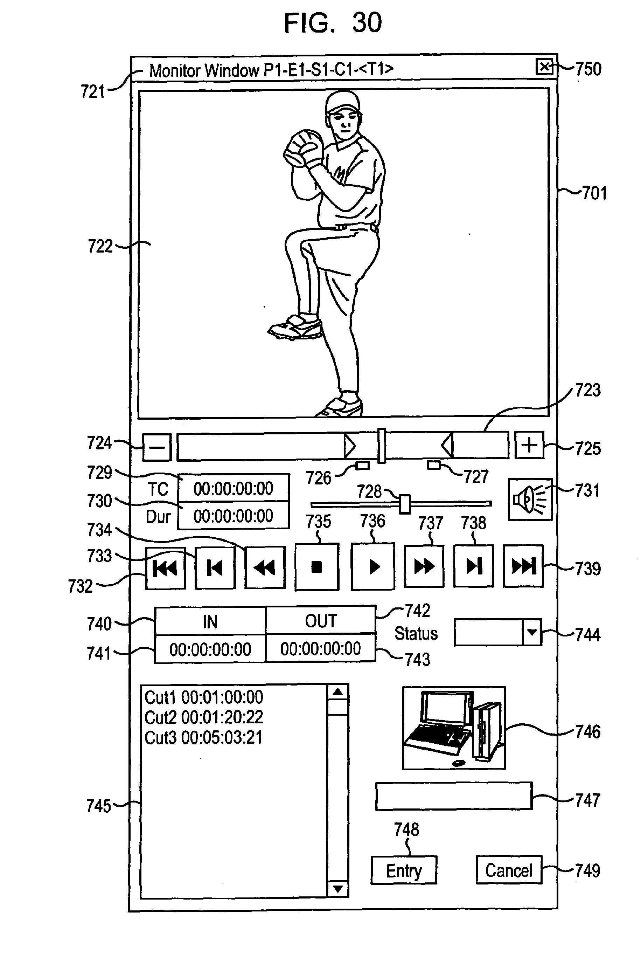

Fig. 30 illustrates the configuration of the monitor window 701 displayed by the configuration-table video monitor program 164. A title bar 721 through a TC display portion 729, au audio button 731, and an entry-in button 740 through a combo box 744 are similar to the title bar 371 through the TC display portion 379, the audio button 381, and the entry-in button 390 through combo box 394, respectively, shown in Fig. 19, and an explanation thereof is thus omitted.

However, instead of the essence-mark display program 171 through the video editing program 173, the essence-mark display program 184 through the typical-image setting display program 188 execute processing. Additionally, the monitor window 701 is different from the monitor window 313 in that the program, episode, scene, cut, or take is displayed in the monitor window 701.

When, for example, a program, is selected in the structure window 312, the video display program 172 displays the time (the length of the time) of the selected program in the duration display portion 380. When, for example, an episode, is selected in the structure window 312, the video display program 172 displays the time (the length of the time) of the selected episode in the duration display portion 380. When, for example, a scene, is selected in the structure window 312, the video display program 172 displays the time (the length of the time) of the selected scene in the duration display portion 380.

When, for example, a cut, is selected in the structure window 312, the video display program 185 displays the time (the length of the time) of the selected cut in the duration display portion 730. When, for example, a take, is selected in the structure window 312, the video display program 185 displays the time (the length of the time) of the selected take in the duration display portion 730.

When one of TOP buttons 732 through END button 739 is clicked, the video display program 185 controls an image to be displayed in an image display portion 722.

When the TOP button 732 is clicked while, for example, a program, is being selected, the video display program 185 displays the first episode of the selected program in the image display portion 722. When the TOP button 732 is clicked while, for example, an episode, is being selected, the video display program 185 displays the first scene of the selected episode in the image display portion 722. When the TOP button 732 is clicked while a scene is being selected, the video display program 185 displays the first cut of the selected scene in the image display portion 722.

When a SKIP button 733 is clicked while, for example, a program, is being selected, the video display program 185 displays the episode before the current episode displayed in the image display portion 722 of the selected program in the image display portion 722. When the SKIP button 733 is clicked while an episode is being selected, the video display program 185 displays the scene before the current scene displayed in the image display portion 722 of the selected episode in the image display portion 722. When the SKIP button 733 is clicked while a scene is being selected, the video display program 185 displays the cut before the current cut displayed in the image display portion 722 of the selected scene in the image display portion 722.

When a REW button 734 is clicked while, for example, a program is being selected, the video display program fast-rewind plays back all the episodes contained in the selected program, and displays the episodes in the image display portion 722. When the REW button 734 is clicked while, for example, an episode, is being selected, the video display program fast-rewind plays back all the scenes contained in the selected episode, and displays the scenes in the image display portion 722. When the REW button 734 is clicked while, for example, a scene, is being selected, the video display program fast-rewind plays back all the cuts contained in the selected scene, and displays the cuts in the image display portion 722.

When a STOP button 735 is clicked, the video display program 185 stops playing back moving pictures, and displays a still image at a time when the playback operation is stopped in the image display portion 722.

When a PLAY button 736 is clicked, the video display program 185 starts playing back moving pictures and displays the played back images in the image display portion 722. When the PLAY button 736 is clicked while, for example, a program, is being selected, the video display program 185 plays back all the episodes contained in the selected program and displays the episodes in the image display portion 722. When the PLAY button 736 is clicked while, for example, an episode is being selected, the video display program 185 plays back all the scenes contained in the selected episode and displays the scenes in the image display portion 722. When the PLAY button 736 is clicked while, for example, a scene, is being selected, the video display program 185 plays back all the cuts contained in the selected scene and displays the cuts in the image display portion 722.

When an FF button 737 is clicked while, for example, a program is being selected, the video display program 185 fast-forward plays back all the episodes contained in the selected program and displays the episodes in the image display portion 722. When the FF button 737 is clicked while, for example, an episode, is being selected, the video display program 185 fast-forward plays back all the scenes contained in the selected episode and displays the scenes in the image display portion 722. When the FF button 737 is clicked while, for example, a scene, is being selected, the video display program 185 fast-forward plays back all the cuts contained in the selected scene and displays the cuts in the image display portion 722.

When a SKIP button 738 is clicked while, for example, a program, is being selected, the video display program 185 displays the episode subsequent to the current episode displayed in the image display portion 722 of the selected program in the image display portion 722. When the SKIP button 738 is clicked while an episode is being selected, the video display program 185 displays the scene subsequent to the current scene displayed in the image display portion 722 of the selected episode in the image display portion 722. When the SKIP button 738 is clicked while a scene is being selected, the video display program 185 displays the cut subsequent to the current cut displayed in the image display portion 722 of the selected scene in the image display portion 722.

When the END button 739 is clicked while, for example, a program, is being selected, the video display program 185 displays the final episode of the selected program in the image display portion 722. When the END button 739 is clicked while an episode is being selected, the video display program 185 displays the final scene of the selected episode in the image display portion 722. When the END button 739 is clicked while a scene is being selected, the video display program 185 displays the final cut of the selected scene in the image display portion 722.

The configuration-table display program 187 displays, in a list box 745, a list indicating the time of essence marks on images set in the selected program, episode, scene, or take. When, for example, a scene, is selected, the configuration-table display program 187 displays a list of text, which are essence marks, and the time on the images set in the cuts contained in the selected scene.

When the characters of an essence mark (essence-mark text and time) displayed in the list box 745 is double-clicked, the configuration-table display program 187 allows the video display program 185 to display the image in which the double-clicked essence mark is set in the image display portion 722. The indication of the position bar 723 and the TC display portion 729 is changed so that the time of the image in which the essence mark is set can be displayed.

The typical-image setting display program 188 displays the typical image of a selected program, episode, scene, or take in a thumbnail display portion 746. The typical-image setting display program 188 displays the time count (TC) of the typical image of the selected program, episode, scene, or take in a text box 747.

When an entry button 748 is clicked, the typical-image setting display program 188 sets the image displayed in the image display portion 722 as the typical image of the selected program, episode, scene, or take. When the entry button 748 is clicked while an episode is being selected, the typical-image setting display program 188 sets the image displayed in the image display portion 722 as the typical image of the selected episode. Information indicating the set typical image is stored in program metadata.

When a cancel button 749 is clicked, the typical-image setting display program 188 cancels the current settings of the typical image and returns to the settings of the typical image before the current settings of the typical image.

When a button 750 is clicked, the configuration-table video monitor program 164 closes the monitor window 701.

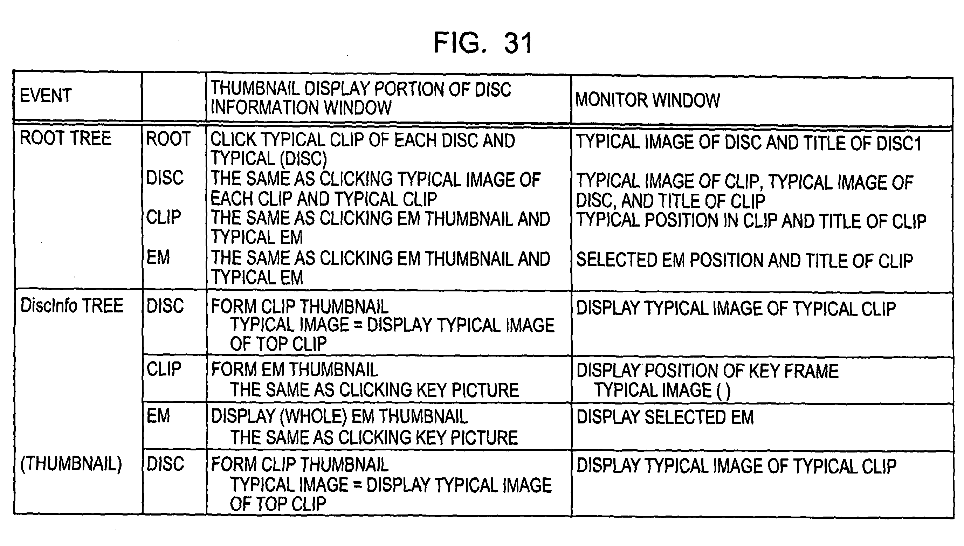

Fig. 31 illustrates the display operation of the disc information window 311 and the display operation of the monitor window 313 when the disc information window 311 is operated.

When the characters or graphics indicating the disc information display program 162 (for example, "Disc Manager" in Fig. 12), which is the root of the tree display portion 332, is selected, the thumbnail/list display program 177 displays typical images of each disc in the thumbnail display portion 334. When a typical image displayed in the thumbnail display portion 334 is clicked, the disc information display program 162 selects the clicked disc. In this case, the video display program 172 displays the typical image of the disc in the image display portion 372, and the title setting program 174 displays the tide of the disc.

When the characters or graphics indicating a disc (for example, Disc1" in Fig. 12) in the tree display portion 322 is clicked, the thumbnail/list display program 177 displays the typical images of the clips of the disc corresponding to the selected characters or graphics in the thumbnail display portion 334. When a typical image of the clip displayed in the thumbnail display portion 334 is clicked, the disc information display program 162 selects the clicked clip. In this case, the video display program 172 displays the typical image of the clip or the typical image of the disc in the image display portion 372, and the title setting program 174 displays the title of the clip.

When the characters or graphics of a clip (for example, "Clip5" in Fig. 12) in the tree display portion 322 is selected, the thumbnail/list display program 177 displays, in the thumbnail display portion 334, the images of frames of the dip in which essence marks are set corresponding to the selected characters or graphics. When the image of a frame with an essence mark displayed in the thumbnail display portion 334 is clicked, the disc information display program 162 selects the clicked image of the frame with an essence mark. In this case, the video display program 172 displays the image at the typical position of the clip in the image display portion 372, and the title setting program 174 displays the title of the clip.

When the characters or graphics indicating an essence mark in the tree display portion 322 are selected, the thumbnail/list display program 177 displays, in the thumbnail display portion 334, the images of frames with essence marks of the clips with the essence mark corresponding to the selected characters or graphics. When the image of the frame in which an essence mark is set displayed in the thumbnail display portion 344 is clicked, the disc information display program 162 selects the clicked image of the frame in which an essence mark is set. In this case, the video display program 172 displays the image of the frame with an essence mark in the image display portion 372, and the title setting program 174 displays the title of the dip.

When the characters or graphics indicating the disc information display program 162, which is the root of the tree display portion 322, are selected, and when typical images are not set, the thumbnail/list display program 177 creates thumbnails of the clips and allows the thumbnail display portion 334 to display the thumbnails. For example, the thumbnail/list display program 177 creates thumbnails based on the first frame of the clip. In this case, the video display program 172 displays typical images of the typical clip in the image display portion 372.

When the characters or graphics indicating the disc information display program 162, which is a clip of the tree display portion 322, are selected, and when typical images are not set, the thumbnail/list display program 177 creates thumbnails from the images of the frames in which essence marks are set, and displays the thumbnails in the thumbnail display portion 344. In this case, the essence-mark setting program 171 displays the position of the image in which a key frame is set. The key frame is one type of essence mark.

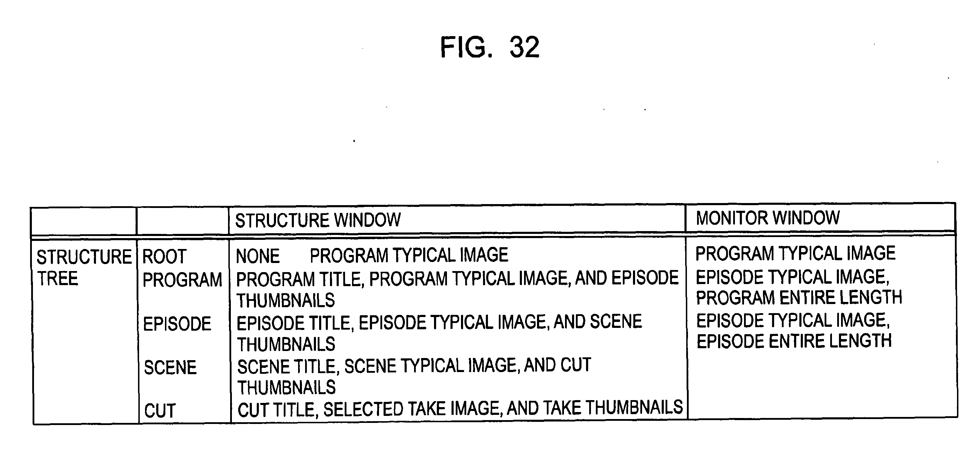

Fig. 32 illustrates the display operation of the structure window 312 and the display operation of the monitor window 701 when the structure window 312 is operated.

When the characters or graphics indicating the configuration-table setting display program 163, which is the root in the configuration-table tree display portion 352, are selected, the configuration-table tree display program 179 displays the typical image of the program in the typical-image display portion 356. In this case, the typical-image setting display program 188 displays the typical image of the program in the image display portion 722.

When the characters or graphics indicating the configuration-table setting display program 163, which is the program in the configuration-table tree display portion 352, are selected, the configuration-table tree display program 179 displays the typical image of the program in the typical-image display portion 356, the thumbnail (storyboard) display program 182 displays thumbnails of the episodes in the thumbnail display portion 353, and the configuration-table setting display program 163 displays the title of the program in the title bar 351. In this case, the typical-image setting display program 188 displays the typical image of the program in the image display portion 722, and displays the total length (time) of the program in the duration display portion 730.

When the characters or graphics indicating the configuration-table setting display program 163, which is the episode in the configuration-table tree display portion 352, are selected, the configuration-table tree display program 179 displays the typical image of the episode in the typical-image display portion 356, the thumbnail (storyboard) display program 182 displays thumbnails of the scenes in the thumbnail display portion 353, and the configuration-table setting display program 163 displays the title of the episode in the tide bar 351. In this case, the typical-image setting display program 188 displays the typical image of the episode in the image display portion 722, and displays the total length (time) of the episode in the duration display portion 730.

When the characters or graphics indicating the configuration-table setting display program 163, which is the scene in the configuration-table tree display portion 352, are selected, the configuration-table tree display program 179 displays the typical image of the program in the typical-image display portion 356, the thumbnail (storyboard) display program 182 displays thumbnails of the cuts in the thumbnail display portion 353, and the configuration-table setting display program 163 displays the title of the scene in the tide bar 351.

When the characters or graphics indicating the configuration-table setting display program 163, which is the cut in the configuration-table tree display portion 352, are selected, the configuration-table tree display program 179 displays the typical image of the take in the typical-image display portion 356, the thumbnail (storyboard) display program 182 displays thumbnails of the takes in the thumbnail display portion 353, and the configuration-table setting display program 163 displays the title of the cut in the title bar 351.

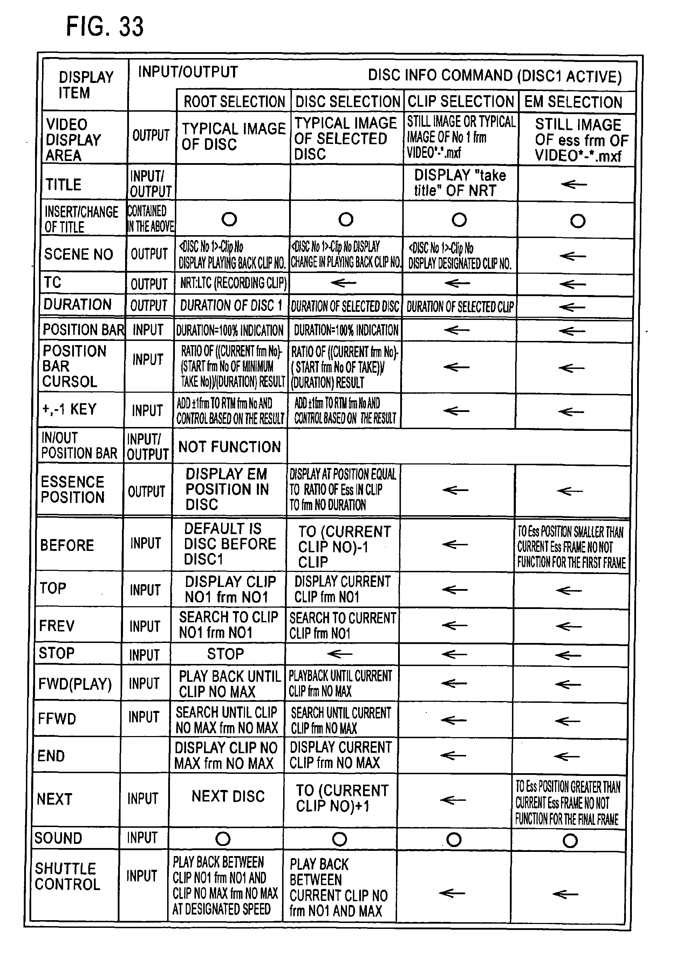

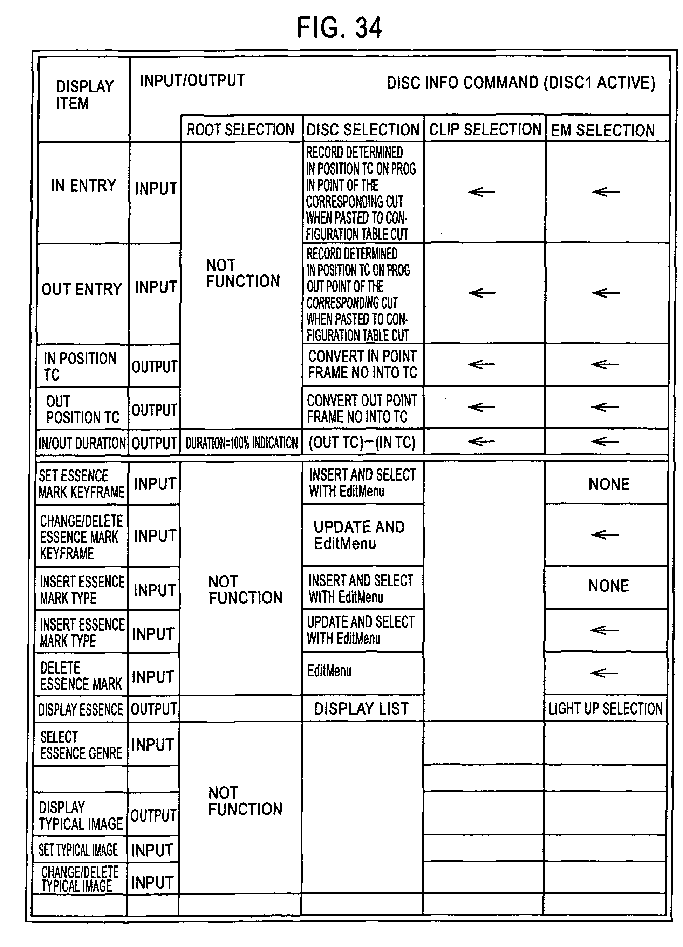

Figs. 33 and 34 illustrate details of the operation of the monitor window 313 when the disc information window 311 is operated.

The operation of the monitor window 313 when the characters or graphics indicating the disc information display program 162, which is the root in the tree display portion 332, is selected is described below.

In the title bar 371, the disc number and the currently played back clip number are indicated. In the image display portion 372, the typical image of the disc is indicated. The indication of the position bar 373 is based on the duration of the disc. The position of the slider 413 on the position bar 373 is determined by calculating ((current frame number) - (start frame number of the minimum take))/(Duration). The operation of frame control buttons 374 and 375 is controlled by the frame number of the frame metadata.

The In-point marker 411 and the Out-point marker 412 do not function. The essence markers 376 and 377 indicate the positions of essence marks in the disc. According to the operation of the shuttle bar 378, the playback speed of all the clips in the disc can be determined. In the TC display portion 379, the time count (TC: Time Count) of the clip is indicated. In the duration display portion 380, the length (time) of the image recorded in the disc is indicated.

When the audio button 381 is clicked, the audio channel setting window is opened. When the TOP button 382 is clicked, the image of the first frame of the first clip is displayed in the image display portion 372. When the SKIP button 383 is clicked, the image of the first frame of the previous disc is displayed in the image display portion 372. When the REW button 384 is clicked, images are searched toward the first frame of the first clip. When the STOP button 385 is clicked, the playback operation of the images is stopped.

When the PLAY button 386 is clicked, the images are played back until the final clip and the images are displayed in the image display portion 372. When the FF button 387 is clicked, images are searched toward the final frame of the final clip. When the SKIP button 388 is clicked, the image of the first frame of the subsequent disc is displayed in the image display portion 372. When the END click 389 is clicked, the image of the final frame of the final clip is displayed in the image display portion 372.

The entry-in button 390, the TC display portion 391, the entry-out button 392, and the TC display portion 393 do not function.

The text box 397, the essence-mark setting button 398, and the combo box 399 do not function. The essence mark, which is set when the essence-mark setting button 398 is clicked, cannot be changed.

A description is now given of the operation of the monitor window 313 when the characters or graphics indicating the disc information display program 162, which is a disc in the tree display portion 322, is selected.

In the title bar 371, the disc number and the currently played back clip number are indicated. The disc number and the currently played back clip number are changed from those when the root is selected. In the image display portion 372, the typical image of the selected disc is displayed. The indication of the position bar 373 is based on the duration of the selected disc. The position of the slider 413 on the position bar 373 is determined by calculating ((current frame number) - (start frame number of take))/(Duration). The operation of the frame control buttons 374 and 375 is controlled by the frame number of frame metadata.

The essence markers 376 and 377 indicate the positions of essence marks in each dip with respect to the duration of the disc. According to the operation of the shuttle bar 378, the playback speed of the current clip is determined. In the TC display portion 379, the time count (TC: Time Count) of the clip is indicated. In the duration display portion 380, the length (time) of the images recorded in the disc is indicated.

When the audio button 381 is clicked, the audio channel setting window is opened. When the TOP button 382 is clicked, the image of the first frame of the current clip is displayed in the image display portion 372. When the SKIP button 383 is clicked, the image of the previous clip is displayed in the image display portion 372. When the REW button 384 is clicked, images are searched toward the first frame of the current clip. When the STOP button 385 is clicked, the playback operation of the images is stopped.

When the PLAY button 386 is clicked, the images of the current clip are played back and the images are displayed in the image display portion 372. When the FF button 387 is clicked, images are searched toward the final frame of the current clip. When the SKIP button 388 is clicked, the image of the take of the subsequent clip is displayed in the image display portion 372. When the END button 389 is clicked, the image of the final frame of the current clip is displayed in the image display portion 372.

When the take is pasted to the cut in the configuration table and when the entry-in button 390 is operated, the corresponding time count is recorded as the editing start position of the cut. The frame number at the editing start position is converted into the time count and is displayed in the TC display portion 391.

When the take is pasted to the cut in the configuration table and when the entry-out button 392 is operated, the corresponding time count is recorded as the editing end position of the cut. The frame number at the editing end position is converted into the time count and is displayed in the TC display portion 393.

When the essence-mark setting button 398 is clicked, an essence mark corresponding to the clicked essence-mark setting button 398 is inserted into the frame position at the time count. When the menu is selected by the combo box 399, an essence mark corresponding to the menu is inserted into the frame position at the time count. The essence mark, which is set when the essence-mark setting button 398 is clicked, can be changed.

A description is now given of the operation of the monitor window 313 when the characters or graphics indicating the disc information display program 162, which is a clip in the tree display portion 332, are selected.

In the title bar 371, the disc number and the currently played back clip number are indicated. In the image display portion 372, the typical image of the selected clip or the still image of the first frame is displayed in the image display portion 372 based on the video content data. The indication of the position bar 373 is based on the duration of the selected clip. The position of the slider 413 on the position bar 373 is determined by calculating ((current frame number) - (start frame number of take))/(Duration). The operation of the frame control buttons 374 and 375 is controlled by the frame number of the frame metadata.

The essence markers 376 and 377 indicate the positions of essence marks in each clip with respect to the duration of the clip. By the operation of the shuttle bar 378, the playback speed of the current clip is determined. In the TC display portion 379, the time count (TC: Time Count) of the clip is indicated. In the duration display portion 380, the length (time) of the images recorded in the selected clip is indicated.

When the audio button 381 is clicked, the audio channel setting window is opened. When the TOP button 382 is clicked, the image of the first frame of the current clip is displayed in the image display portion 372. When the SKIP button 383 is clicked, the image of the previous clip is displayed in the image display portion 372. When the REW button 384 is clicked, images are searched toward the first frame of the current clip. When the STOP button 385 is clicked, the playback operation of the images is stopped.

When the PLAY button 386 is clicked, the images of the current clip are played back and the images are displayed in the image display portion 372. When the FF button 387 is clicked, images are searched toward the final frame of the current clip. When the SKIP button 388 is clicked, the image of the take of the subsequent clip is displayed in the image display portion 372. When the END button 389 is clicked, the image of the final frame of the current clip is displayed in the image display portion 372.

When the take is pasted to the cut in the configuration table and when the entry-in button 390 is operated, the corresponding time count is recorded as the editing start position of the cut. The frame number at the editing start position is converted into the time count and is displayed in the TC display portion 391.

When the take is pasted to the cut in the configuration table and when the entry-out button 392 is operated, the corresponding time count is recorded as the editing end position of the cut. The frame number at the editing end position is converted into the time count and is displayed in the TC display portion 393.

When the essence-mark setting button 398 is clicked, an essence mark corresponding to the clicked essence-mark setting button 398 is inserted into the frame position at the time count. When the menu is selected by the combo box 399, an essence mark corresponding to the menu is inserted into the frame position at the time count. The essence mark, which is set when the essence-mark setting button 398 is clicked, can be changed.

In the text box 601, the title of the take is indicated based on the clip metadata. In the text box 602, comments of the take are indicated based on the clip metadata.

A description is now given of the operation of the monitor window 313 when the characters or graphics indicating the disc information display program 162, which is an essence mark in the tree display portion 322, are selected.

In the title bar 371, the disc number and the currently played back clip number are indicated. In the image display portion 372, the still image of a frame with the selected essence mark is displayed. The indication of the position bar 373 is based on the duration of the selected clip. The position of the slider 413 on the position bar 373 is determined by calculating ((current frame number) - (start frame number of take))/(Duration). The operation of the frame control buttons 374 and 375 is controlled by the frame number of the frame metadata.

The essence markers 376 and 377 indicate the positions of essence marks in each clip with respect to the duration of the clip. By the operation of the shuttle bar 378, the playback speed of the current clip is determined. In the TC display portion 379, the time count (TC: Time Count) of the clip is indicated. In the duration display portion 380, the length (time) of the images recorded in the selected clip is indicated.

When the audio button 381 is clicked, the audio channel setting window is opened. When the TOP button 382 is clicked, the image of the first frame of the current clip is displayed in the image display portion 372. When the SKIP button 383 is clicked, the image of the temporally previous frame with an essence mark is displayed in the image display portion 372. When the REW button 384 is clicked, images are searched toward the first frame of the current clip. When the STOP button 385 is clicked, the playback operation of the images is stopped.

When the PLAY button 386 is clicked, the images of the current clip are played back and the images are displayed in the image display portion 372. When the FF button 387 is clicked, images are searched toward the final frame of the current clip. When the SKIP button 388 is clicked, the image of the temporally subsequent frame with an essence mark is displayed. When the END button 389 is clicked, the image of the final frame of the current clip is displayed in the image display portion 372.

When the frame is pasted to the cut in the configuration table and when the entry-in button 390 is operated, the corresponding time count is recorded as the editing start position of the cut. The frame number at the editing start position is converted into the time count and is displayed in the TC display portion 391.

When the frame is pasted to the cut in the configuration table and when the entry-out button 392 is operated, the corresponding time count is recorded as the editing end position of the cut. The frame number at the editing end position is converted into the time count and is displayed in the TC display portion 393.

The essence-mark setting button 398 and the combo box 399 do not function. The essence mark, which is set when the essence-mark setting button 398 is clicked, can be changed.

In the text box 601, the title of the take is indicated based on the clip metadata. In the text box 602, comments of the take are indicated based on the clip metadata.

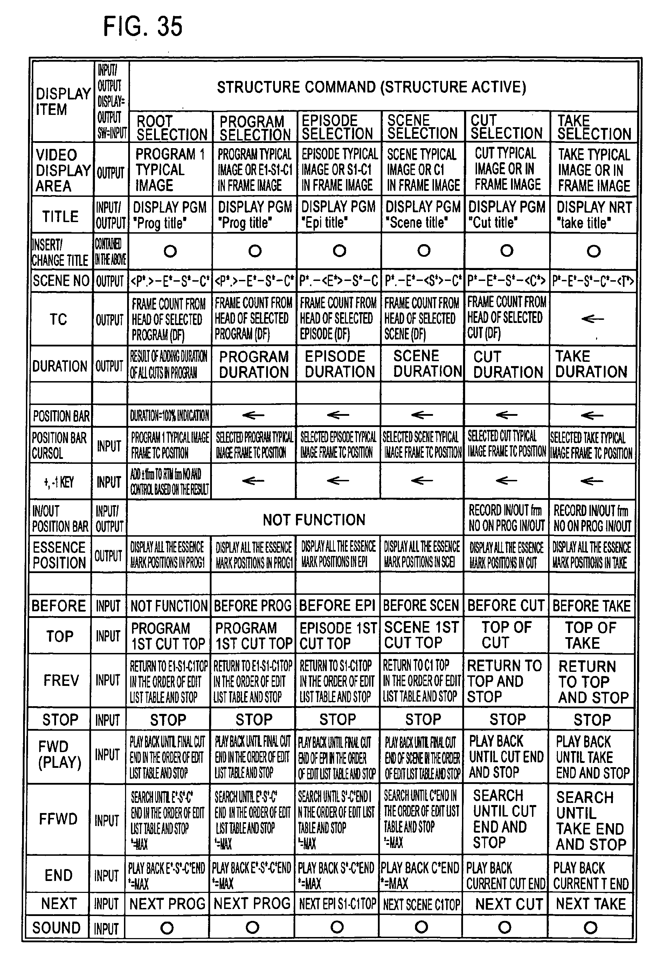

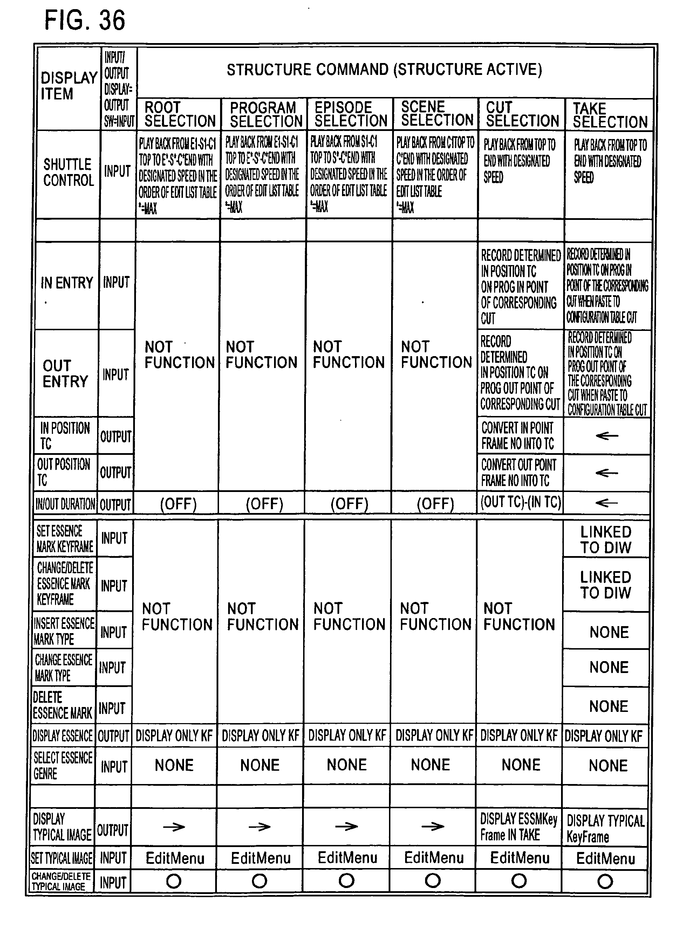

Figs. 35 and 36 illustrate details of the operation of the monitor window 701 when the structure window 312 is operated.

The operation of the monitor window 701 when the characters or graphics indicating the root in the configuration-table tree display portion 312 are selected is described below.

In the title bar 721, the name of a program, episode, scene, and cut is indicated. In the image display portion 722, the typical image of program1 is displayed. The indication of the position bar 723 is based on the total duration of all the cuts contained in the program. The position of the slider on the position bar 723 is determined by the time count of the typical image of the program1. The operation of the frame control buttons 724 and 725 is controlled by the frame number of the frame metadata.

In the In-point marker and the Out-point marker do not function. The essence markers 726 and 727 indicate the positions of essence marks in the program1. By the operation of the shuttle bar 728, the playback speed of all the cuts of the progarm1 is determined. In the TC display portion 729, the frame count is indicated from the head of the program1. In the duration display portion 730, the length (time) of the images of all the cuts in the program1 is indicated.

When the audio button 731 is clicked, the audio channel setting window is opened. When the TOP button 732 is clicked, the image of the first frame of the first cut in the program is displayed in the image display portion 722. The SKIP button 733 does not function. When the REW button 734 is clicked, the images are rewound in the order of the edit table, stopped, and searched toward the first frame of the first cut in the program. When the STOP button 735 is clicked, the playback operation of the images is stopped.

When the PLAY button 736 is clicked, the images are played back until the final cut in the order of the edit table and the images are displayed in the image display portion 722. When the FF button 737 is clicked, the images are forwarded in the order of the edit table, stopped, and searched toward the final frame of the final cut in the program. When the SKIP button 738 is clicked, the image of the first frame of the subsequent program is displayed in the image display portion 722. When the END button 774 is clicked, the image of the final frame of the final cut in the program is displayed in the image display portion 722.

The entry-in button 740, the TC display portion 741, the entry-out button 742, and the TC display portion 743 do not function.

In the list box 745, the position of the key frame is indicated. In the thumbnail display portion 746, the typical image of the program is displayed. In the text box 747, the time count of the typical image of the program is indicated.

When the entry button 748 is clicked, the image currently displayed in the image display portion 722 is set as the typical image of the program. When the cancel button 749 is clicked, the settings of the typical image are canceled. The typical image can be changed or deleted.

A description is now given of the operation of the monitor window 701 when the characters or graphics indicating a program in the configuration-table tree display portion 352 are selected.

In the title bar 721, the name of a program, episode, scene, and cut is indicated. In the image display portion 722, the typical image of the selected program or the image at the editing start position of cut1 of scene1 of episode1 is displayed. The indication of the position bar 723 is based on the duration of the selected program. The position of the slider on the position bar 723 is determined by the time count of the typical image of the selected program. The operation of the frame control buttons 724 and 725 is controlled by the frame number of the frame metadata.

In the In-point marker and the Out-point marker do not function. The essence markers 726 and 727 indicate the positions of all the essence marks in the selected program. By the operation of the shuttle bar 728, the playback speed of all the cuts of the selected program is determined. In the TC display portion 729, the frame count from the head of the selected program is indicated. In the duration display portion 730, the length (time) of the images of the selected program is indicated.

When the audio button 731 is clicked, the audio channel setting window is opened. When the TOP button 732 is clicked, the image of the first frame of the first cut in the program is displayed in the image display portion 722. When the SKIP button 733 is clicked, the image of the first frame of the first cut in the previous program is displayed in the image display portion 722. When the REW button 734 is clicked, the images are rewound toward the first frame of the first cut in the selected program in the order of the edit table, stopped, and searched. When the STOP button 735 is clicked, the playback operation of the images is stopped.

When the PLAY button 736 is clicked, the images are played back until the final cut in the order of the edit table and the images are displayed in the image display portion 722. When the FF button 737 is clicked, the images are forwarded toward the final frame of the final cut in the program in the order of the edit table, stopped, and searched. When the SKIP button 738 is clicked, the image of the first frame of the subsequent program is displayed in the image display portion 722. When the END button 774 is clicked, the image of the final frame of the final cut in the selected program is displayed in the image display portion 722.

The entry-in button 740, the TC display portion 741, the entry-out button 742, and the TC display portion 743 do not function.

In the list box 745, the position of the key frame is indicated. In the thumbnail display portion 746, the typical image of the program is displayed. In the text box 747, the time count of the typical image of the program is indicated.

When the entry button 748 is clicked, the image currently displayed in the image display portion 722 is set as the typical image of the selected program. When the cancel button 749 is clicked, the settings of the typical image are canceled. The typical image can be changed or deleted.

A description is now given of the operation of the monitor window 701 when the characters or graphics indicating an episode in the configuration-table tree display portion 352 are selected.

In the title bar 721, the name of a program, episode, scene, and cut is indicated. In the image display portion 722, the typical image of the selected episode or the image at the editing start position of cut1 of scene1 is displayed. The indication of the position bar 723 is based on the duration of the selected episode. The position of the slider on the position bar 723 is determined by the time count of the typical image of the selected episode. The operation of the frame control buttons 724 and 725 is controlled by the frame number of the frame metadata.

In the In-point marker and the Out-point marker do not function. The essence markers 726 and 727 indicate the positions of all the essence marks in the selected episode. By the operation of the shuttle bar 728, the playback speed of all the cuts of the selected episode is determined. In the TC display portion 729, the frame count from the head of the selected episode is indicated. In the duration display portion 730, the length (time) of the images of the selected episode is indicated.

When the audio button 731 is clicked, the audio channel setting window is opened. When the TOP button 732 is clicked, the image of the first frame of the first cut of the selected episode is displayed in the image display portion 722. When the SKIP button 733 is clicked, the image of the first frame of the first cut of the previous episode is displayed in the image display portion 722. When the REW button 734 is clicked, the images are rewound toward the first frame of the first cut of the selected episode in the order of the edit table, stopped, and searched. When the STOP button 735 is clicked, the playback operation of the images is stopped.

When the PLAY button 736 is clicked, the images are played back until the final cut in the order of the edit table and the images are displayed in the image display portion 722. When the FF button 737 is clicked, the images are forwarded toward the final frame of the final cut of the episode in the order of the edit table, stopped, and searched. When the SKIP button 738 is clicked, the image of the first frame of the subsequent episode is displayed in the image display portion 722. When the END button 774 is clicked, the image of the final frame of the final cut of the selected episode is displayed in the image display portion 722.

The entry-in button 740, the TC display portion 741, the entry-out button 742, and the TC display portion 743 do not function.

In the list box 745, the position of the key frame is indicated. In the thumbnail display portion 746, the typical image of the episode is displayed. In the text box 747, the time count of the typical image of the episode is indicated.

When the entry button 748 is clicked, the image currently displayed in the image display portion 722 is set as the typical image of the selected episode. When the cancel button 749 is clicked, the settings of the typical image are canceled. The typical image can be changed or deleted.

A description is now given of the operation of the monitor window 701 when the characters or graphics indicating a scene in the configuration-table tree display portion 352 are selected.

In the title bar 721, the name of a program, episode, scene, and cut is indicated. In the image display portion 722, the typical image of the selected scene or the image at the editing start position of cut1 is displayed. The indication of the position bar 723 is based on the duration of the selected scene. The position of the slider on the position bar 723 is determined by the time count of the typical image of the selected scene. The operation of the frame control buttons 724 and 725 is controlled by the frame number of the frame metadata.

In the In-point marker and the Out-point marker do not function. The essence markers 726 and 727 indicate the positions of all the essence marks in the selected scene. By the operation of the shuttle bar 728, the playback speed of all the cuts of the selected scene is determined. In the TC display portion 729, the frame count from the head of the selected scene is indicated. In the duration display portion 730, the length (time) of the images of the selected scene is indicated.

When the audio button 731 is clicked, the audio channel setting window is opened. When the TOP button 732 is clicked, the image of the first frame of the first cut of the selected scene is displayed in the image display portion 722. When the SKIP button 733 is clicked, the image of the first frame of the first cut of the previous scene is displayed in the image display portion 722. When the REW button 734 is clicked, the images are rewound toward the first frame of the first cut of the selected scene in the order of the edit table, stopped, and searched. When the STOP button 735 is clicked, the playback operation of the images is stopped.

When the PLAY button 736 is clicked, the images are played back until the final cut in the order of the edit table and the images are displayed in the image display portion 722. When the FF button 737 is clicked, the images are forwarded toward the final frame of the final cut of the scene in the order of the edit table, stopped, and searched. When the SKIP button 738 is clicked, the image of the first frame of the subsequent scene is displayed in the image display portion 722. When the END button 774 is clicked, the image of the final frame of the final cut of the selected scene is displayed in the image display portion 722.

The entry-in button 740, the TC display portion 741, the entry-out button 742, and the TC display portion 743 do not function.

In the list box 745, the position of the key frame is indicated. In the thumbnail display portion 746, the typical image of the scene is displayed. In the text box 747, the time count of the typical image of the scene is indicated.

When the entry button 748 is clicked, the image currently displayed in the image display portion 722 is set as the typical image of the selected scene. When the cancel button 749 is clicked, the settings of the typical image are canceled. The typical image can be changed or deleted.

A description is now given of the operation of the monitor window 701 when the characters or graphics indicating a cut in the configuration-table tree display portion 352 are selected.

In the title bar 721, the name of a program, episode, scene, and cut is indicated. In the image display portion 722, the typical image of the selected cut or the image at the editing start position is displayed. The indication of the position bar 723 is based on the duration of the selected cut. The position of the slider on the position bar 723 is determined by the time count of the typical image of the selected cut. The operation of the frame control buttons 724 and 725 is controlled by the frame number of the frame metadata.

The In-point marker indicates the extracting (editing) start position of a clip, while the Out-point marker indicates the extracting (editing) end position of a clip. When the In-point marker is dragged and moved, the video editing program 186 sets the moved position to be the editing start position. When the Out-point marker is dragged and moved, the video editing program 186 sets the moved position to be the editing end position.

The essence markers 726 and 727 indicate the positions of all the essence marks in the selected cut. By the operation of the shuttle bar 728, the playback speed of all the cuts of the selected cut is determined. In the TC display portion 729, the frame count from the head of the selected cut is indicated. In the duration display portion 730, the length (time) of the images of the selected cut is indicated.

When the audio button 731 is dicked, the audio channel setting window is opened. When the TOP button 732 is clicked, the image of the first frame of the selected cut is displayed in the image display portion 722. When the SKIP button 733 is clicked, the image of the first frame of the previous cut is displayed in the image display portion 722. When the REW button 734 is clicked, the images are rewound toward the first frame of the selected cut, stopped, and searched. When the STOP button 735 is clicked, the playback operation of the images is stopped.

When the PLAY button 736 is clicked, the images are played back until the final cut and the images are displayed in the image display portion 722. When the FF button 737 is clicked, the images are forwarded toward the final frame of the cut, stopped, and searched. When the SKIP button 738 is clicked, the image of the first frame of the subsequent cut is displayed in the image display portion 722. When the END button 774 is clicked, the image of the final frame of the selected cut is displayed in the image display portion 722.

When the entry-in button 740 is clicked, the corresponding time count is recorded as the editing start position of the cut. The frame number at the editing start position is converted into a time count and is displayed in the TC display portion 741.

When the entry-out button 742 is clicked, the corresponding time count is recorded as the editing end position of the cut. The frame number at the editing end position is converted into a time count and is displayed in the TC display portion 743.

In the list box 745, the position of the key frame is indicated. In the thumbnail display portion 746, the typical image of the cut is displayed. In the text box 747, the time count of the typical image of the cut is indicated.

When the entry button 748 is clicked, the image currently displayed in the image display portion 722 is set as the typical image of the selected cut. When the cancel button 749 is clicked, the settings of the typical image are canceled. The typical image can be changed or deleted.

A description is now given of the operation of the monitor window 701 when the characters or graphics indicating a take in the configuration-table tree display portion 352 are selected.

In the title bar 721, the name of a program, episode, scene, cut, and take is indicated. In the image display portion 722, the typical image of the selected take or the image at the editing start position is displayed. The indication of the position bar 723 is based on the duration of the selected take. The position of the slider on the position bar 723 is determined by the time count of the typical image of the selected take. The operation of the frame control buttons 724 and 725 is controlled by the frame number of the frame metadata.

The In-point marker indicates the editing start position, while the Out-point marker indicates the editing end position. When the In-point marker is dragged and moved, the video editing program 186 sets the moved position to be the editing start position. When the Out-point marker is dragged and moved, the video editing program 186 sets the moved position to be the editing end position.

The essence markers 726 and 727 indicate the positions of all the essence marks in the selected take. By the operation of the shuttle bar 728, the playback speed of the selected take is determined. In the TC display portion 729, the frame count from the head of the selected take is indicated. In the duration display portion 730, the length (time) of the images of the selected take is indicated.

When the audio button 731 is clicked, the audio channel setting window is opened. When the TOP button 732 is clicked, the image of the first frame of the selected take is displayed in the image display portion 722. When the SKIP button 733 is clicked, the image of the first frame of the previous take is displayed in the image display portion 722. When the REW button 734 is clicked, the images are rewound toward the first frame of the selected take, stopped, and searched. When the STOP button 735 is clicked, the playback operation of the images is stopped.

When the PLAY button 736 is clicked, the images are played back until the final take and the images are displayed in the image display portion 722. When the FF button 737 is clicked, the images are forwarded toward the final frame of the take, stopped, and searched. When the SKIP button 738 is clicked, the image of the first frame of the subsequent take is displayed in the image display portion 722. When the END button 774 is clicked, the image of the final frame of the selected take is displayed in the image display portion 722.

When the take is pasted to the cut in the configuration table and when the entry-in button 740 is clicked, the corresponding time count is recorded as the editing start position of the take. The frame number at the editing start position is converted into a time count and is displayed in the TC display portion 741.

When the take is pasted to the cut in the configuration table and when the entry-out button 742 is clicked, the corresponding time count is recorded as the editing end position of the take. The frame number at the editing end position is converted into a time count and is displayed in the TC display portion 743.

In the list box 745, the position of the key frame is indicated. In the thumbnail display portion 746, the typical image of the take is displayed. In the text box 747, the time count of the typical image of the take is indicated.

When the entry button 748 is clicked, the image currently displayed in the image display portion 722 is set as the typical image of the selected take. When the cancel button 749 is clicked, the settings of the typical image are canceled. The typical image can be changed or deleted.

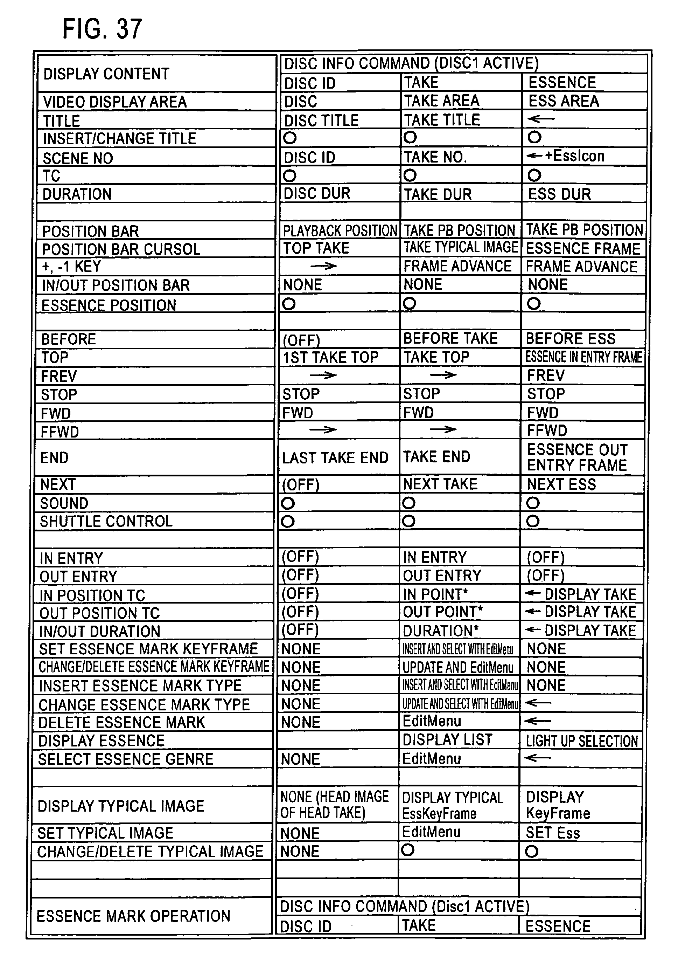

Figs. 37 through 39 illustrate the operation of the monitor window 313 and the operation of the monitor window 701 when a clip is treated as a take, which is video content data forming a program.

In this case, the operations are similar to those discussed with reference to Figs. 33 through 36, and an explanation thereof is thus omitted. In this case, the processing described with reference to Figs. 33 through 36 by replacing a clip by a take is performed.

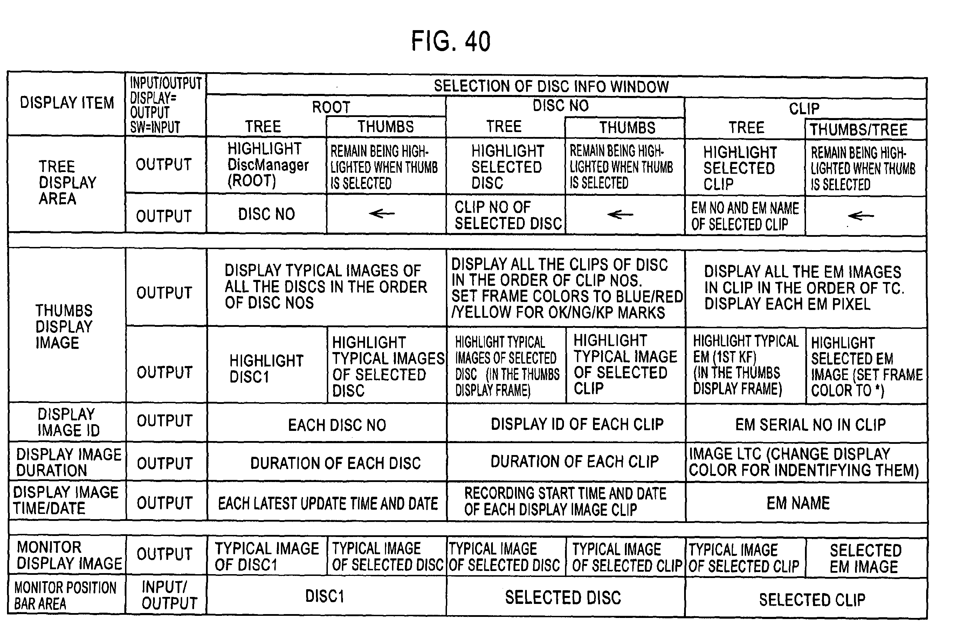

Fig. 40 illustrates details of the operation of the disc information window 311.

A description is first given of the operation of the disc information window 311 when the characters or graphics indicating the root in the tree display portion 332 are selected.

The disc information tree display program 176 highlights the characters or graphics indicating the root (for example, "Disc Manager" in Fig. 12) in the tree display portion 332. The disc information tree display program 176 indicates the disc number in the tree display portion 332.

The thumbnail/list display program 177 displays the typical images in the thumbnail display portion 334 in the order of disc numbers. In this case, the typical image of disc1 is highlighted. The additional-information display program 178 indicates, as shown in Fig. 17, the ID of each disc and also indicates the length (duration) of each disc and the latest update date (month, day, hour, minute, and second) of each disc.

In this case, the typical image of disc1 is displayed in the image display portion 372.

A description is now given of the operation of the disc information window 311 when the characters or graphics indicating the root in the tree display portion 332 are selected and when a thumbnail in the thumbnail display portion 334 is selected (clicked).

The disc information tree display program 176 continues highlighting the characters or graphics indicating the root (for example, "Disc Manager" in Fig. 12) in the tree display portion 332. The disc information tree display program 176 continues indicating the disc number in the tree display portion 332.

The thumbnail/list display program 177 continues displaying typical images in the thumbnail display portion 334 in the order of the disc numbers of all the discs. The thumbnail/list display program 177 highlights the clicked and selected typical image of the disc in the thumbnail display portion 334.

In this case, the selected typical image of the disc is displayed in the image display portion 372.

A description is now given of the operation of the disc information window 311 when the characters or graphics indicating a disc in the tree display portion 332 are being selected.

The disc information tree display program 176 highlights the characters or graphics indicating the selected disc in the tree display portion 332. The disc information tree display program 176 also indicates the clip numbers of the selected disc in the tree display portion 332.

The thumbnail/list display program 177 displays the typical images of all the clips in the order of the clip numbers in the thumbnail display portion 334. In this case, when the status of the dip is set as a take, the thumbnail/list display program 177 indicates, in blue, the frames of the thumbnail display portion 334 indicating the typical images of the "OK" clips, indicates, in red, the frames of the thumbnail display portion 334 indicating the typical images of the "NG" clips, and indicates, in green, the frames of the thumbnail display portion 334 indicating the typical images of the "KP" (Keep) clips.

The thumbnail/list display program 177 may highlight the thumbnail display portion 334 in a predetermined manner as long as it can allow the user to recognize the status of the thumbnail display portion 334. For example, the thumbnail/list display program 177 may cause the frames of the thumbnail display portion 334 to blink, change the color of the overall thumbnail display portion 334, or change the size of the thumbnail display portion 334 according to the status.

Modes of indications of "OK", "NG", and "KP" can be selected or changed by a menu (including a pop-up menu appearing by clicking the right button of the mouse) or a short cut.

The additional-information display program 178 indicates, as shown in Fig. 17, the ID of each clip and also indicates the length (duration) of each clip and the recording start time and date (month, day, hour, minute, second) of each clip in the thumbnail display portion 334.

In this case, the typical image of the selected disc is displayed in the image display portion 372.

A description is now given of the operation of the disc information window 311 when the characters or graphics indicating a disc in the tree display portion 332 are being selected and when a thumbnail in the thumbnail display portion 334 is selected (clicked).

The disc information tree display program 176 continues highlighting the characters or graphics indicating the selected disc in the tree display portion 332. The disc information tree display program 176 also continues indicating the clip numbers of the selected disc in the tree display portion 332.

The thumbnail/list display program 177 displays the typical images of all the clips in the order of the clip numbers in the thumbnail display portion 334. In this case, when the status of the clip is determined as a take, the thumbnail/list display program 177 indicates, in blue, the frames of the thumbnail display portion 334 indicating the typical images of the "OK" clips, indicates, in red, the frames of the thumbnail display portion 334 indicating the typical images of the "NG" clips, and indicates, in green, the frames of the thumbnail display portion 334 indicating the typical images of the "KP" (Keep) clips.

Then, the thumbnail/list display program 177 highlights the typical image of the clicked and selected clip in the thumbnail display portion 334.

The additional-information display program 178 indicates, as shown in Fig. 17, the ID of each clip and also indicates the length (duration) of each clip and the recording start time and date (month, day, hour, minute, second) of each clip in the thumbnail display portion 334.

In this case, the typical image of the selected disc is displayed in the image display portion 372.

The operation of the disc information window 311 when the characters or graphics indicating a clip in the tree display portion 332 are selected is described below.

The disc information tree display program 176 highlights the characters or graphics indicating the selected clip in the tree display portion 332. The disc information tree display program 176 indicates the numbers of essential marks and the names of essential marks (text set as essential marks) of the selected clip in the tree display portion 332.

The thumbnail/list display program 177 displays the images of all the frames with essential marks in the clip in the thumbnail display portion 334 in the order of time count. In this case, the thumbnail/list display program 177 highlights the thumbnail display portion 334 indicating the typical frame (for example, the first key frame) among the frames with essential marks.

The additional-information display program 178 indicates, as shown in Fig. 16, the serial number of an essential mark in the clip and also indicates the time count indicating the time on the image with an essential mark and the name of the essential mark.

In this case, the typical image of the selected dip is displayed in the image display portion 372.

A description is now given of the operation of the disc information window 311 when the characters or graphics indicating a clip in the tree display portion 332 are selected and when as thumbnail in the thumbnail display portion 334 is selected (clicked).

The disc information tree display program 176 continues highlighting the characters or graphics indicating the selected clip in the tree display portion 332. The disc information tree display program 176 continues indicating the numbers and names of essential marks of the selected clip in the tree display portion 332.

The thumbnail/list display program 177 displays the images of all the frames with essential marks in the clip in the thumbnail display portion 334 in the order of time count. The thumbnail/list display program 177 highlights the selected thumbnail display portion 334.

The additional-information display program 178 indicates, as shown in Fig. 16, the serial number of an essential mark in the clip and also indicates the time count indicating the time on the image with an essential mark and the name of the essential mark.

In this case, the typical image of the frame with the selected essential mark is displayed in the image display portion 372.

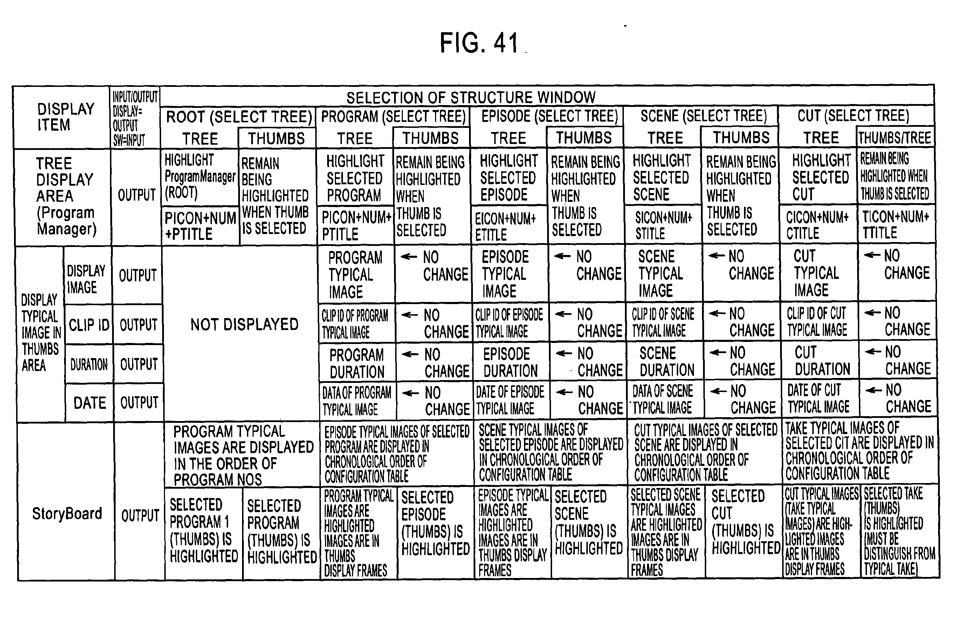

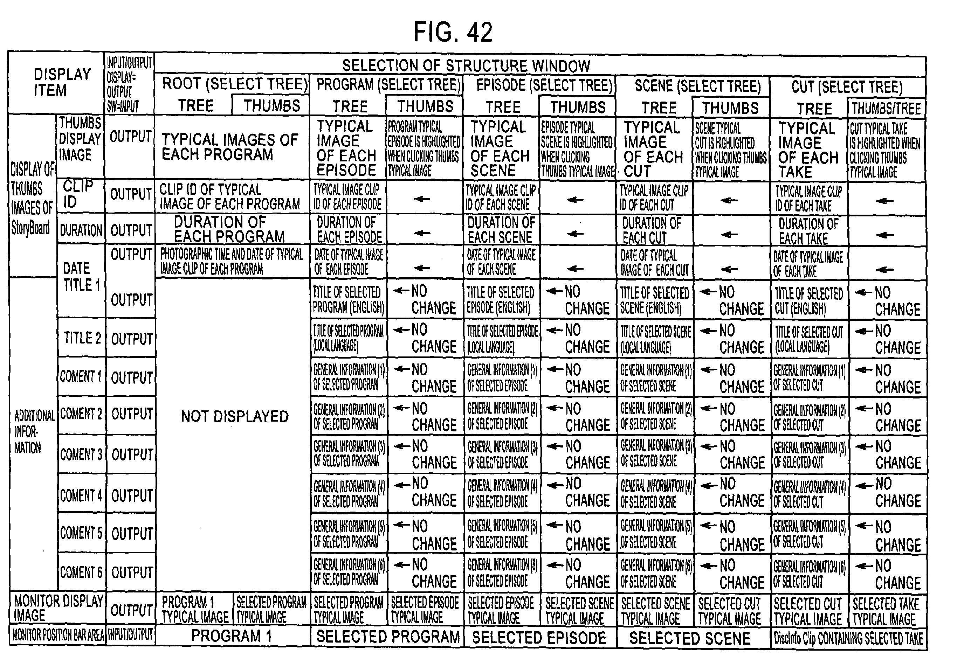

Figs. 41 and 42 illustrate details of the operation of the structure window 312.

A description is first given of the operation of the structure window 312 when the characters or graphics indicating the root in the configuration-table tree display portion 352 are selected.

The configuration-table tree display program 179 highlights the characters or graphics indicating the root in the configuration-table tree display portion 352. The configuration-table tree display program 179 highlights the characters or graphics indicating a program (for example, "Program1" in Fig. 18) under the root in the configuration-table tree display portion 352.

The typical-image setting display program 181 displays nothing in the typical-image display portion 356. The thumbnail (storyboard) display program 182 displays the typical images of each program in the thumbnail display portion 353 in the order of program numbers. The thumbnail (storyboard) display program 182 highlights the typical image of program1 in the thumbnail display portion 353.

The additional-information display program 180 indicates the clip IDs of the typical images of each disc and also indicates the length (duration) of each program and the recording start time and date (month, day, hour, minute, and second) of the clips including the typical image of the program in the thumbnail display portion 353.

The additional-information display program 357 displays nothing in the additional-information display portion 357.

In this case, the typical image of program1 is displayed in the image display portion 722.

A description is now given of the operation of the structure window 312 when the characters or graphics indicating the root in the configuration-table tree display portion 352 are selected and when a thumbnail in the thumbnail display portion 353 is selected (clicked).

The configuration-table tree display program 179 continues highlighting the characters or graphics indicating the root in the configuration-table tree display portion 352. The configuration-table tree display program 179 continues highlighting the characters or graphics indicating a program (for example, "Program1" in Fig. 18) under the root in the configuration-table tree display portion 352.

The typical-image setting display program 181 displays nothing in the typical-image display portion 356. The thumbnail (storyboard) display program 182 displays the typical images of each program in the thumbnail display portion 353 in the order of program numbers. The thumbnail (storyboard) display program 182 highlights the selected typical image of the program in the thumbnail display portion 353.

The additional-information display program 180 indicates the clip IDs of the typical images of each disc and also indicates the length (duration) of each program and the recording start time and date (month, day, hour, minute, and second) of the clips including the typical image of the program in the thumbnail display portion 353.

The additional-information display program 180 displays nothing in the additional-information display portion 357.

In this case, the typical image of the selected program is displayed in the image display portion 722.

A description is now given of the operation of the structure window 312 when the characters or graphics indicating a program in the configuration-table tree display portion 352 are selected.

The configuration-table tree display program 179 highlights the characters or graphics indicating the selected program in the configuration-table tree display portion 352. The configuration-table tree display program 179 highlights the characters or graphics indicating an episode (for example, "Episode1" in Fig. 18) under the selected program in the configuration-table tree display portion 352.

The typical-image setting display program 181 displays the typical image of the selected program in the typical-image display portion 356. The typical-image setting display program 181 indicates the clip ID of the typical image of the selected program and also indicates the length (duration) of the selected program and the time and date (month, day, hour, minute, and second) of the typical image of the selected program in the typical-image display portion 356.

The thumbnail (storyboard) display program 182 displays the typical images of the episodes of the selected program in the thumbnail display portion 353 in the chronological order of the configuration table. The thumbnail (storyboard) display program 182 highlights the same typical image of the episode as the typical image of the program in the thumbnail display portion 353.

The additional-information display program 180 indicates the clip IDs of the typical images of each episode and also indicates the length (duration) of each episode and the recording start time and date (month, day, hour, minute, and second) of the typical image of the episode in the thumbnail display portion 353.

The additional-information display program 357 displays general information, such as the English title of the selected program, the title of the selected program in another language, and the comments of the program, in the additional-information display portion 357.

In this case, the typical image of the selected program is displayed in the image display portion 722.

A description is now given of the operation of the structure window 312 when the characters or graphics indicating a program in the configuration-table tree display portion 352 are selected and when a thumbnail in the thumbnail display portion 353 is selected (clicked).

The configuration-table tree display program 179 continues highlighting the characters or graphics indicating the selected program in the configuration-table tree display portion 352. The configuration-table tree display program 179 continues highlighting the characters or graphics indicating an episode under the selected program in the configuration-table tree display portion 352.

The typical-image setting display program 181 displays the typical image of the selected program in the typical-image display portion 356. The typical-image setting display program 181 indicates the clip ID of the typical image of the selected program and also indicates the length (duration) of the selected program and the time and date (month, day, hour, minute, and second) of the typical image of the selected program in the typical-image display portion 356.

The thumbnail (storyboard) display program 182 displays the typical images of the episodes of the selected program in the thumbnail display portion 353 in the chronological order of the configuration table. The thumbnail (storyboard) display program 182 highlights the typical image of the selected episode in the thumbnail display portion 353.

The additional-information display program 180 indicates the clip ID of the typical image of each episode and also indicates the length (duration) of each episode and the recording start time and date (month, day, hour, minute, and second) of the typical image of the episode in the thumbnail display portion 353.

The additional-information display program 357 displays general information, such as the English tide of the selected program, the title of the selected program in another language, and the comments of the program, in the additional-information display portion 357.

In this case, the typical image of the selected episode is displayed in the image display portion 722.

A description is now given of the operation of the structure window 312 when the characters or graphics indicating an episode in the configuration-table tree display portion 352 are selected.

The configuration-table tree display program 179 highlights the characters or graphics indicating the selected episode in the configuration-table tree display portion 352. The configuration-table tree display program 179 highlights the characters or graphics indicating a scene (for example, "Scene1" in Fig. 18) under the selected episode in the configuration-table tree display portion 352.

The typical-image setting display program 181 displays the typical image of the selected episode in the typical-image display portion 356. The typical-image setting display program 181 indicates the clip ID of the typical image of the selected episode and also indicates the length (duration) of the selected episode and the time and date (month, day, hour, minute, and second) of the typical image of the selected episode in the typical-image display portion 356.

The thumbnail (storyboard) display program 182 displays the typical images of the scenes of the selected episode in the thumbnail display portion 353 in the chronological order of the configuration table. The thumbnail (storyboard) display program 182 highlights the same typical image of the scene as the typical image of the episode in the thumbnail display portion 353.

The additional-information display program 180 indicates the clip ID of the typical image of each scene and also indicates the length (duration) of each scene and the recording start time and date (month, day, hour, minute, and second) of the typical image of the scene in the thumbnail display portion 353.

The additional-information display program 180 displays general information, such as the English title of the selected episode, the tide of the selected episode in another language, and the comments of the episode, in the additional-information display portion 357.

In this case, the typical image of the selected episode is displayed in the image display portion 722.

A description is now given of the operation of the structure window 312 when the characters or graphics indicating an episode in the configuration-table tree display portion 352 are selected and when a thumbnail in the thumbnail display portion 353 is selected (clicked).

The configuration-table tree display program 179 continues highlighting the characters or graphics indicating the selected episode in the configuration-table tree display portion 352. The configuration-table tree display program 179 continues highlighting the characters or graphics indicating a scene under the selected episode in the configuration-table tree display portion 352.

The typical-image setting display program 181 displays the typical image of the selected episode in the typical-image display portion 356. The typical-image setting display program 181 indicates the clip ID of the typical image of the selected episode and also indicates the length (duration) of the selected episode and the time and date (month, day, hour, minute, and second) of the typical image of the selected episode in the typical-image display portion 356.

The thumbnail (storyboard) display program 182 displays the typical images of the scenes of the selected episode in the thumbnail display portion 353 in the chronological order of the configuration table. The thumbnail (storyboard) display program 182 highlights the same typical image of the scene as that of the episode in the thumbnail display portion 353.

The additional-information display program 180 indicates the clip ID of the typical image of each scene and also indicates the length (duration) of each scene and the recording start time and date (month, day, hour, minute, and second) of the typical image of the scene in the thumbnail display portion 353.

The additional-information display program 357 displays general information, such as the English title of the selected episode, the title of the selected episode in another language, and the comments of the episode, in the additional-information display portion 357.

In this case, the typical image of the selected episode is displayed in the image display portion 722.

A description is now given of the operation of the structure window 312 when the characters or graphics indicating a scene in the configuration-table tree display portion 352 are selected.

The configuration-table tree display program 179 highlights the characters or graphics indicating the selected scene in the configuration-table tree display portion 352. The configuration-table tree display program 179 highlights the characters or graphics indicating a cut (for example, "Cut1" in Fig. 18) under the selected scene in the configuration-table tree display portion 352.

The typical-image setting display program 181 displays the typical image of the selected scene in the typical-image display portion 356. The typical-image setting display program 181 indicates the clip ID of the typical image of the selected scene and also indicates the length (duration) of the selected scene and the time and date (month, day, hour, minute, and second) of the typical image of the selected scene in the typical-image display portion 356.

The thumbnail (storyboard) display program 182 displays the typical images of the cuts of the selected scene in the thumbnail display portion 353 in the chronological order of the configuration table. The thumbnail (storyboard) display program 182 highlights the same typical image of the cut as the typical image of the scene in the thumbnail display portion 353.

The additional-information display program 180 indicates the clip ID of the typical image of each cut and also indicates the length (duration) of each cut and the recording start time and date (month, day, hour, minute, and second) of the typical image of the cut in the thumbnail display portion 353.

The additional-information display program 180 displays general information, such as the English title of the selected scene, the title of the selected scene in another language, and the comments of the scene, in the additional-information display portion 357.

In this case, the typical image of the selected scene is displayed in the image display portion 722.

A description is now given of the operation of the structure window 312 when the characters or graphics indicating a scene in the configuration-table tree display portion 352 are selected and when a thumbnail in the thumbnail display portion 353 is selected (clicked).

The configuration-table tree display program 179 continues highlighting the characters or graphics indicating the selected scene in the configuration-table tree display portion 352. The configuration-table tree display program 179 continues highlighting the characters or graphics indicating a cut under the selected scene in the configuration-table tree display portion 352.

The typical-image setting display program 181 displays the typical image of the selected scene in the typical-image display portion 356. The typical-image setting display program 181 indicates the clip ID of the typical image of the selected scene and also indicates the length (duration) of the selected scene and the time and date (month, day, hour, minute, and second) of the typical image of the selected scene in the typical-image display portion 356.

The thumbnail (storyboard) display program 182 displays the typical images of the cuts of the selected scene in the thumbnail display portion 353 in the chronological order of the configuration table. The thumbnail (storyboard) display program 182 highlights the typical image of the cut selected by clicking the thumbnail display portion 353 in the thumbnail display portion 353.

The additional-information display program 180 indicates the clip ID of the typical image of each cut and also indicates the length (duration) of each cut and the time and date (month, day, hour, minute, and second) of the typical image of the cut in the thumbnail display portion 353.

The additional-information display program 357 displays general information, such as the English title of the selected scene, the title of the selected scene in another language, and the comments of the scene, in the additional-information display portion 357.

In this case, the typical image of the selected scene is displayed in the image display portion 722.

A description is now given of the operation of the structure window 312 when the characters or graphics indicating a cut in the configuration-table tree display portion 352 are selected.

The configuration-table tree display program 179 highlights the characters or graphics indicating the selected cut in the configuration-table tree display portion 352. The configuration-table tree display program 179 highlights the characters or graphics indicating a take under the selected cut in the configuration-table tree display portion 352.

The typical-image setting display program 181 displays the typical image of the selected cut in the typical-image display portion 356. The typical-image setting display program 181 indicates the clip ID of the typical image of the selected cut and also indicates the length (duration) of the selected cut and the time and date (month, day, hour, minute, and second) of the typical image of the selected cut in the typical-image display portion 356.

The thumbnail (storyboard) display program 182 displays the typical images of the takes of the selected cut in the thumbnail display portion 353 in the chronological order of the configuration table. The thumbnail (storyboard) display program 182 highlights the same typical image of the take as the typical image of the cut in the thumbnail display portion 353.

The additional-information display program 180 indicates the clip ID of the typical image of each take and also indicates the length (duration) of each take and the time and date (month, day, hour, minute, and second) of the typical image of the take in the thumbnail display portion 353.

The additional-information display program 357 displays general information, such as the English title of the selected cut, the title of the selected cut in another language, and the comments of the cut, in the additional-information display portion 357.

In this case, the typical image of the selected cut is displayed in the image display portion 722.

A description is now given of the operation of the structure window 312 when the characters or graphics indicating a cut in the configuration-table tree display portion 352 are selected and when a thumbnail in the thumbnail display portion 353 is selected (clicked).

The configuration-table tree display program 179 continues highlighting the characters or graphics indicating the selected cut in the configuration-table tree display portion 352. The configuration-table tree display program 179 continues highlighting the characters or graphics indicating a take under the selected cut in the configuration-table tree display portion 352.

The typical-image setting display program 181 displays the typical image of the selected cut in the typical-image display portion 356. The typical-image setting display program 181 indicates the clip ID of the typical image of the selected cut and also indicates the length (duration) of the selected cut and the time and date (month, day, hour, minute, and second) of the typical image of the selected cut in the typical-image display portion 356.

The thumbnail (storyboard) display program 182 displays the typical images of the takes of the selected cut in the thumbnail display portion 353 in the chronological order of the configuration table. The thumbnail (storyboard) display program 182 highlights the typical image of the take selected by clicking the thumbnail display portion 353 in the thumbnail display portion 353. In this case, the take selected as described above is highlighted in a manner different from the take selected as a cut.

The additional-information display program 180 indicates the clip ID of the typical image of each take and also indicates the length (duration) of each take and the time and date (month, day, hour, minute, and second) of the typical image of the take in the thumbnail display portion 353.

The additional-information display program 357 displays general information, such as the English title of the selected cut, the title of the selected cut in another language, and the comments of the cut, in the additional-information display portion 357.

In this case, the typical image of the selected take is displayed in the image display portion 722.

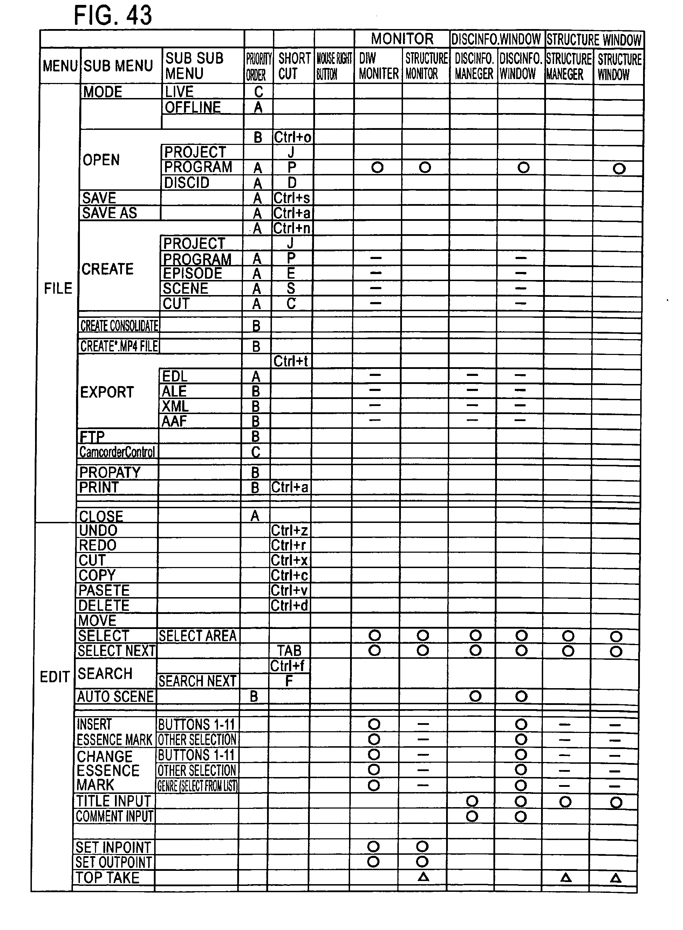

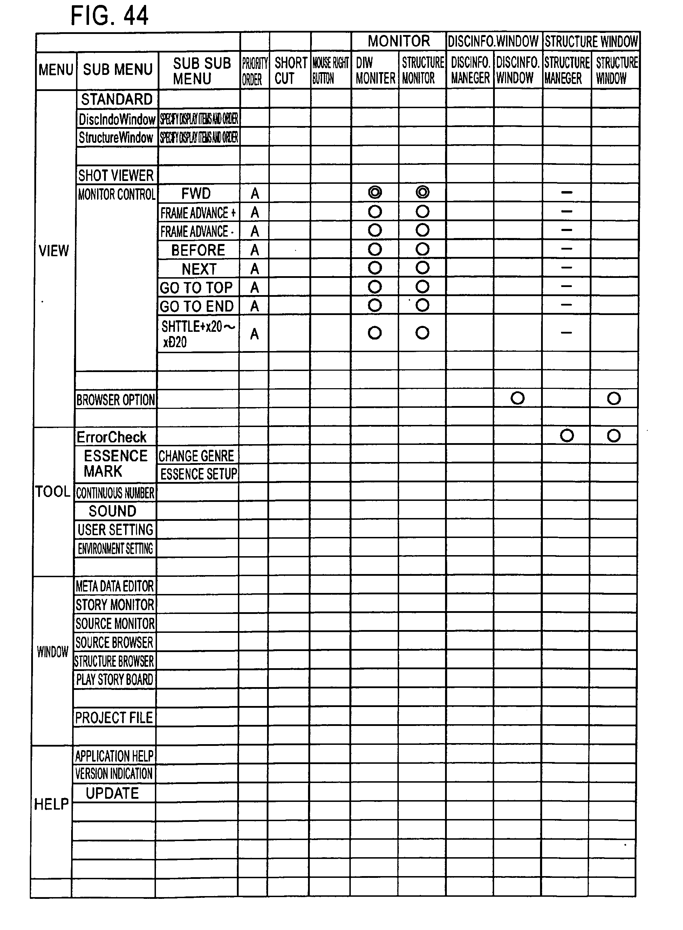

Figs. 43 and 44 illustrate menu commands.

A file menu includes mode, open, save, save as, create, create consolidate, create mp4 file, export, FTP, camcorder control, property, print, and close commands.

By executing the mode command, either mode, i.e., live or offline, is selected. By executing the open command, one of the project, program, and disc ID files is opened. By executing the create command, project, program, episode, scene, or cut is created. By executing the FTP command, data upload or download is performed.

An edit menu includes undo, redo, cut, copy, paste, delete, move, select, select next, search, auto scene, insert essence mark, change essence mark, title input, comment input, set in point, set out point, and top take commands. By executing the search command, metadata is searched. By executing the auto scene command, scene change is recognized to insert an essence mark indicating the scene change. By executing the top take command, a take to be used as a cut is set.

A view menu includes standard, disc information window, structure window, shot viewer, monitor control, and browser option commands. By executing the monitor control command, the playback operation, such as frame advance or frame fast-forward, is controlled.

A tool menu includes error check, essence mark, continuous number, sound, user setting, and environment setting commands. By executing the essence mark command, the genre can be changed or the settings of essence marks in the buttons can be changed.

A window menu includes metadata editor, story monitor, source monitor, source browser, structure browser, play storyboard, and project file commands.

A help menu includes application help, version indication, and update commands.

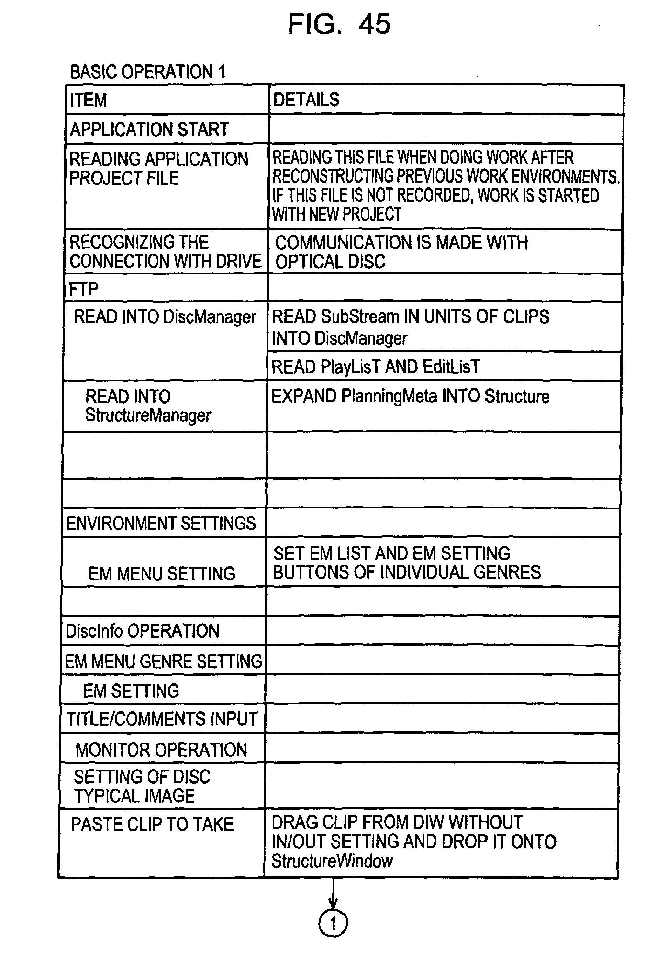

Figs. 45 through 48 illustrate the flow of the processing of the editing program 151.

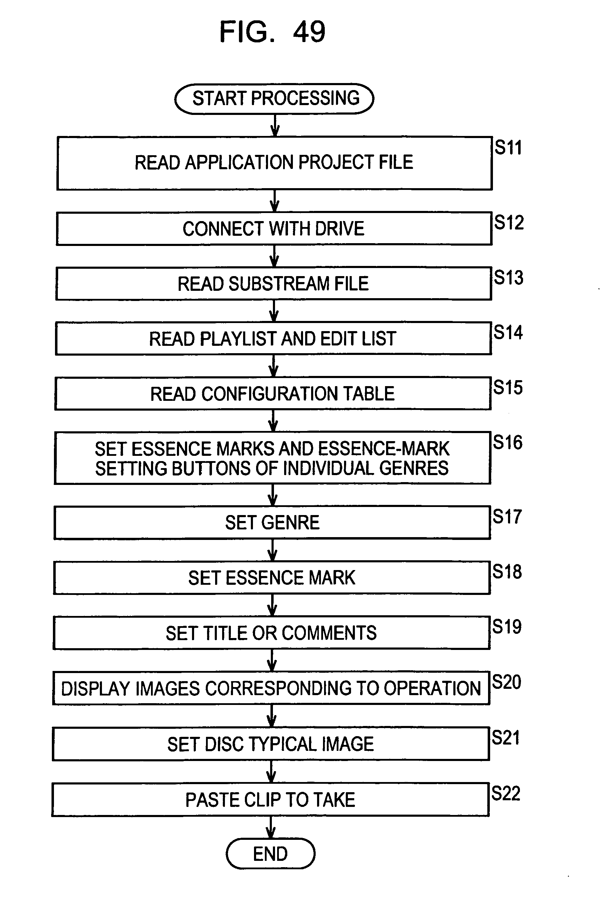

The processing of basic operation 1 shown in Figs. 45 through 48 is described below with reference to the flowchart of Fig. 49. In step S11, the editing program 151 reads an application project file recorded in the hard disk 114. If the application project file is not recorded in the hard disk 114, the editing program 151 creates a new application project file. In the application project file, data indicating the previous operation environments is stored, and the editing program 151 reconstructs the operation environments based on the application project file. That is, the same operation environment as the previous operation environments are set.

In step S12, the editing program 151 connects to the drive 120 so as to read or record the file from or on the optical disc 17 installed in the drive 120. In step S13, the disc information display program 162 (disc manager) reads a substream file (low-resolution video file (for example, C0001S01.MXF in Fig. 6)) from the optical disc 17 in units of clips.

In step S14, the editing program 151 reads a playlist and an edit list from the optical disc 17. The playlist and edit list are part of the program metadata file shown in Fig. 5.

In step S15, the configuration-table setting display program 163 reads the configuration table from the optical disc 17. That is, the configuration-table setting display program 163 reads the program metadata 191 and the dip metadata 192 from the optical disc 17. In step S16, the disc video monitor program 161 sets essence marks and the essence-mark setting buttons 398 of the individual genres based on the application project file. More specifically, the disc video monitor program 161 determines essence marks, which are set by clicking the essence-mark setting button 398, according to the genre. More precisely, the disc video monitor program 161 sets text to be displayed in the essence-mark setting button 398 when the genre is selected, and essence marks, which are text to be set by clicking the essence-mark setting button 398.

In step S17, the disc video monitor program 161 sets the genre of essence marks to be added to images based on the operation on the combo box 394. In step S18, the disc video monitor program 161 sets an essence mark to an image based on the essence-mark setting button 398 and the combo box 399.

In step S19, the title setting program 174 sets the tide in an image based on the input into the text box 601, and also sets comments in the image based on the input into the text box 602. In step S20, the video display program 172 displays an image according to the operation on the monitor window 313.

In step S21, the configuration-table setting display program 163 sets typical images of the disc. In step S22, the disc video monitor program 161 pastes a clip to a take based on the operation on the combo box 394, and the process is completed.

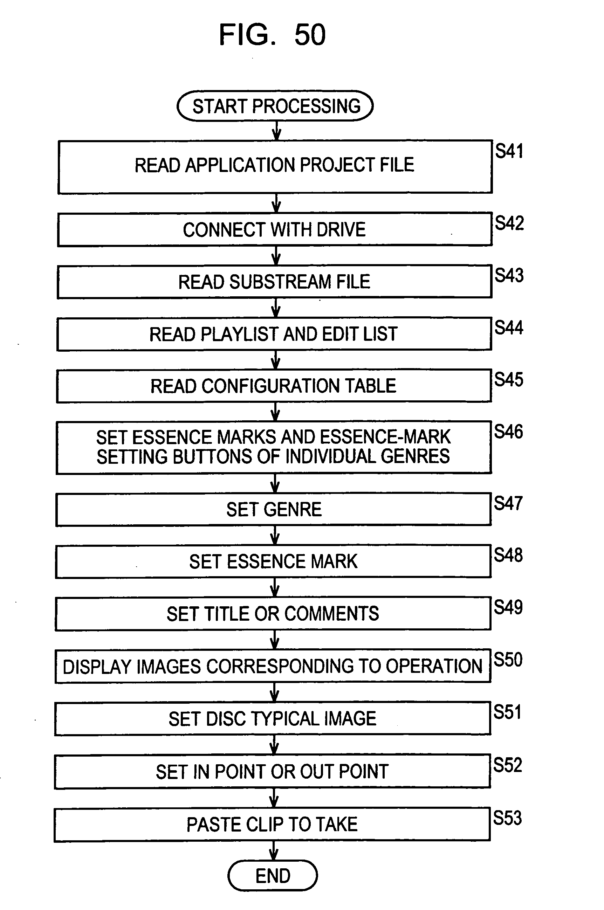

The processing of basic operation 2 shown in Figs. 45 through 48 is discussed below with reference to the flowchart of Fig. 50. Steps S41 through S51 are similar to steps S11 through S21, respectively, shown in Fig. 49, and an explanation thereof is thus omitted.

In step S52, the video editing program 173 sets the editing start position (In point) and the editing end position (Out point) of a take based on the operation on the entry-in button 390, the entry-out button 392, the In-point marker 411, or the Out-point marker 412. In step S53, the configuration-table setting display program 163 sets typical images of the disc. In step S22, the disc video monitor program 161 pastes a clip to the take based on the operation on the combo box 394, and the process is completed.

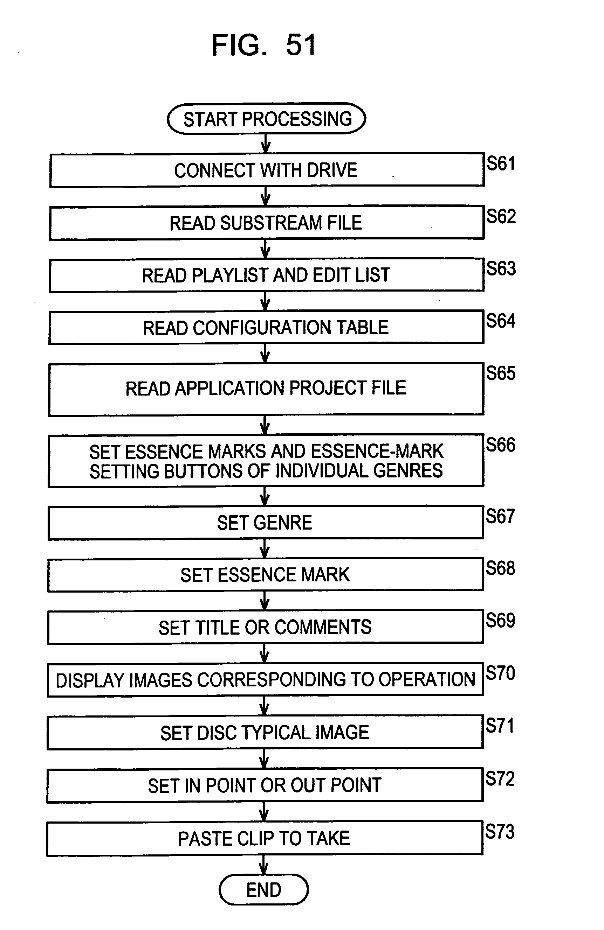

The processing of basic operation 3 shown in Figs. 45 through 48 is discussed below with reference to the flowchart of Fig. 51. Steps S61 through S64 are similar to steps S12 through S15, respectively, in Fig. 49, and an explanation thereof is thus omitted.

In step S65, the editing program 151 reads an application project file recorded on the optical disc 17. When the application project file is not recorded on the optical disc 17, the editing program 151 creates a new application project file. The editing program 151 sets the same operation environments as the previous operation environments based on the application project file.

Steps S66 through S73 are similar to steps S46 through S53, respectively, in Fig. 50, and an explanation thereof is thus omitted.

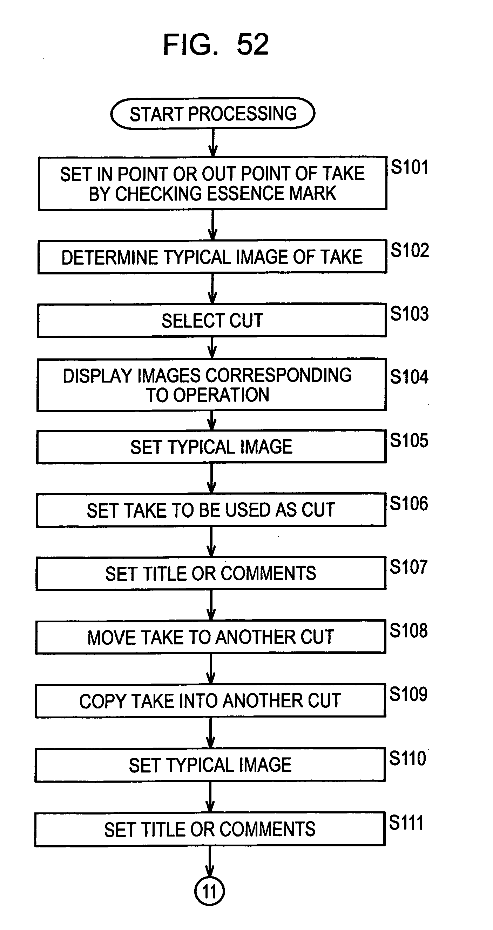

The processing of the structure operation shown in Figs. 45 through 48 is described below with reference to the flowcharts of Figs. 52 through 54.

In step S101, the video editing program 173 sets the editing start position or editing end position by checking an essence mark based on the operation by the user. That is, the essence-mark display program 171 indicates the essence marker 376 or 377, and the user clicks the entry-in button 390 or the entry-out button 392 by referring to the essence marker 376 or 377. The video editing program 173 sets the editing start position or the editing end position in the take based on the position of the image at which the entry-in button 390 or the entry-out button 392 is clicked.

In step S102, the typical-image setting display program 188 of the configuration-table video monitor program 164 determines the typical image of the take. That is, when the entry button 748 is clicked, the typical-image setting display program 188 of the configuration-table video monitor program 164 determines the typical image of the take based on the position of the image. Alternatively, the typical-image setting display program 181 may determine the typical image of the take when the button 355 is clicked.

In step S103, the configuration-table tree display program 179 selects the cut based on the operation on the configuration-table tree display portion 352. In step S104, the video display program 172 displays the image of the cut in, for example, the image display portion 372, according to the operation by the user. In step S105, the typical-image setting display program 188 of the configuration-table video monitor program 164 determines the typical image. That is, when the entry button 748 is clicked, the typical-image setting display program 188 of the configuration-table video monitor program 164 determines the typical image based on the position of the image. Alternatively, the typical-image setting display program 181 may determine the typical image when the button 355 is clicked.

In step S106, the disc video monitor program 161 or the configuration-table setting display program 163 sets the take to be used as a cut based on the operation on the combo box 394 or the combo box 744. In step S107, the title setting program 174 or the additional-information display program 180 sets the title or comments in the take.

In step S108, the configuration-table setting display program 163 moves the take to another cut if necessary according to the operation by the user. The configuration-table setting display program 163 may move the take to another scene or episode if necessary according to the operation by the user. In step S109, the configuration-table setting display program 163 may further perform processing on the take, such as copying the take.

In step S110, the typical-image setting display program 181 of the configuration-table setting display program 163 selects the typical image of the cut by selecting the take. That is, when the take is selected, the typical image of the selected take is set as the typical image of the cut. In step S111, the configuration-table setting display program 163 sets the title or comments in the cut by selecting the take. That is, when the take is selected, the title or comments of the selected take is set as the title or comments of the cut.

In step S112, the configuration-table tree display program 179 selects the scene based on the operation on the configuration-table tree display portion 352. In step S113, the video display program 172 displays the image of the scene in, for example, the image display portion 372, according to the operation by the user.

In step S114, the configuration-table tree display program 179 changes the order of cuts based on the operation on the configuration-table tree display portion 352. In step S115, the typical-image setting display program 188 of the configuration-table video monitor program 164 determines the typical image. That is, when the entry button 748 is clicked, the typical-image setting display program 188 of the configuration-table video monitor program 164 determines the typical image based on the position of the image. Alternatively, the typical-image setting display program 181 may determine the typical image when the button 355 is clicked.

In step S116, the title setting program 174 or the additional-information display program 180 sets the title or comments in the scene.

In step S117, the configuration-table setting display program 163 moves the cut to another scene if necessary according to the operation by the user. The configuration-table setting display program 163 may move the cut to another episode if necessary according to the operation by the user. In step S118, the configuration-table setting display program 163 may further perform processing on the take, such as copying the take.

In step S119, the configuration-table setting display program 163 selects the typical image of the scene by selecting the cut. That is, the typical image of the selected cut is set as the typical image of the scene. In step S120, the configuration-table setting display program 163 sets the title or comments in the scene by selecting the cut. That is, the title or comments of the selected cut is set as the title or comments of the scene.

In step S121, the configuration-table tree display program 179 selects the episode based on the operation on the configuration-table tree display portion 352. In step S122, the video display program 172 displays the image of the episode in, for example, the image display portion 372 according to the operation by the user.

In step S123, the typical-image setting display program 188 of the configuration-table video monitor program 164 determines the typical image. That is, when the entry button 748 is clicked, the typical-image setting display program 188 of the configuration-table video monitor program 164 determines the typical image based on the position of the image. Alternatively, the typical-image setting display program 181 may determine the typical image when the button 355 is clicked.

In step S124, the title setting program 174 or the additional-information display program 180 sets the title or comments in the episode.

In step S125, the configuration-table tree display program 179 selects the program based on the operation on the configuration-table tree display portion 352. In step S126, the video display program 172 displays the image of the program in, for example, the image display portion 372 according to the operation by the user.

In step S127, the typical-image setting display program 188 of the configuration-table video monitor program 164 determines the typical image. That is, when the entry button 748 is clicked, the typical-image setting display program 188 of the configuration-table video monitor program 164 determines the typical image based on the position of the image. Alternatively, the typical-image setting display program 181 may determine the typical image when the button 355 is clicked.

In step S128, the title setting program 174 or the additional-information display program 180 sets the title or comments in the program.

In step S129, the editing program 151 records an application project file storing data indicating the operation environments in the hard disk 114. In step S130, the editing program 151 records the selected program in the hard disk 114. In step S131, the editing program 151 outputs the selected program to the disc information display program 162 as a playlist. In step S132, the editing program 151 outputs the selected program to the disc information display program 162 as an edit list.

In step S133, the editing program 151 records the disc information file (DISCINFO.XML), the disc metadata file (DISKMETA.XML), the playlist, the edit list, and the program metadata 191 on the optical disc 17, and the process is completed.

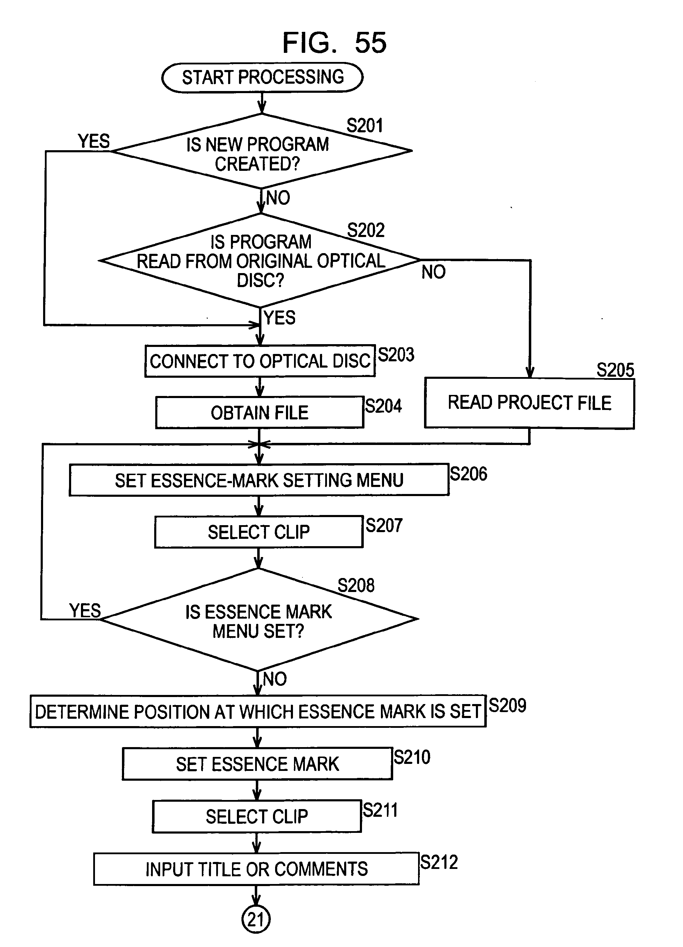

Figs. 55 through 58 are flowcharts illustrating another processing of the editing program 151, which is now being executed. In step S201, the editing program 151 determines whether a new program is to be created. If it is determined that a new program is not created, the process proceeds to step S202 to determine whether the program is to be read from the original optical disc 17. If it is determined in step S202 that the program is read from the original optical disc 17, the process proceeds to step S203.

If it is determined in step S201 that a new program is to be created, the process proceeds to step S203.

In step S203, the editing program 151 connects to the optical disc 17. More specifically, the editing program 151 connects to the drive 120 and reads or records the file from or on the optical disc 17 attached to the drive 120.

In step S204, the editing program 151 reads and obtains the necessary file from the optical disc 17, and the process proceeds to step S206.

If it is determined in step S202 that the program is not read from the original optical disc 17, the process proceeds to step S205. In step S205, the editing program 151 reads a project file from the hard disk 114, and the process proceeds to step S206.

Alternatively, after reading and obtaining the necessary file from the optical disc 17 in step S204, the editing program 151 may proceed to step S205 to read the project file from the hard disk 114.

In step S206, the disc video monitor program 161 sets essence marks and essence-mark setting buttons 398 of the individual genres based on the application project file. In step S207, the disc information display program 162 selects a dip according to the operation by the user.

The reason for setting the essence marks and the essence-mark setting buttons 398 of the individual genres before selecting a clip is that the genre is frequently changed in units of clips.

The editing program 151 may proceed to step S207 after reading the project file from the hard disk 114 in step S205.

In step S208, the disc video monitor program 161 determines based on the operation by the user whether an essence mark menu is to be set. If it is determined that an essence mark menu is to be set, the process returns to step S206 and the processing is repeated. If it is determined in step S208 that an essence-mark menu is not set, the process proceeds to step S209 in which the video display program 172 determines the position at which an essence mark is set based on the operation by the user.

In step S210, the essence-mark input program 175 sets an essence mark, which is digital mark data indicating the features of images or sound, in the clip metadata based on the operation by the user.

In step S211, the disc information display program 162 selects a clip based on the operation by the user. In step S212, the title setting program 174 sets a title in the image based on the input into the text box 601, and sets comments in the image based on the input into the text box 602.

In step S213, the disc information display program 162 selects a clip based on the operation by the user. In step S214, the video editing program 173 sets the editing start position or the editing end position of the clip based on the position of the image at which the entry-in button 390 or the entry-out button 392 is clicked.

The processing of step S214 may be skipped, in which case, the clip is used for a cut as a take without setting the editing start position or the editing end position.

In step S215, the editing program 151 sets the settings of the clip in the configuration table (program metadata). In step S216, the disc information display program 162 selects a disc based on the operation by the user. In step S217, the editing program 151 sets the typical image of the disc.

In step S218, the title setting program 174 sets the text input into the text box 601 as the title of the selected disc. The title setting program 174 sets the text input into the text box 602 as the comments of the selected disc.

In step S219, the disc information display program 162 selects the root based on the operation on the configuration-table tree display portion 352. In step S220, the disc information display program 162 displays the disc number in the configuration-table tree display portion 352.

In step S221, the disc information display program 162 changes the disc based on the operation on the configuration-table tree display portion 352.

In this manner, steps S207 through S221 are performed based on the operations on the disc information window 311 and the monitor window 313.

In step S222, the configuration-table setting display program 163 selects a take based on the operation on the configuration-table tree display portion 352. In step S223, the video editing program 173 sets the editing start position or the editing end position of the take based on the position of the image at which the entry-in button 390 or the entry-out button 392 is clicked.

In step S224, the typical-image setting display program 188 of the configuration-table video monitor program 164 sets the typical image of the take based on the position of the image at which the entry button 748 is clicked. In step S225, the configuration-table setting display program 163 selects a cut based on the operation on the configuration-table tree display portion 352. In step S226, the video editing program 173 sets the editing start position or the editing end position of the cut based on the position of the image at which the entry-in button 390 or the entry-out button 392 is clicked.

In step S227, the typical-image setting display program 188 of the configuration-table video monitor program 164 sets the typical image of the cut based on the position of the image at which the entry button 748 is clicked. In step S228, the configuration-table video monitor program 164 determines a take to be used as a cut based on the operation on the combo box 744. In step S229, the additional-information display program 180 sets the title or comments input into the additional-information display portion 357 in the cut.

In step S230, the configuration-table setting display program 163 selects a scene based on the operation on the configuration-table tree display portion 352. In step S231, the configuration-table setting display program 163 determines the order of cuts in the scene based on the operation on the configuration-table tree display portion 352. In step S232, the typical-image setting display program 188 of the configuration-table video monitor program 164 sets the typical image of the scene based on the position of the image at which the entry button 748 is clicked. In step S233, the additional-information display program 180 sets the title or comments input into the additional-information display portion 357.

In step S234, the configuration-table setting display program 163 selects an episode based on the operation on the configuration-table tree display portion 352. In step S235, the configuration-table setting display program 163 determines the order of the scenes in the episode based on the operation on the configuration-table tree display portion 352. In step S236, the typical-image setting display program 188 of the configuration-table video monitor program 164 sets the typical image of the episode based on the position of the image at which the entry button 748 is clicked. In step S237, the additional-information display program 180 sets the title or comments input into the additional-information display portion 357 in the episode.

In step S238, the configuration-table setting display program 163 selects a program based on the operation on the configuration-table tree display portion 352. In step S239, the configuration-table setting display program 163 determines the order of the episodes in the program based on the operation on the configuration-table tree display portion 352. In step S240, the typical-image setting display program 188 of the configuration-table video monitor program 164 sets the typical image of the program based on the position of the image at which the entry button 748 is clicked. In step S241, the additional-information display program 180 sets the title or comments input into the additional-information display portion 357 in the program.

In step S242, the configuration-table setting display program 163 selects the root based on the operation on the configuration-table tree display portion 352. In step S243, the configuration-table video monitor program 164 displays the content of the program in the image display portion 722 based on the operation on the monitor window 701.

In step S244, the configuration-table setting display program 163 changes the program based on the operation on the configuration-table tree display portion 352.

As described above, steps S222 through S244 are performed based on the operations on the structure window 312 and the monitor window 701.

In step S245, the editing program 151 records the application project file storing data indicating the operation environments in the hard disk 114. In step S246, the editing program 151 exports (outputs) a predetermined file based on the operation by the user. In step S247, the editing program 151 records the disc information file (DISQNFO.XML), the disc metadata file (DISKMETA.XML), the playlist, the edit list, and the program metadata 191 on the original optical disc 17 according to the FTP procedures. The process is then completed.

If an optical disc different from the original optical disc 17 is installed in the drive 120, the editing program 151 displays a message requesting the operator to install the original optical disc 17.

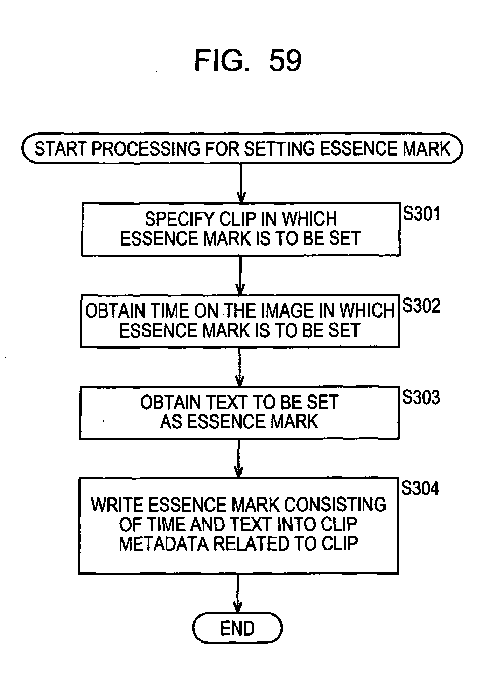

Fig. 59 is a flowchart illustrating the processing for setting an essence mark by the disc video monitor program 161.

In step S301, the disc video monitor program 161 specifies a clip in which an essence mark is to be set. For example, the disc video monitor program 161 sets a clip corresponding to the image displayed by the video display program 172 as a clip in which an essence mark is to be set. For example, the disc video monitor program 161 sets a clip selected by the disc information display program 162 as a clip in which an essence mark is to be set.

In step S302, the disc video monitor program 161 obtains the time on the image of the clip in which an essence mark is to be set. For example, the disc video monitor program 162 sets the time on the image displayed in the video display portion 372 by the video display program 172 as the time on the image of the clip in which an essence mark is to be set.

In step S303, the essence-mark input program 175 of the disc video monitor program 161 obtains text to be set as an essence mark. For example, the essence-mark input program 175 of the disc video monitor program 161 obtains text set in the clicked essence-mark setting button 398 as the text to be set as an essence mark. For example, the essence-mark input program 175 of the disc video monitor program 161 obtains the text corresponding to the menu selected by the operation on the combo box 399 as the text to be set as an essence mark.

In step S304, the disc video monitor program 161 writes the time obtained in step S302 and the essence mark as the text obtained in step S303 into the clip metadata 192 related to the clip, and the process is completed.

As discussed above, the editing program 151 can simply and speedily set in a desired image an essence mark indicating a feature of the image.

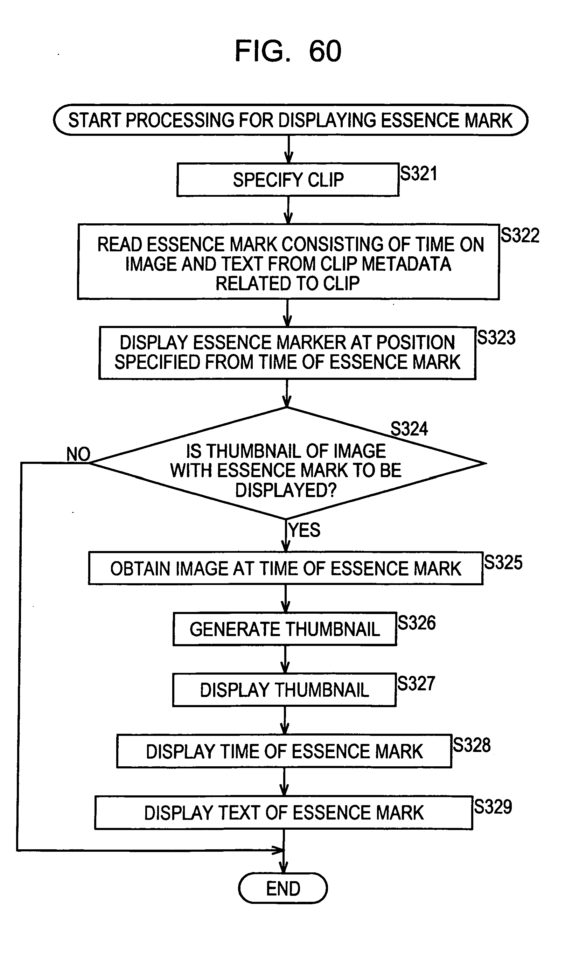

Fig. 60 is a flowchart illustrating the processing for displaying an essence mark by the editing program 151.

In step S321, the editing program 151 specifies a clip in which an essence mark to be displayed is set. For example, the video display program 172 of the editing program 151 sets a clip corresponding to the displayed image as a clip provided with an essence mark to be displayed. For example, the video display program 172 of the editing program 151 sets the clip belonging to the disc selected by the disc information tree display program 176 as the clip provided with an essence mark is to be displayed. For example, the thumbnail/list display program 177 sets the clip selected by the disc information tree display program 176 as the clip provided with an essence mark to be displayed.

In step S322, the editing program 151 reads the essence mark consisting of the time on the image and text from the clip metadata 192 related to the clip specified in step S321.

In step S323, the essence-mark display program 171 of the editing program 151 displays the essence marker 376 at a position specified from the time of the essence mark read in step S322.

In step S324, the thumbnail/list display program 177 of the editing program 151 determines whether the thumbnail of an image with an essence mark is to be displayed based on the selection of the root, disc, or clip by the disc information tree display program 176. If it is determined that the thumbnail of an image with an essence mark is to be displayed, the process proceeds to step S325 in which the thumbnail/list display program 177 obtains the image at the time of the essence mark. In step S326, the thumbnail/list display program 177 creates a thumbnail based on the image obtained in step S325. In step S327, the thumbnail/list display program 177 displays the thumbnail created in step S326 in the thumbnail display portion 334.

In steps S325 through S327, a thumbnail is created and displayed. However, the thumbnail/list display program 177 may specify a prerecorded thumbnail from the time of the essence mark and displays the specified thumbnail.

In step S328, the additional-information display program 178 displays the time of the essence mark obtained in step S322 in the thumbnail display portion 334. In step S329, the additional-information display program 178 displays the text of the essence mark obtained in step S322 in the thumbnail display portion 334, and the process is then completed.

The additional-information display program 178 may prestore data indicating the correlation between the text and colors, and displays the thumbnail display portion 334 in a color corresponding to the text of an essence mark.

As described above, the editing program 151 can display the time on the image in which an essence mark is set or display the thumbnail of an image provided with an essence mark according to the essence mark. The editing program 151 can also display text indicating the feature of an image provided with an essence mark and the time on the image in which an essence mark is set.

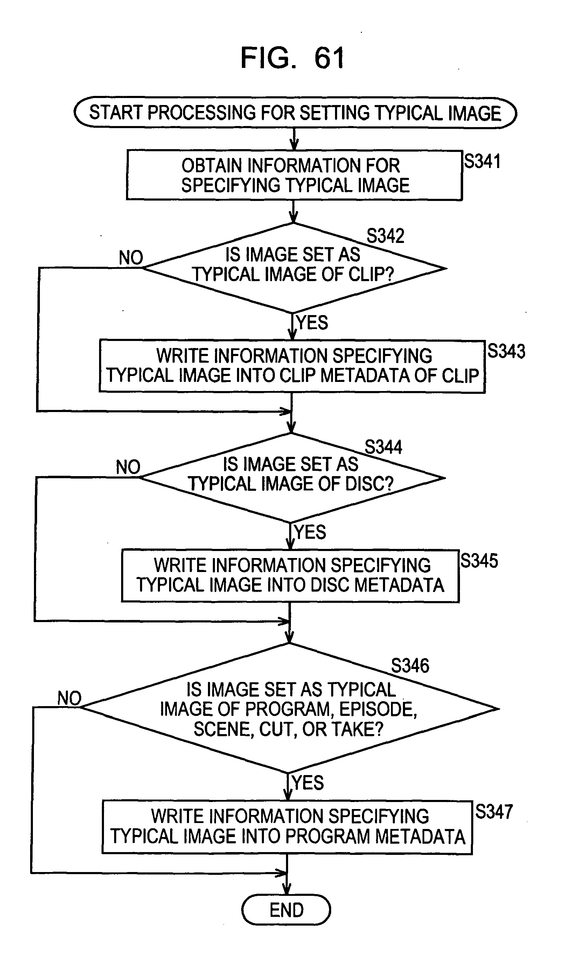

Fig. 61 is a flowchart illustrating the processing for setting a typical image by the editing program 151.

In step S341, the editing program 151 obtains information specifying a typical image. For example, when a command for setting a typical image is executed from a menu, or when the button 355 is clicked, or when a thumbnail in the thumbnail display portion 353 is dragged and dropped onto the typical image display portion 356, the editing program 151 obtains information specifying the selected image or the dragged and dropped image. The information specifying the image includes, for example, information specifying the time on the image of the clip, information specifying the key frame, or the information specifying the typical image of a lower layer.

In step S342, the editing program 151 determines whether the image is set as the typical image of the clip based on the thumbnail selected by the thumbnail/list display program 177 of the disc information display program 162. If it is determined that the image is set as the typical image of the clip, the process proceeds to step S343 in which the editing program 151 writes the information specifying the typical image into the clip metadata 192 of the clip. For example, when the thumbnail of the key frame displayed in the thumbnail display portion 334 is selected and when a command for setting the thumbnail as the typical image is executed, the editing program 151 determines that the image is set as the typical image of the dip.

If it is determined in step S342 that the image is not set as the typical image of the clip, step S343 is skipped, and the process proceeds to step S344.

In step S344, the editing program 151 determines whether the image is set as the typical image of the disc based on the thumbnail selected by the thumbnail/list display program 177 of the disc information display program 162. If it is determined that the image is set as the typical image of the disc, the process proceeds to step S345 in which the editing program 151 writes the information specifying the typical image into disc metadata (for example, data read from the disc metadata file shown in Fig. 4 or written into the disc metadata file). For example, the editing program 151 determines that the image is set as the typical image of the disc when the typical image of the clip displayed in the thumbnail display portion 334 is selected and when the command for setting the image as the typical image is executed.

If it is determined in step S344 that the image is not set as the typical image of the disc, step S345 is skipped, and the process proceeds to step S346.

In step S346, the editing program 151 determines whether the image is set as the typical image of a program, episode, scene, cut, or take based on the selection of the thumbnail displayed by the thumbnail display program 187 of the configuration-table setting display program 163. If it is determined that the image is set as the typical image of a program, episode, scene, cut, or take, the process proceeds to step S347. In step S347, the editing program 151 writes the information specifying the typical image into the program metadata 191, and the process is then completed. For example, the editing program 151 determines that the image is set as the typical image of an episode when the typical image of a scene displayed in the thumbnail display portion 353 is dragged and dropped onto the typical image display portion 356.

If it is determined in step S346 that the image is not set as the typical image of a program, episode, scene, cut, or take, step S347 is skipped, and the process is completed.

As described above, the editing program 151 can set a typical image.

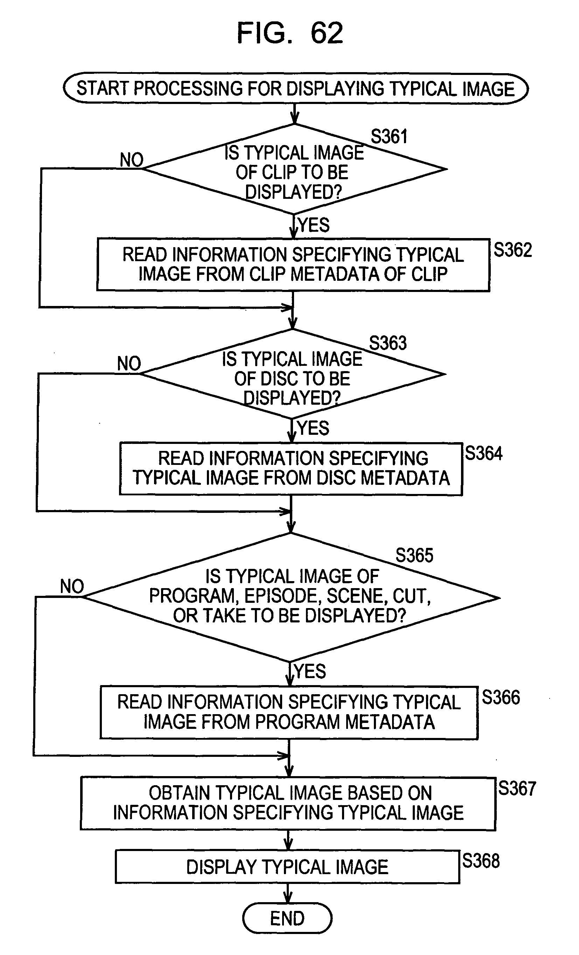

Fig. 62 is a flowchart illustrating the processing for displaying a typical image by the editing program 151.

In step S361, the editing program 151 determines whether the typical image of a clip is to be displayed based on the operation on the tree display portion 332 or the thumbnail display portion 334. If it is determined that the typical image of the clip is to be displayed, the process proceeds to step S362 in which information specifying the typical image is read from the clip metadata 192 of the clip.

If it is determined in step S361 that the typical image of the clip is not displayed, step S362 is skipped.

In step S363, the editing program 151 determines whether the typical image of a disc is to be displayed based on the operation on the tree display portion 332 or the thumbnail display portion 334. If it is determined that the typical image of the disc is to be displayed, the process proceeds to step S364 in which information specifying the typical image is read from the disc metadata.

If it is determined in step S363 that the typical image of the disc is not displayed, step S364 is skipped.

In step S365, the editing program 151 determines whether the typical image of a program, episode, scene, cut, or take is to be displayed based on the operation on the configuration-table tree display portion 352. If it is determined that the typical image of the program, episode, scene, cut, or take is to be displayed, the process proceeds to step S366 in which information specifying the typical image is read from the program metadata 191.

If it is determined in step S365 that the typical image of the program, episode, scene, cut, or take is not displayed, step S366 is skipped.

In step S367, the editing program 151 obtains the typical image based on information specifying the typical image read in step S362, S364, or S366. In step S368, the editing program 151 displays the typical image, and the process is then completed. For example, the thumbnail/list display program 177 of the editing program 151 displays the typical image in the thumbnail display portion 334. For example, the thumbnail (storyboard) display program 182 of the editing program 151 displays the typical image in the thumbnail display portion 333. For example, the typical-image setting display program 181 of the editing program 151 displays the typical image in the typical-image display portion 356.

In this manner, the editing program 151 can display a typical image.

As described above, by displaying the image of a clip and by setting a desired time as the editing start position or the editing end position, the image can be edited.

Digital mark data indicating the feature of an image is set in metadata related to video content data for displaying images. Then, based on the video content data, the display of images is controlled, and based on the metadata in which the digital mark data is set, at least one of the temporal position of the image having the feature indicated by the digital mark data and the feature of the image is controlled. Accordingly, the images including desired features can be speedily edited.

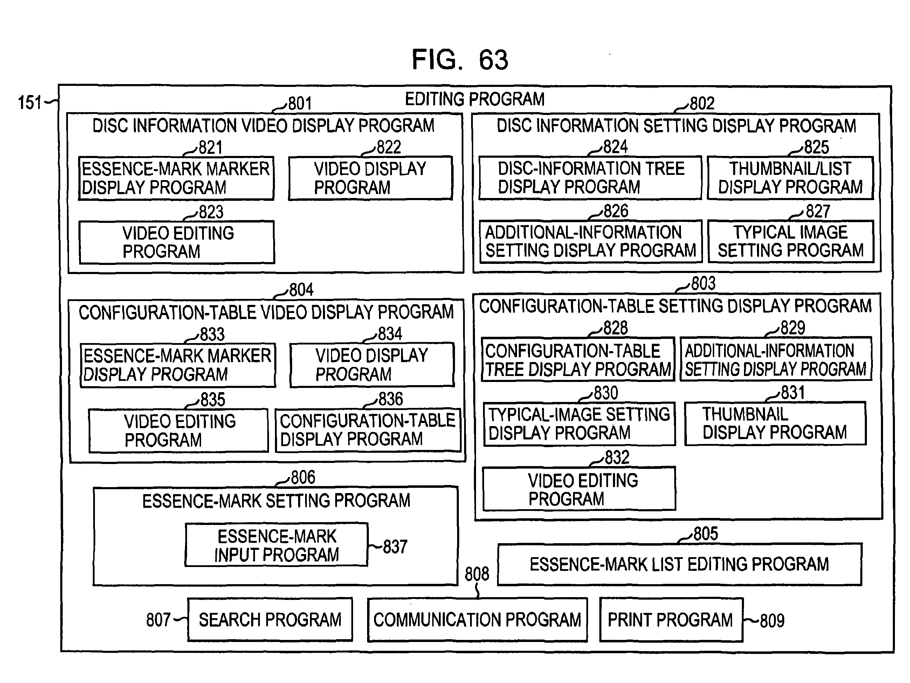

Another configuration of the editing program 151 for performing the rough editing operation by the field PC 15 is described below. Fig. 63 is a block diagram illustrating another example of the configuration of the editing program 151.

The editing program 151 shown in Fig. 63 includes a disc information video display program 801, a disc information setting display program 802, a configuration-table setting display program 803, a configuration-table video display program 804, an essence-mark list editing program 805, an essence-mark setting program 806, a search program 807, a communication program 808, and a print program 809.

The disc information video display program 801 is a program for displaying and editing images based on video content data recorded on the optical disc 17. The disc information video display program 801 displays an image indicating the time at which an essence mark is set based on clip metadata. The disc information video display program 801 includes an essence-mark marker display program 821, a video display program 801, an essence-mark marker display program 821, a video display program 822, and a video editing program 823.

The essence-mark marker display program 821 displays markers (for example, the essence markers 376 and 377 shown in Fig. 19), which are images indicating the time in which essence marks are set, based on the clip metadata in which essence marks, i.e., digital mark data indicating the features of images or sound, are set. The video display program 822 controls the display of images based on the video content data.

The video editing program 823 is a program for editing the video content data.

The disc information setting display program 802 is a program for setting information concerning the optical disc 17 or information concerning the video content data recorded on the optical disc 17 and for displaying the set information. The disc information setting display program 802 includes a disc information tree display program 824, a thumbnail/list display program 825, an additional-information setting display program 826, and a typical-image setting program 827.

The disc information tree display program 824 is a program for controlling information related to the optical disc 17 or information (including essence marks) related to the video content data read from the optical disc 17 to be displayed in a tree structure. The thumbnail/list display program 825 controls the display of thumbnails or a list corresponding to the video content data.

The additional-information setting display program 826 sets additional information, which is information related to the optical disc 17, in the optical disc 17, and controls the display of the additional information set in the optical disc 17. The additional-information setting display program 826 also sets additional information, which is information related to the video content data recorded on the optical disc 17, in the clip metadata, and controls the display of the additional information, which is information related to the video content data, set in the clip metadata. The typical-image setting program 827 is a program for setting the typical image in the optical disc 17.

The configuration-table setting display program 803 is a program for displaying and editing information concerning program metadata read from the optical disc 17. The configuration-table setting display program 803 includes a configuration-table tree display program 828, an additional-information setting display program 829, a typical-image setting display program 830, a thumbnail display program 831, and a video editing program 832.

The configuration-table tree display program 828 is a program for controlling the configuration table to be displayed in a tree structure based on the program metadata. The additional-information setting display program 829 sets additional information in the program metadata and controlling the display of the additional information set in the program metadata. The typical-image setting display program 830 is a program for setting the typical image of a take, cut, scene, episode, or a program (video program) and for controlling the display of the typical image.

The thumbnail display program 831 controls the display of the thumbnail of a typical image of a take, cut, scene, episode, or program. The video editing program 832 is a program for editing the video content data.

The configuration-table video display program 804 displays and edits images based on the video content data recorded on the optical disc 17, and also displays images indicating the time at which essence marks are set based on the clip metadata. The configuration-table video display program 804 also displays the configuration table based on the configuration table metadata, and sets the typical images of a clip, disc, cut, scene, episode, and a program.

The configuration-table video display program 804 includes an essence-mark marker display program 833, a video display program 834, a video editing program 835, a configuration-table display program 836.

The essence-mark marker display program 833 displays markers (for example, the essence markers 376 and 377 shown in Fig. 19), which are images indicating the time at which essence marks are set, based on the clip metadata in which essence marks, i.e., digital mark data indicating the features of the images or sound, are set. The video display program 834 controls the display of images based on the video content data. The video editing program 835 is a program for editing the video content data. The configuration-table display program 836 is a program for controlling the display of the configuration table based on the configuration table metadata.

The essence-mark list editing program 805 is a program for editing essence marks (or list of the essence marks) based on the clip metadata.

The essence-mark setting program 806 is a program for setting essence marks in the clip metadata. An essence-mark input program 837 is a program for displaying, for example, the text box 397, the essence-mark setting buttons 398-1 through 398-15, and the essence-mark setting combo box 399 shown in Fig. 19, and for inputting essence marks to be set in the clip metadata.

The search program 807 is a program for conducting keyword search from the metadata, which is the source for displaying the disc information and the configuration table, and for jumping from the search result to the operation screen.

The communication program 808 obtains disc information, metadata, or configuration table from an optical-disc drive or a server, and rewrites the disc information, metadata, or configuration table into the optical-disc drive or the server.

The print program 809 prints selection windows for the disc information setting display, the configuration table setting display, detailed properties, and essence-mark editing information on a printer.

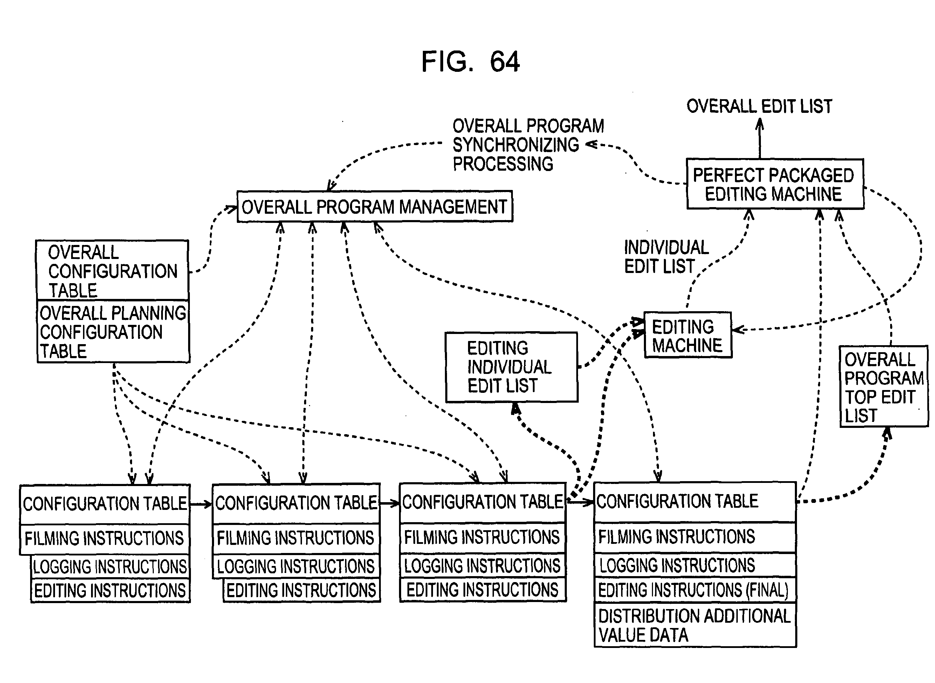

A description is now given of, with reference to Figs. 64 through 66, the handling of the configuration table, filming instructions, and data concerning the editing operations in the production of video programs.

First, the planning section forms the overall configuration table indicating a scenario created by planning or concerning a video program to be produced, and also forms the overall planning configuration table for giving instructions about production works to the other sections, such as the filming section and the editing section.

The planning section stores the content of the overall configuration table in the overall program management (data) for managing a series of video programs (one or a plurality of video programs, for example, a so-called "drama series video programs). For example, in the overall program management data, data indicating the episode and higher layers (program layer and episode layer) of the overall configuration table is stored.

A configuration table (configuration table metadata) for giving instructions about the content of the production works to the individual filming sections is formed from the overall planning configuration table and the overall program management data. Additionally, filming instructions (data) for instructing the specific production works are generated in association with the configuration table.

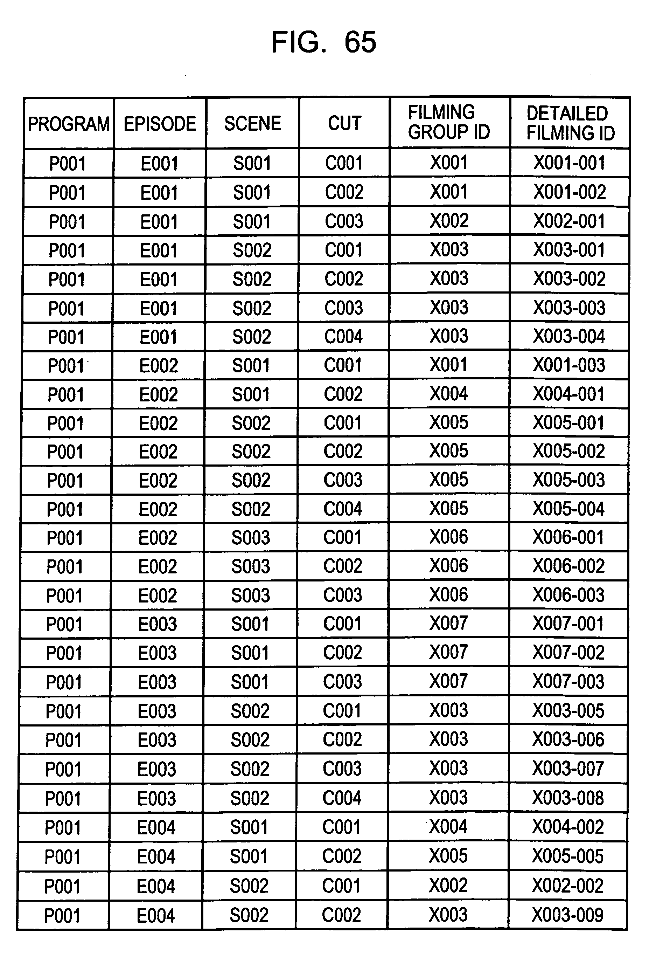

Fig. 65 illustrates an example of filming instruction data generated in association with the configuration table. In the filming instruction data, the filming group ID for specifying the filming group and the detailed filming ID for specifying the filming work are disposed in association with a combination of the program ID, the episode ID, the scene ID, and the cut ID.

The program ID is data for specifying the video program. The episode ID is data for specifying the episode in the video program. The scene ID is data for specifying the scene in the episode. The cut ID is data for specifying the cut in the scene.

The filming group is a set of one or a plurality of filming works. For example, the filming group consists of filming works having the same filming place, filming works having the same filming date, filming works having the same filming place and the same filming date.

In the example shown in Fig. 65, the program ID, the episode ID, the scene ID, the cut ID, the filming group ID, and the detailed filming ID in a line are data related to the video content data concerning one cut.

For example, in the filming instruction data shown in Fig. 65, the filming group ID "X001" and the detailed filming ID "X001-001" are disposed in association with a combination of the program ID "P001", the episode ID "E001", the scene ID "S001", and the cut ID "C001".

That is, the filming group specified by the filming group ID "X001" and the filming specified by the detailed filming ID "X001-001" are associated with the cut specified by "P001", "E001", "S001", and "C001". In other words, the filming group specified by the filming group ID "X001" and the filming specified by the detailed filming ID "X001-001" are associated with the cut specified by the cut ID "C001" in the scene specified by the scene ID "S001" in the episode specified by the episode ID "E001" in the program specified by the program ID "P001".

Similarly, in the filming instruction data shown in Fig. 65, the filming group ID "X001" and the detailed filming ID "X001-002" are disposed in association with a combination of the program ID "P001", the episode ID "E001", the scene ID "S001", and the cut ID "C002".

Also, in the filming instruction data shown in Fig. 65, the filming group ID "X005" and the detailed filming ID "X005-001" are disposed in association with a combination of the program ID "P001", the episode ID "E002", the scene ID "S002", and the cut ID "C001". That is, the filming group specified by the filming group ID "X005" and the filming specified by the detailed filming ID "X005-001" are associated with the cut specified by "P001", "E002", "S002", and "C001".

Due to the situation of the filming, i.e., for planning or executing the filming, the filming instruction data is rearranged. As stated above, in the filming instruction data shown in Fig. 65, the program ID, the episode ID, the scene ID, the cut ID, the filming group ID, and the detailed filming ID in a line are data of the video content data concerning one cut. Accordingly, the data is rearranged for each line (horizontally).

Then, data, such as data indicating the filming place or data indicating the filming date, is added to the filming instruction data. The data indicating the filming place and the data indicating the filming date are data indicating the filming schedules or filming results.

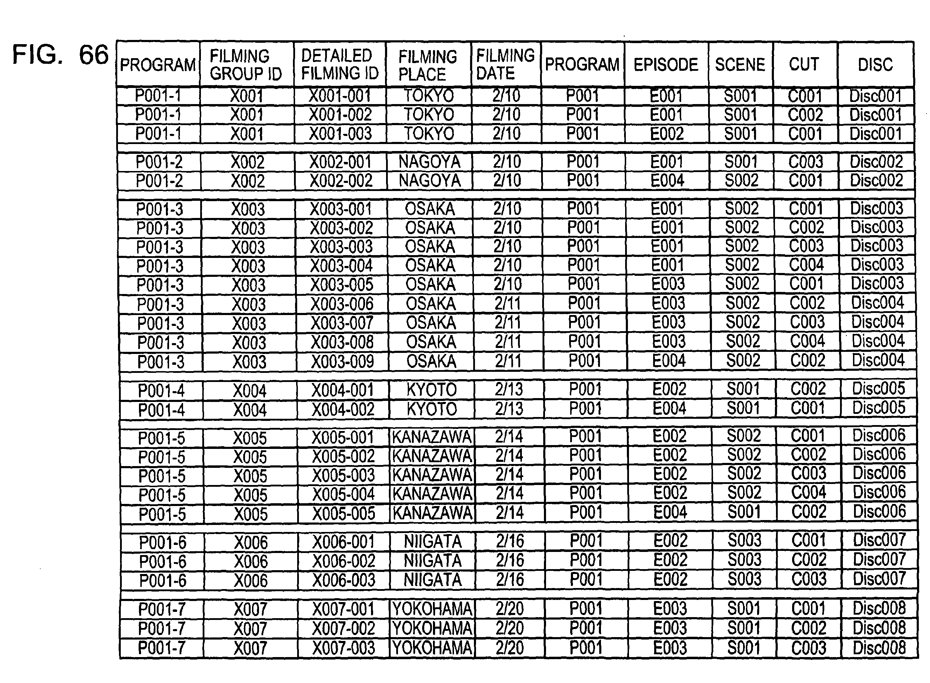

Fig. 66 illustrates an example of the filming instruction data rearranged due to the situation of the filming. The filming instruction data shown in Fig. 66 is rearranged based on the filming group ID and the detailed filming ID.

In the filming instruction data shown in Fig. 66, in addition to the filming group ID and the detailed filming ID in association with a combination of the program ID, the episode ID, the scene ID, and the cut ID, filming place data indicating the place where filming is conducted, filming date data indicating the date at which filming is conducted, and the disc ID for specifying the optical disc 17 in which the video content data obtained by filming is recorded are disposed. In the filming instruction data, the program ID (hereinafter referred to as the "filming program ID") for grouping one or a plurality of video content data obtained by one filming group may be provided.

For example, the filming instruction data shown in Fig. 66 is rearranged so that the data in the first through third lines are associated with the filming group ID "X001" and the detailed filming IDs "X001-001" through "X001-003". Also, the filming instruction data shown in Fig. 66 is rearranged so that the data in the fourth and fifth lines are associated with the filming group ID "X002" and the detailed filming IDs "X002-001" through "X002-002".

Further, the filming instruction data shown in Fig. 66 is rearranged so that the data in the sixth through fourteenth lines are associated with the filming group ID "X003" and the detailed filming IDs "X003-001" through "X003-009".

For example, to the data in the first through third lines of the filming instruction data shown in Fig. 66, data indicating that the filming place is Tokyo, data indicating that the filming date is February 10, and the disc ID "Disc001" are added. To the data in the first through third lines of the filming instruction data shown in Fig. 66, the filming program ID "P001-1" is added.

To the data in the fourth and fifth lines of the filming instruction data shown in Fig. 66, data indicating that the filming place is Nagoya, data indicating that the filming date is February 10, and the disc ID "Disc002" are added. To the data in the fourth and fifth lines of the filming instruction data shown in Fig. 66, the filming program ID "P001-2" is added.

To the data in the sixth through tenth lines of the filming instruction data shown in Fig. 66, data indicating that the filming place is Osaka, data indicating that the filming date is February 10, and the disc ID "Disc003" are added.

To the data in the eleventh through fourteenth lines of the filming instruction data shown in Fig. 66, data indicating that the filming place is Osaka, data indicating that the filming date is February 11, and the disc ID "Disc004" are added.

To the data in the sixth through fourteenth lines of the filming instruction data shown in Fig. 66, the filming program ID "P001-3" is added.

As discussed above, the filming instruction data is rearranged for filming, and the filming place data or filming date data indicating the schedules or results in the filming section are added.

Referring back to Fig. 64, the filming place data or filming date data added to the filming instruction data is reflected in the overall program management data.

Then, rough editing instructions (data) (logging instructions (data)) are generated from the overall planning configuration table and the overall program management data. Based on the rough editing instruction data, rough editing is performed on the video content data obtained by filming, and the resulting data is reflected in the overall program management data.

Then, editing instructions (data) corresponding to the individual portions of the video program are generated from the overall planning configuration table and the overall program management data. Based on the editing instruction data corresponding to the individual portions of the video program, the video content data is edited, and an edit list (editing individual edit list) indicating the playback order of the video data and the audio data reflecting the editing results are generated.

The editing individual edit list is supplied, together with the video content data, to an editing machine in the editing section. The editing machine edits the video program to generate an individual edit list reflecting the editing results, and supplies the generated individual edit list to a perfect packaged editing machine for performing editing to produce a final video program.

Further, editing instructions (data) for the overall video program are generated from the overall planning configuration table and the overall program management data. Based on the editing instruction data corresponding to the overall video program, the video content data is edited to generate an overall program top edit list indicating the overall editing results.

In editing the overall video program, distribution value-added data is generated. The distribution value-added data is, for example, data added by the editing operation, such as an essence mark, a title, or comments added during the editing operation.

Data indicating the editing results including the edit list (overall program top edit list) is reflected in the overall program management data.

The overall program top edit list is supplied, together with the distribution value-added data and the video content data, to the perfect packaged editing machine in the editing section.

The perfect packaged editing machine perform complicated editing on the video program based on the individual edit list, the overall program top edit list, and the video content data.

In this case, the individual edit list and the video content data may be returned to the editing machine to re-perform editing on the individual portions of the video program.

After completing the editing, the perfect packaged editing machine generates an overall edit list and outputs it. The editing content in the perfect packaged editing machine is reflected in the overall program management data as the overall program synchronizing processing.

As discussed above, a video program is produced, and a configuration table, filming instructions, and data concerning the editing operations are used in each stage of the process of producing the video program. Accordingly, the video program can be more speedily produced.

When the user wishes to use (reuse) materials for producing one video program as the materials for producing another video program, desired materials can be quickly searched.

The above-described series of processing may be executed by hardware or software. If software is used, a software computer program is installed from a recording medium into a computer built into dedicated hardware or a computer, for example, a general-purpose computer that can execute various functions by installing various computer programs.

This recording medium may be formed of, as shown in Fig. 2, a package medium including the magnetic disk 131 (including a flexible disk), the optical disc 132 (including CD-ROM (Compact Disc - Read Only Memory), DVD (Digital Versatile Disc)), the magneto-optical disk 133 (including MD (Mini-Disc) (trademark)), or the semiconductor memory 134 in which the computer program is recorded, which is distributed, separately from the computer, for providing the computer program to the user. The recording medium may be formed of the ROM 112 or the hard disk 114 recording the computer program therein, which is provided to the user while being built into the computer.

The computer program executing the above-described series of processing may be installed into the computer through a wired or wireless communication medium, such as a local area network, the Internet, or digital satellite broadcasting, via an interface (communication unit 119), such as a router or a modem, if necessary.

In this specification, the steps forming the computer program stored in the recording medium may be executed in chronological order described in the specification. However, they may be executed concurrently or individually.

In this specification, the system represents the overall apparatus consisting of a plurality of devices.

### Industrial Applicability

As described above, according to the present invention, images can be edited.

According to the present invention, editing is speedily performed to produce images containing desired features.

## Claims

1. A video-image editing apparatus comprising:
mark setting means for setting, in metadata related to video content data for displaying an image including sound, digital mark data indicating a feature of the image;
video display control means for controlling the display of the image based on the video content data; and
digital-mark display control means for controlling the display of at least one of a temporal position of the image having the feature indicated by the digital mark data and the feature of the image based on the metadata in which the digital mark data is set.

2. The video-image editing apparatus according to claim 1, further comprising configuration-table display control means for controlling the display of a configuration table based on configuration table data related to the video content data.

3. A video-image editing method comprising:
a mark setting step of setting, in metadata related to video content data for displaying an image including sound, digital mark data indicating a feature of the image;
a video display control step of controlling the display of the image based on the video content data; and
a digital-mark display control step of controlling the display of at least one of a temporal position of the image having the feature indicated by the digital mark data and the feature of the image based on the metadata in which the digital mark data is set.

4. A recording medium in which a program for allowing a computer to execute video-image editing processing is recorded, the program comprising:
a mark setting step of setting, in metadata related to video content data for displaying an image including sound, digital mark data indicating a feature of the image;
a video display control step of controlling the display of the image based on the video content data; and
a digital-mark display control step of controlling the display of at least one of a temporal position of the image having the feature indicated by the digital mark data and the feature of the image based on the metadata in which the digital mark data is set.

5. A program for allowing a computer to execute:
a mark setting step of setting, in metadata related to video content data for displaying an image including sound, digital mark data indicating a feature of the image;
a video display control step of controlling the display of the image based on the video content data; and
a digital-mark display control step of controlling the display of at least one of a temporal position of the image having the feature indicated by the digital mark data and the feature of the image based on the metadata in which the digital mark data is set.
